(19) **Europäisches Patentamt**
**European Patent Office**
**Office européen des brevets**

(11) **EP 1 656 509 B1**

(12) **EUROPÄISCHE PATENTSCHRIFT**

(45) Veröffentlichungstag und Bekanntmachung des Hinweises auf die Patenterteilung:
**31.10.2007 Patentblatt 2007/44**

(21) Anmeldenummer: **04736174.6**

(22) Anmeldetag: **05.06.2004**

(51) Int Cl.:
*F16D 3/224* *(2006.01)* *F16D 3/223* *(2006.01)*

(86) Internationale Anmeldenummer:
**PCT/EP2004/006088**

(87) Internationale Veröffentlichungsnummer:
**WO 2005/028895 (31.03.2005 Gazette 2005/13)**

(54) **GEGENBAHNGELENK FÜR GROSSE BEUGEWINKEL**

COUNTER TRACK JOINT FOR LARGE DEFLECTION ANGLES

CONTRE-JOINT A GORGES POUR GRANDS ANGLES DE FLEXION

(84) Benannte Vertragsstaaten:
**AT BE BG CH CY CZ DE DK EE ES FI FR GB GR HU IE IT LI LU MC NL PL PT RO SE SI SK TR**

(30) Priorität: **22.08.2003 DE 10338719**
**19.04.2004 DE 102004018777**

(43) Veröffentlichungstag der Anmeldung:
**17.05.2006 Patentblatt 2006/20**

(73) Patentinhaber: **GKN Driveline Deutschland GmbH**
**63073 Offenbach/Main 1 (DE)**

(72) Erfinder:
• **SCHWÄRZLER, Peter**
**63864 Glattbach (DE)**
• **HARNISCHFEGER, Heiko**
**36399 Freiensteinau-Weidenau (DE)**

(74) Vertreter: **Neumann, Ernst Dieter et al**
**Neumann Müller Oberwalleney & Partner**
**Patentanwälte**
**Brandstrasse 10**
**53721 Siegburg (DE)**

(56) Entgegenhaltungen:
**WO-A-01/61203** **DE-A- 10 060 220**
**FR-A- 2 799 519** **US-A- 5 122 096**
**US-B1- 6 319 133**

• **PATENT ABSTRACTS OF JAPAN Bd. 1996, Nr. 04, 30. April 1996 (1996-04-30) & JP 7 317791 A (TOYODA MACH WORKS LTD), 8. Dezember 1995 (1995-12-08)**

**Beschreibung**

Die Erfindung betrifft ein Gleichlaufgelenk in Form eines Gegenbahngelenkes mit den Merkmalen:

ein Gelenkaußenteil, das eine Längsachse L12 und axial zueinander entgegengesetzt liegend eine Anschlußseite und eine Öffnungsseite hat und das äußere Kugelbahnen aufweist,
ein Gelenkinnenteil, das eine Längsachse L13 und Anschlußmittel für eine zur Öffnungsseite des Gelenkaußenteils weisende Welle hat und das innere Kugelbahnen aufweist,
die äußeren Kugelbahnen und die inneren Kugelbahnen bilden Bahnpaare miteinander,
die Bahnpaare nehmen jeweils eine drehmomentübertragende Kugel auf,
ein ringförmiger Kugelkäfig sitzt zwischen Gelenkaußenteil und Gelenkinnenteil und weist umfangsverteilte Käfigfenster auf, die jeweils zumindest eine der drehmomentübertragenden Kugeln aufnehmen,
die Mittelpunkte der Kugeln werden vom Käfig in einer Gelenkmittelebene EM gehalten und bei Gelenkbeugung auf die winkelhalbierende Ebene zwischen den Längsachsen L12, L13 geführt,
für einen ersten Teil der Bahnpaare öffnet sich der Öffnungswinkel $\alpha_1$ zwischen Tangenten $T22_1'$, $T23_1'$ an Bahngrundlinien, die parallel zu Tangenten $T22_1$, $T23_1$ an die Mittellinien $M22_1$, $M23_1$ der Kugelbahnen in der Gelenkmittelebene EM bei gestrecktem Gelenk mit zusammenfallenden Längsachsen L12, L13 verlaufen, von der Anschlußseite zur Öffnungsseite, für einen zweiten Teil der Bahnpaare öffnet sich der Öffnungswinkel $\alpha_2$ zwischen Tangenten $T22_2'$, $T23_2'$ an Bahngrundlinien, die parallel zu Tangenten $T22_2$, $T23_2$ an die Mittellinien der Kugelbahnen in der Gelenkmittelebene bei gestrecktem Gelenk mit zusammenfallenden Längsachsen L12, L13 verlaufen, von der Öffnungsseite zur Anschlußseite. Die Mittellinien von Bahnpaaren sind bezüglich der Gelenkmittelebene EM im wesentlichen spiegelbildlich zueinander.

Gegenbahngelenke bekannter Ausführung haben eine gerade Anzahl von Bahnpaaren. Die erste Hälfte dieser Bahnpaare öffnet sich zu Öffnungsseite des Gelenkaußenteils hin. Die andere Hälfte dieser Bahnpaare öffnet sich zur Anschlußseite des Gelenkaußenteils hin. Die Bahnpaare der ersten und zweiten Art sind in Umfangsrichtung betrachtet abwechselnd angeordnet. Dabei sind die Bahnen auf Meridianebenen R angeordnet, die in Umfangsrichtung gleichmäßige Teilungswinkel 360°/n aufweisen, wobei n die Zahl der Bahnpaare darstellt, z. B. 6, 8, 10.

Die alternierenden Bahnpaare sind dabei so gekrümmt, daß sie in der Gelenkmittelebene EM Tangentenwinkel $\alpha_1$, $\alpha_2$ an die Bahngrundlinien haben, die dem Betrag nach gleich groß sind, jedoch unterschiedliche Orientierung haben, und die Bahnverläufe der alternierenden Bahnpaare sind bezüglich der Gelenkmittelebene gespiegelt.

Bekannte Gegenbahngelenke erlauben nur relativ kleine Beugewinkel bis 35°. Dies ist bedingt durch die sich zur Anschlußseite des Gelenkaußenteils öffnenden, d. h. zur Öffnungsseite hin schließenden Bahnpaare, die für die notwendige Montierbarkeit des Käfigs in das Gelenkaußenteil in Richtung zur Öffnungsseite hin nur relativ kurz ausgeführt sein können.

Aus der DE 100 60 220 A1 sind Gegenbahngelenke der eingangs genannten Art bekannt, bei denen für die zweiten Bahnpaare verschiedene Bahnformen angegeben sind, die auch Bahnmittellinien mit einem etwa S-förmigen Verlauf mit einem Wendepunkt im Gelenkaußenteil und im Gelenkinnenteil einschließen. Als Bahnmittellinien sind die Wege der Mittelpunkte der Kugeln in den Kugelbahnen definiert. Hierbei gilt für die Mittellinien der zweiten Bahnpaare folgendes:

im Gelenkaußenteil wandert die Mittellinie der Kugelbahnen im Bereich von der Gelenkmittelebene EM bis zur Öffnungsseite hin über einen Bezugsradius RB, dessen Radiusmittelpunkt MB im Schnittpunkt einer Senkrechten auf der Tangenten an die Mittellinie der Kugelbahn in der Gelenkmittelebene EM und der Längsachse L12 liegt, radial nach außen hinaus und
im Gelenkinnenteil wandert die Mittellinie der Kugelbahnen im Bereich von der Gelenkmittelebene EM bis zur Anschlußseite hin über einen Bezugsradius RB', dessen Radiusmittelpunkt MB' im Schnittpunkt einer senkrechten auf der Tangenten an die Mittellinie der Kugelbahn in der Gelenkmittelebene EM und der Längsachse L13 liegt, radial nach außen hinaus.

Aus der US 5,122,096 A ist gängiges Gleichlauffestgelenk bekannt, an dem eine Mehrzahl von Bahnpaaren untereinander gleich ausgebildet ist, wobei sich der Öffnungswinkel zwischen Tangenten an Bahngrundlinien, die parallel zu den Tangenten an die Mittellinien der Kugelbahnen in der Gelenkmittelebene bei gestrecktem Gelenk von der Anschlußseite des Gelenkaußenteils zur Öffnungsseite hin öffnet.

Aus der WO 01/61203 A2 ist ein Gleichlauffestgelenk mit den vorstehend genannten Merkmalen bekannt, bei dem Bahnmittelebenen der einzelnen Bahnen mit Radialebenen durch die Längsachsen über dem Umfang abwechselnd angetragene Kreuzungswinkel bilden.

Der vorliegenden Erfindung liegt die Aufgabe zugrunde, Gegenbahngelenke der eingangs genannten Art mit erhöhten Beugewinkeln bereitzustellen.

Eine erste Lösung liegt in einem Gleichlaufgelenk in Form eines Gegenbahngelenkes mit den Merkmalen:

ein Gelenkaußenteil, das eine Längsachse L12 und axial zueinander entgegengesetzt liegend eine Anschlußseite und eine Öffnungsseite hat und das äußere Kugelbahnen aufweist,
ein Gelenkinnenteil, das eine Längsachse L13 und Anschlußmittel für eine zur Öffnungsseite des Gelenkaußenteils weisende Welle hat und das innere Kugelbahnen aufweist,
die äußeren Kugelbahnen und die inneren Kugelbahnen bilden Bahnpaare miteinander,
die Bahnpaare nehmen jeweils eine drehmomentübertragende Kugel auf,
ein ringförmiger Kugelkäfig sitzt zwischen Gelenkaußenteil und Gelenkinnenteil und weist umfangsverteilte Käfigfenster auf, die jeweils zumindest eine der drehmomentübertragenden Kugeln aufnehmen,
die Mittelpunkte der Kugeln werden vom Käfig in einer Gelenkmittelebene gehalten und bei Gelenkbeugung auf die winkelhalbierende Ebene zwischen den Längsachsen geführt,
die Mittellinien M22, M23 der Kugelbahnen von Bahnpaaren liegen in Radialebenen R durch das Gelenk,
für einen ersten Teil der Bahnpaare öffnet sich der Öffnungswinkel $\alpha_1$ zwischen Tangenten $T22_1'$, $T23_1'$ an Bahngrundlinien, die parallel zu den Tangenten $T22_1$, $T23_1$ an die Mittellinien $M22_1$, $M23_1$ der Kugelbahnen in der Gelenkmittelebene EM bei gestrecktem Gelenk mit zusammenfallenden Längsachsen L12, L13 verlaufen, von der Anschlußseite zur Öffnungsseite,
für einen zweiten Teil der Bahnpaare öffnet sich der Öffnungswinkel $\alpha_2$ zwischen Tangenten $T22_2$, $T23_2'$ an Bahngrundlinien, die parallel zu den Tangenten $T22_2$, $T23_2$ an die Mittellinien $M22_2$, $M23_2$ der Kugelbahnen in der Gelenkmittelebene EM bei gestrecktem Gelenk mit zusammenfallenden Längsachsen L12, L13 verlaufen, von der Öffnungsseite zur Anschlußseite, hierbei gilt für die Mittellinien der zweiten Bahnpaare:

im Gelenkaußenteil verläßt die Mittellinie $M22_2$ der Kugelbahnen im Bereich von der Gelenkmittelebene EM bis zur Anschlußseite hin jeweils einen Bezugsradius RB, dessen Radiusmittelpunkt MB im Schnittpunkt einer Senkrechten auf der Tangenten $T22_2$ an die Mittellinie $M22_2$ der Kugelbahn in der Gelenkmittelebene EM und der Längsachse L12 liegt, radial nach innen,
im Gelenkinnenteil verläßt die Mittellinie $M23_2$ der Kugelbahnen im Bereich von der Gelenkmittelebene EM bis zur Öffnungsseite hin jeweils einen Bezugsradius RB', dessen Radiusmittelpunkt MB' im Schnittpunkt einer Senkrechten auf der Tangenten $T23_2$ an die Mittellinie $M23_2$ der Kugelbahn in der Gelenkmittelebne EM und der Längsachse L13 liegt, radial nach innen,
im Gelenkaußenteil wandert die Mittellinie $M22_2$ der Kugelbahnen im Bereich von der Gelenkmittelebene EM bis zur Öffnungsseite hin über den genannten Bezugsradius RB radial nach außen hinaus und
im Gelenkinnenteil wandert die Mittellinie $M23_2$ der Kugelbahnen im Bereich von der Gelenkmittelebene EM bis zur Anschlußseite hin über den genannten Bezugsradius RB' radial nach außen hinaus.

Mit der hiermit angegebenen Bahnform ist eine Vergrößerung des maximalen Beugewinkels im Vergleich mit bekannten Bahnformen möglich. Das erstgenannte Merkmal, nach dem die Mittellinien die Bezugsradien nach innen verlassen, kann unmittelbar an der Gelenkmittelebene beginnen oder auch später einsetzen, wobei es sich dabei insbesondere progressiv zunehmend verhalten kann. Das als zweites genannte Merkmal, nach dem die Mittellinien über den Bezugsradius nach außen wandern, schließt ein unmittelbares Abwandern vom Bezugsradius nach außen ebenso ein wie ein erst späteres Kreuzen des Bezugsradius und nachfolgendes Abwandern nach außen.

Nach einer bevorzugten Weiterbildung ist das Gleichlaufgelenk mit den weiteren Merkmalen der zweiten Bahnpaare versehen:

im Gelenkaußenteil ist der örtliche Radius R1 der Mittellinie $M22_2$ in der Gelenkmittelebene EM kleiner als der Bezugsradius RB,
im Gelenkinnenteil ist der örtliche Radius R1' der Mittellinie $M23_2$ in der Gelenkmittelebene EM kleiner als der Bezugsradius RB'.

Nach einer bevorzugten Weiterbildung ist das Gleichlaufgelenk mit den weiteren Merkmalen der zweiten Bahnpaare versehen:

im Gelenkaußenteil verläuft die Mittellinie $M22_2$ der Kugelbahnen von der Gelenkmittelebene EM zur Anschlußseite hin jeweils radial außerhalb eines Bezugsradius RZ, dessen Radiusmittelpunkt im Gelenkmittelpunkt M liegt, und
im Gelenkinnenteil verläuft die Mittellinie $M23_2$ der Kugelbahnen von der Gelenkmittelebene EM zur Öffnungsseite hin jeweils radial außerhalb eines Bezugsradius RZ', dessen Radiusmittelpunkt im Gelenkmittelpunkt M liegt.

Eine weitere vorteilhafte Ausführung liegt in den weiteren Merkmalen der zweiten Bahnpaare:

im Gelenkaußenteil verläuft die Mittellinie $M22_2$ der Kugelbahnen von der Gelenkmittelebene EM zur Öffnungsseite hin jeweils radial außerhalb des Bezugsradius RB und

im Gelenkinnenteil verläuft die Mittellinie $M23_2$ der Kugelbahnen von der Gelenkmittelebene EM zur Anschlußseite hin jeweils radial außerhalb des Bezugsradius RB'.

In weiterer Ausgestaltung werden die folgenden weiteren Merkmale vorgeschlagen :

im Gelenkaußenteil verläuft die Mittellinie $M22_2$ der Kugelbahnen von der Gelenkmittelebene EM zur Öffnungsseite hin jeweils radial innerhalb eines Bezugsradius RZ um den Gelenkmittelpunkt M und

im Gelenkinnenteil verläuft die Mittellinie $M23_2$ der Kugelbahnen von der Gelenkmittelebene EM zur Anschlußseite hin jeweils radial innerhalb eines Bezugsradius RZ' um den Gelenkmittelpunkt M.

Nach einer weiteren Ausgestaltung werden die weiteren Merkmale der zweiten Bahnpaare vorgeschlagen:

die Mittellinien $M22_2$, $M23_2$ der äußeren Kugelbahnen und inneren Kugelbahnen umfassen jeweils zumindest zwei entgegengesetzt gekrümmte Bogenabschnitte, die in einem Wendepunkt aneinander anschließen,

die Wendepunkte $W22_2$ der äußeren Kugelbahnen liegen mit Abstand von der Mittelebene EM zur Öffnungsseite,

die Wendepunkte $W23_2$ der inneren Kugelbahnen liegen mit Abstand von der Mittelebene EM zur Anschlußseite,

die Wendepunkte $W22_2$, $W23_2$ liegen jeweils unterhalb eines Maximums des Abstands der Mittellinien $M22_2$, $M23_2$ von den Längsachsen L12, L13.

Ein konkretes Ausgestaltungsbeispiel weist die Merkmale der zweiten Bahnpaare auf:

die Bahnmittellinien $M22_2$ der äußeren Kugelbahnen haben einen ersten Bogen mit dem Radius R1, dessen Mittelpunkt M1 um einen ersten axialen Offset O1a von der Mittelebene EM des Gelenks zur Anschlußseite hin versetzt liegt und um einen ersten radialen Offset O1r von der Längsachse L12 nach außen zur Kugelbahn hin versetzt liegt und anschließend an diesen Bogen zur Anschlußseite hin einen zweiten Bogen mit dem Radius R2, dessen Mittelpunkt M2 um einen zweiten axialen Offset O2a von der Mittelebene EM des Gelenks zur Öffnungsseite hin versetzt liegt und um einen zweiten radialen Offset O2r, der größer ist als die Summe aus dem ersten Radius R1 und dem ersten radialen Offset O1r, von der Längsachse L12 nach außen hin versetzt liegt,

die Bahnmittellinien $M23_2$ der inneren Kugelbahnen haben einen ersten Bogen mit dem Radius R1', dessen Mittelpunkt M1' um einen ersten axialen Offset O1a' von der Mittelebene EM des Gelenks zur Öffnungsseite hin versetzt liegt und um einen ersten radialen Offset O1r' von der Längsachse L13 nach außen zur Kugelbahn hin versetzt liegt und anschließend an diesen Bogen zur Öffnungsseite hin einen zweiten Bogen mit dem Radius R2', dessen Mittelpunkt um einen zweiten axialen Offset O2a' von der Mittelebene EM des Gelenks zur Anschlußseite hin versetzt liegt und um einen zweiten radialen Offset O2r', der größer ist als die Summe aus dem ersten Radius R1' und dem ersten radialen Offset O1r', von der Längsachse L13 nach außen hin versetzt liegt.

Hierbei werden insbesondere die weiteren Merkmale der zweiten Bahnpaare vorgesehen:

der Krümmungsradius der Mittellinien M22 der äußeren Kugelbahnen nimmt im Verlauf von der Mittelebene EM zur Anschlußseite ab und der Krümmungsradius der

Mittelebene M23 der inneren Kugelbahnen nimmt im Verlauf von der Mittelebene EM zur Öffnungsseite ab.
Hierbei werden insbesondere die weiteren Merkmale der zweiten Bahnpaare vorgesehen:

die Bahnmittellinien $M22_2$ der äußeren Kugelbahnen haben einen dritten Bogen mit dem Radius R3, der sich tangential mit gleichem Krümmungssinn an den ersten Bogen mit dem Radius R1 anschließt und dessen Radius R3 kleiner ist, als der Radius R1 und

die Bahnmittellinien $M23_2$ der inneren Kugelbahnen haben einen dritten Bogen mit dem Radius R3', der sich tangential mit gleichem Krümmungssinn an den ersten Bogen mit dem Radius R1' anschließt und dessen Radius R3' kleiner ist, als der Radius R1'.

In weiterer Ausgestaltung wird vorgeschlagen daß sich an den zweiten Bahnpaaren im Verlauf der Mittellinie $M22_2$ der äußeren Kugelbahnen zur Öffnungsseite hin an den zweiten Bogen eine achsparallele Gerade G3 anschließt und daß sich im Verlauf der Mittellinie der inneren Kugelbahnen $M23_2$ im Anschluß an den zweiten Bogen zur Anschlußseite hin eine achsparallele Gerade G3' anschließt.

Gemäß einer dazu alternativen Ausgestaltung ist vorgesehen, daß sich an den zweiten Bahnpaaren im Verlauf der Mittellinie $M22_2$ der äußeren Kugelbahnen zur Öffnungsseite hin an den zweiten Bogen eine sich der Längsachse L12 annähernde Gerade anschließt und daß sich im Verlauf der Mittellinie $M23_2$ der inneren Kugelbahnen im Anschluß an den zweiten Bogen zur Anschlußseite hin eine sich der Längsachse L13 annähernde Gerade anschließt.

Nach einem weiteren Merkmal wird vorgeschlagen, daß sich an den zweiten Bahnpaaren die Mittellinien M22, M23 der Kugelbahnen in der Gelenkmittelebene EM unter einem Winkel von 4 bis 32° schneiden, wobei die Tangenten T22, T23 an die Mittellinien M22, M23 der Kugelbahnen aller Bahnpaare bei gestrecktem Gelenk einen gleich großen Öffnungswinkel $\alpha$ bilden.

Hierbei sind vorzugsweise erste Bahnpaare und zweite Bahnpaare über dem Umfang abwechselnd angeordnet. Die Radialebenen R1 der ersten Bahnpaare und die Radialebenen R2 der zweiten Bahnpaare können hierbei in Umfangsrichtung insbesondere gleiche Teilungswinkel aufweisen. In besonderer Ausführung kann vorgesehen sein, daß die Verläufe der ersten Bahnpaare und der zweiten Bahnpaare nicht symmetrisch in Bezug auf die Gelenkmittelebene EM sind. Insbesondere können die ersten Bahnpaare analog zu den Bahnpaaren von UF-Gelenken von der Gelenköffnungsseite betrachtet hinterschnittfrei ausgebildet sein.

Nach einer weiteren bevorzugten Ausführungsform ist vorgesehen, daß der Rollkreisradius $PCR_1$ der Kugeln der ersten Bahnpaare kleiner ist als der Rollkreisradius $PCR_2$ der Kugeln der zweiten Bahnpaare.

Eine zweite Lösung besteht in einem Gleichlaufgelenk in Form eines Gegenbahngelenkes mit den Merkmalen:

ein Gelenkaußenteil, das eine Längsachse L12 und axial zueinander entgegengesetzt liegend eine Anschlußseite und eine Öffnungsseite hat und das äußere Kugelbahnen aufweist,

ein Gelenkinnenteil, das eine Längsachse L13 und Anschlußmittel für eine zur Öffnungsseite des Gelenkaußenteils weisende Welle hat und das innere Kugelbahnen aufweist,

die äußeren Kugelbahnen und die inneren Kugelbahnen bilden Bahnpaare miteinander,

die Bahnpaare nehmen jeweils eine drehmomentübertragende Kugel auf,

ein ringförmiger Kugelkäfig sitzt zwischen Gelenkaußenteil und Gelenkinnenteil und weist umfangsverteilte Käfigfenster auf, die jeweils zumindest eine der drehmomentübertragenden Kugeln aufnehmen,

die Mittelpunkte der Kugeln werden vom Käfig in einer Gelenkmittelebene EM gehalten und bei Gelenkbeugung auf die winkelhalbierende Ebene zwischen den Längsachsen L12, L13 geführt,

die Mittellinien M22, M23 der Kugelbahnen von Bahnpaaren liegen in Paaren von Bahnebenen BE, BE*, die parallel zueinander und symmetrisch zu Radialebenen R1, R2 durch die Längsachsen L12, L13 verlaufen,

für einen ersten Teil der Bahnpaare öffnet sich der Öffnungswinkel $\alpha_1$ zwischen Tangenten $T22_1$', $T23_1$' an Bahngrundlinien, die parallel zu Tangenten $T22_1$, $T23_2$ an die Mittellinien $M22_1$, $M23_1$ der Kugelbahnen in der Gelenkmittelebene EM bei gestrecktem Gelenk mit zusammenfallenden Längsachsen L12, L13 verlaufen von der Anschlußseite zur Öffnungsseite,

für einen zweiten Teil der Bahnpaare öffnet sich der Öffnungswinkel $\alpha_2$ zwischen Tangenten $T22_2$', $T23_2$' an Bahngrundlinien, die parallel zu Tangenten $T22_2$, $T23_2$ an die Mittellinien $M22_2$, $M23_2$ der Kugelbahnen in der Gelenkmittelebene EM bei gestrecktem Gelenk mit zusammenfallenden Längsachsen L12, L13 verlaufen, von der Öffnungsseite zur Anschlußseite, hierbei gilt für die Mittellinien der zweiten Bahnpaare

im Gelenkaußenteil verläßt die Mittellinie $M22_2$ der Kugelbahnen im Bereich von der Gelenkmittelebene EM bis zur Anschlußseite hin jeweils einen Bezugsradius RB, dessen Radiusmittelpunkt MBE im Schnittpunkt einer Senkrechten auf der Tangenten $T22_2$ an die Mittellinie $M22_2$ der Kugelbahn in der Gelenkmittelebene EM und einer Parallelachse PE, PE* zur Längsachse L12 durch eine Bahnebene BE, BE* liegt, radial nach innen,

im Gelenkinnenteil verläßt die Mittellinie $M23_2$ der Kugelbahnen im Bereich von der Gelenkmittelebene EM bis zur Öffnungsseite hin jeweils einen Bezugsradius RB', dessen Radiusmittelpunkt MBE' im Schnittpunkt einer Senkrechten auf der Tangenten $T23_2$ an die Mittellinie $M23_2$ der Kugelbahn in der Gelenkmittelebene EM und einer Parallelachse PE, PE* zur Längsachse L13 durch eine Bahnebene BE, BE* liegt, radial nach innen,

im Gelenkaußenteil wandert die Mittellinie $M22_2$ der Kugelbahnen im Bereich von der Gelenkmittelebene EM bis zur Öffnungsseite hin über den genannten Bezugsradius RB radial nach außen hinaus und

im Gelenkinnenteil wandert die Mittellinie $M23_2$ der Kugelbahnen im Bereich von der Gelenkmittelebene EM bis zur Anschlußseite hin über den genannten Bezugsradius RB' radial nach außen hinaus.

Die hiermit vorgeschlagene Lösung unterscheidet sich von der erstgenannten, bei der die Mittellinien von Bahnpaaren in Radialebenen durch die Mittelachsen des Gelenkes liegen, dadurch, daß im vorliegenden Fall die Mittellinien von Bahnpaaren jeweils zweier benachbarter Kugeln in zwei zueinander parallelen und symmetrisch und parallel zu einer Radialebene R angeordneten Bahnebenen BE, BE*, verlaufen. Die Radialebene R ist dabei wie bei der ersten Lösung durch die Längsachsen L12, L13 bei gestrecktem Gelenk definiert. Bei grundsätzlich gleicher Bahnform wie bei der ersten Lösung beziehen sich die Bahnformen bei der zweiten Lösung jedoch auf Parallelachsen PE, PE*, die in einer auf der Radialebene R senkrecht liegenden Bezugsebene EX durch die Längsachsen L12, L13 liegen, sowie auf Bezugsmittelpunkte ME, die auf den genannten Parallelachsen PE, PE* und im Schnittpunkt der Parallelachsen mit der Gelenkmittelebene EM liegen.

Eine dritte Lösung besteht in einem Gleichlaufdrehgelenk in Form eines Gegenbahngelenks mit den Merkmalen:

ein Gelenkaußenteil, das eine Längsachse L12 und axial zueinander entgegengesetzt liegend eine Anschlußseite und eine Öffnungsseite hat und das äußere Kugelbahnen aufweist,

ein Gelenkinnenteil, das eine Längsachse L13 und Anschlußmittel für eine zur Öffnungsseite des Gelenkaußenteils weisende Welle hat und das innere Kugelbahnen aufweist,

die äußeren Kugelbahnen und die inneren Kugelbahnen bilden Bahnpaare miteinander,

die Bahnpaare nehmen jeweils eine drehmomentübertragende Kugel auf,

ein ringförmiger Kugelkäfig sitzt zwischen Gelenkaußenteil und Gelenkinnenteil und weist umfangsverteilte Käfigfenster auf, die jeweils zumindest eine der drehmomentübertragenden Kugeln aufnehmen,

die Mittelpunkte der Kugeln werden vom Käfig in einer Gelenkmittelebene EM gehalten und bei Gelenkbeugung auf die winkelhalbierende Ebene zwischen den Längsachsen L12, L13 geführt,

die Mittellinien $M22_1$, $M22_2$ benachbarter Kugelbahnen im Gelenkaußenteil liegen in Paaren von ersten Bahnebenen BE, BE*, die parallel zueinander und symmetrisch zu Radialstrahlen RS1, RS2 durch den Gelenkmittelpunkt M verlaufen,

die Mittellinien $M23_1$, $M23_2$ benachbarter Kugelbahnen im Gelenkinnenteil liegen in Paaren von zweiten Bahnebenen BE', BE*', die parallel zueinander und symmetrisch zu Radialstrahlen RS1, RS2 durch den Gelenkmittelpunkt M verlaufen,

die ersten Bahnebenen BE, BE* und die zweiten Bahnebenen BE', BE*' bilden mit Radialebenen R1, R2 durch die Längsachsen L12, L13 gleich große, entgegengesetzt angetragene Winkel $\gamma$, $\gamma'$,

für einen ersten Teil der Bahnpaare öffnet sich der Öffnungswinkel $\alpha_1$ zwischen Tangenten $T22_1'$, $T23_1'$ an Bahngrundlinien, die parallel zu Tangenten $T22_1$, $T23_1$ an die Mittellinien $M22_1$, $M23_1$ der Kugelbahnen in der Gelenkmittelebene EM bei gestrecktem Gelenk mit zusammenfallenden Längsachsen L12, L13 verlaufen von der Anschlußseite zur öffnungsseite,

für einen zweiten Teil der Bahnpaare öffnet sich der Öffnungswinkel $\alpha_2$ zwischen Tangenten $T22_2'$, $T23_2'$ an Bahngrundlinien, die parallel zu Tangenten $T22_2$, $T23_2$ an die Mittellinien $M22_2$, $M23_2$ der Kugelbahnen in der Gelenkmittelebene EM bei gestrecktem Gelenk mit zusammenfallenden Längsachsen L12, L13 verlaufen, von der öffnungsseite zur Anschlußseite, hierbei gilt für die Mittellinien der zweiten Bahnpaare

im Gelenkaußenteil verläßt die Mittellinie $M22_2$ der Kugelbahnen im Bereich von der Gelenkmittelebene EM bis zur Anschlußseite hin jeweils einen Bezugsradius RB, dessen Radiusmittelpunkt MBE im Schnittpunkt einer Senkrechten auf der Tangenten $T22_2$ an die Mittellinie $M22_2$ der Kugelbahn in der Gelenkmittelebene EM und einer Bezugsachse PE, PE* durch eine Bahnebene BE, BE* liegt, radial nach innen,

im Gelenkinnenteil verläßt die Mittellinie $M23_2$ der Kugelbahnen im Bereich von der Gelenkmittelebene EM bis zur Öffnungsseite hin jeweils einen Bezugsradius RB', dessen Radiusmittelpunkt MBE' im Schnittpunkt einer Senkrechten auf der Tangenten $T23_2$ an die Mittellinie $M23_2$ der Kugelbahn in der Gelenkmittelebene EM und einer Bezugsachse PE', PE*' durch eine Bahnebene BE', BE*' liegt, radial nach innen,

im Gelenkaußenteil wandert die Mittellinie $M22_2$ der Kugelbahnen im Bereich von der Gelenkmittelebene EM bis zur Öffnungsseite hin über den genannten Bezugsradius RB radial nach außen hinaus und

im Gelenkinnenteil wandert die Mittellinie $M23_2$ der Kugelbahnen im Bereich von der Gelenkmittelebene EM bis zur Anschlußseite hin über den genannten Bezugsradius RB' radial nach außen hinaus.

Nach der hiermit vorgeschlagenen dritten Lösung verlaufen die Mittellinien von Bahnpaaren jeweils zweier benachbarter Kugeln im Außenteil in zwei zueinander parallelen Ebenen BE, BE*, die symmetrisch und parallel zu einer Bezugsebene EB durch den Gelenkmittelpunkt verlaufen, die mit einer Radialebene R einen in einer auf der Radialebene senkrecht liegenden zweiten Bezugsebene EX liegenden Winkel $\gamma$ bildet, und im Innenteil in zwei zueinander parallelen Ebenen BE', BE*', die symmetrisch und parallel zu einer Bezugsebene EB' durch den Gelenkmittelpunkt verlaufen, die mit einer Radialebene R einen in einer auf der Radialebene senkrecht liegenden zweiten Bezugsebene EX liegenden Winkel $\gamma'$ bildet. Die genannte Radialebene R ist dabei wie bei der zweiten Lösung durch die Längsachsen L12, L13 bei gestrecktem Gelenk definiert. Bei grundsätzlich gleicher Bahnform wie bei der zweiten Alternative beziehen sich die Bahnformen bei der dritten Lösung jedoch auf paarweise zueinander parallele Achsen im Gelenkinnenteil und im Gelenkaußenteil, die sich paarweise kreuzen und die in einer auf der Radialebene R senkrecht liegenden zweiten Bezugsebene EX durch die Längsachsen L12, L13 liegen sowie auf Bezugsmittelpunkte, die auf den genannten parallelen Achsen und im Schnittpunkt der parallelen Achsen mit der Gelenkmittelebene EM liegen.

Gelenke nach den hiermit beschriebenen zweiten und dritten Lösungen haben eine durch zwei teilbare Anzahl von Bahnpaaren, wenn jeweils nur eine Bahn in jeder Bahnebene BE, BE*, BE', BE*' liegt. Sie haben eine durch vier teilbare Zahl von Bahnpaaren, wenn in jeder der Bahnebenen BE, BE*, BE', BE*' zwei sich im wesentlichen gegenüberliegende Bahnpaare von zueinander symmetrischer Form liegen.

Wie vorstehend erläutert, entsprechen die weiteren Ausgestaltungsformen von Gelenken nach der zweiten und dritten Lösung unter Änderung der entsprechenden Bezugsorte im wesentlichen den Ausgestaltungen des Gelenkes nach der ersten Lösung. Hieraus ergibt sich folgendes.

Eine erste vorteilhafte Ausgestaltung umfaßt die weiteren Merkmale der zweiten Bahnpaare:

im Gelenkaußenteil ist der örtliche Radius R1 der Mittellinie $M22_2$ in der Gelenkmittelebene EM kleiner als der Bezugsradius RB,
im Gelenkinnenteil ist der örtliche Radius R1' der Mittellinie $M23_2$ in der Gelenkmittelebene EM kleiner als der Bezugsradius RB'.

Eine erste vorteilhafte Ausgestaltung umfaßt die weiteren Merkmale der zweiten Bahnpaare:

im Gelenkaußenteil verläuft die Mittellinie $M22_2$ der Kugelbahnen von der Gelenkmittelebene EM zur Anschlußseite hin jeweils radial außerhalb eines Bezugsradius RZ, dessen Radiusmittelpunkt in der Gelenkmittelebene EM auf einer der Parallelachsen PE, PE* liegt, und
im Gelenkinnenteil verläuft die Mittellinie $M23_2$ der Kugelbahnen von der Gelenkmittelebene EM zur Öffnungsseite hin jeweils radial außerhalb eines Bezugsradius RZ', dessen Radiusmittelpunkt in der Gelenkmittelebene EM auf einer der Parallelachsen PE, PE*, PE', PE*' liegt.

Eine weitere günstige Ausgestaltung zeichnet sich durch die weiteren Merkmale aus:

im Gelenkaußenteil verläuft die Mittellinie $M22_2$ der Kugelbahnen von der Gelenkmittelebene EM zur Öffnungsseite hin jeweils radial außerhalb des Bezugsradius RB und

im Gelenkinnenteil verläuft die Mittellinie $M23_2$ der Kugelbahnen von der Gelenkmittelebene EM zur Anschlußseite hin jeweils radial außerhalb des Bezugsradius RB'.

Weiterhin werden die weiteren Merkmale für die zweiten Bahnpaare vorgeschlagen:

im Gelenkaußenteil verläuft die Mittellinie $M22_2$ der Kugelbahnen von der Gelenkmittetebene EM zur Öffnungsseite hin jeweils radial innerhalb eines Bezugsradius RZ, dessen Radiusmittelpunkt in der Gelenkmittelebene EM auf einer der Parallelachsen PE, PE* liegt,
im Gelenkinnenteil verläuft die Mittellinie $M23_2$ der Kugelbahnen von der Gelenkmittelebene EM zur Anschlußseite hin jeweils radial innerhalb eines Bezugsradius RZ', dessen Radiusmittelpunkt in der Gelenkmittelebene EM auf einer der Parallelachsen PE, PE*, PE', PE*' liegt.

Ein weiterer Vorschlag betrifft die Merkmale der zweiten Bahnpaare:

die Mittellinien $M22_2$, $M23_2$ der äußeren Kugelbahnen und inneren Kugelbahnen umfassen jeweils zumindest zwei entgegengesetzt gekrümmte Bogenabschnitte, die in einem Wendepunkt aneinander anschließen,
die Wendepunkte $W22_2$ der äußeren Kugelbahnen liegen in einer Bahnebene BE, BE* mit Abstand von der Mittelebene EM zur Öffnungsseite,
die Wendepunkte $W23_2$ der inneren Kugelbahnen liegen in einer Bahnebene BE, BE*, BE', BE*' mit Abstand von der Mittelebene EM zur Anschlußseite,
die Wendepunkte $W22_2$, $W23_2$ liegen jeweils unterhalb eines Maximums des Abstands der Mittellinien $M22_2$, $M23_2$ von den Parallelachsen PE, PE*, PE', PE*'.

Eine konkrete Ausgestaltungsform weist die Merkmale der zweiten Bahnpaare auf
die Bahnmittellinien $M22_2$ der äußeren Kugelbahnen haben einen ersten Bogen mit dem Radius R1, dessen Mittelpunkt M1 in einer Bahnebene BE, BE* um einen ersten axialen Offset O1a von der Mittelebene EM des Gelenks zur Anschlußseite hin versetzt liegt und um einen ersten radialen Offset O1r von einer Parallelachse PE, PE* nach außen hin versetzt liegt, und anschließend an diesen Bogen zur Anschlußseite hin einen zweiten Bogen mit dem Radius R2, dessen Mittelpunkt M2 in der Bahnebene BE, BE* um einen zweiten axialen Offset O2a von der Mittelebene EM des Gelenks zur Öffnungsseite hin versetzt liegt und um einen zweiten radialen Offset O2r, der größer ist als die Summe aus dem ersten Radius R1 und dem ersten radialen Offset O1r, von der Parallelachse PE, PE* nach außen hin versetzt liegt,

EP 1 656 509 B1

die Bahnmittellinien $M23_2$ der inneren Kugelbahnen haben einen ersten Bogen mit dem Radius R1', dessen Mittelpunkt M1' in einer Bahnebene BE, BE*, BE', BE*' um einen ersten axialen Offset O1a' von der Mittelebene EM des Gelenks zur Öffnungsseite hin versetzt liegt und um einen ersten radialen Offset von einer Parallelachse PE, PE*, PE', PE*' nach außen hin versetzt liegt, und anschließend an diesen Bogen zur Öffnungsseite hin einen zweiten Bogen mit dem Radius R2', dessen Mittelpunkt M2' in der Bahnebene BE, BE*, BE', BE*' um einen zweiten axialen Offset O2a' von der Mittelebene EM des Gelenks zur Anschlußseite hin versetzt liegt und um einen zweiten radialen Offset O2r', der größer ist als die Summe aus dem ersten Radius R1' und dem ersten radialen Offset O1r', von der Parallelachse PE, PE*, PE', PE*' nach außen hin versetzt liegt.

Ein weiterer Vorschlag umfaßt die Merkmale der zweiten Bahnpaare:

der Krümmungsradius der Mittellinien M22 der äußeren Kugelbahnen nimmt im Verlauf von der Mittelebene EM zur Anschlußseite ab und der Krümmungsradius der Mittelebene M23 der inneren Kugelbahnen nimmt im Verlauf von der Mittelebene EM zur Öffnungsseite ab.

Ein weiterer Vorschlag umfaßt die Merkmale der zweiten Bahnpaare:

die Bahnmittellinien der äußeren Kugelbahnen $22_2$ haben einen dritten Bogen mit dem Radius R3, der sich tangential mit gleichem Krümmungssinn an den ersten Bogen mit dem Radius R1 anschließt und dessen Radius R3 kleiner ist, als der Radius R1 und

die Bahnmittellinien $M23_2$ der inneren Kugelbahnen haben einen dritten Bogen mit dem Radius R3', der sich tangential mit gleichem Krümmungssinn an den ersten Bogen mit dem Radius R1' anschließt und dessen Radius R3' kleiner ist, als der Radius R1'.

Weiterhin wird vorgeschlagen, daß sich an den zweiten Bahnpaaren im Verlauf der Mittellinie M22 der äußeren Kugelbahnen zur Öffnungsseite hin an den zweiten Bogen eine achsparallele Gerade G3 anschließt und daß sich im Verlauf der Mittellinie M23 der inneren Kugelbahnen im Anschluß an den zweiten Bogen zur Anschlußseite hin eine achsparallele Gerade G3' anschließt.

Nach einer dazu alternativen Ausführungsform ist vorgesehen, daß sich an den zweiten Bahnpaaren im Verlauf der Mittellinie $M22_2$ der äußeren Kugelbahnen zur Öffnungsseite hin an den zweiten Bogen eine sich der Parallelachse PE, PE' annähernde Gerade anschließt und daß sich im Verlauf der Mittellinie $M23_2$ der inneren Kugelbahnen im Anschluß an den zweiten Bogen zur Anschlußseite hin eine sich der Parallelachse PE, PE*, PE', PE*' annähernde Gerade anschließt.

Auch hier kann vorgesehen sein, daß sich an den zweiten Bahnpaaren die Mittellinien M22, M23 der Kugelbahnen in der Gelenkmittelebene EM unter einem Winkel von 4 bis 32° schneiden, wobei die Tangenten T22, T23 an die Mittellinien M22, M23 der Kugelbahnen aller Bahnpaare bei gestrecktem Gelenk einen gleich großen Öffnungswinkel $\alpha$ bilden.

Ein Gelenk der hiermit beschriebenen Form umfaßt bevorzugt eine durch vier teilbare Anzahl von Bahnpaaren. Hierbei ist insbesondere vorgesehen, daß jeweils die Kugeln zweier benachbarter, in parallelen Bahnebenen BE, BE' liegender Bahnpaare in einem gemeinsamen Käfigfenster des Kugelkäfigs aufgenommen werden.

Wie bereits oben erläutert, können die Bahnebenen BE, BE* nach der zweiten Lösung parallel zu den Längsachsen L12, L13 verlaufen und die Bahnebenen BE, BE*, BE', BE*' nach der dritten Lösung unter einem Schrägungswinkel $\gamma$, $\gamma'$ zu den Längsachsen L12, L13 verlaufen.

In bevorzugter Ausführung ist vorgesehen, daß der Teilungswinkel $2\varphi$ zwischen den Bahnpaaren, deren Kugeln in einem gemeinsamen Käfigfenster aufgenommen sind, geringer ist, als der Teilungswinkel zwischen benachbarten Bahnpaaren, deren Kugeln in verschiedenen Käfigfenstern aufgenommen sind.

Hierbei kann zwischen dem Schrägungswinkel $\gamma$ und dem Teilungswinkel $2\varphi$ die Beziehung $\gamma = \alpha/2 \cdot \tan\varphi$ bestehen, wobei $\alpha/2$ der Bahnneigungswinkel bzw. der halbe Öffnungswinkel ist.

Weiterhin wird vorgeschlagen, daß von zwei unmittelbar benachbart liegenden Bahnpaaren eines als erstes Bahnpaare und eines als zweites Bahnpaar ausgebildet ist. In Ergänzung hierzu kann vorgesehen werden, daß von zwei in einer Bahnebene liegenden Bahnpaaren eines als erstes Bahnpaar und eines als zweites Bahnpaar ausgebildet ist, d. h. zwei sich im wesentlichen radial gegenüberliegende Bahnen öffnen sich zum einen zur Öffnungsseite und zum anderen zur Anschlußseite hin.

Die Erfindung wird anhand der Zeichnungen näher erläutert, die bevorzugte Ausführungsbeispiele von erfindungsgemäßen Gelenken im Vergleich mit einem Gelenk nach dem Stand der Technik darstellen.

Es zeigen

Figur 1     ein erfindungsgemäßes Gelenk nach der ersten Lösung

a) im Querschnitt
b) im Längsschnitt gemäß der Schnittlinie A-A
c) im Längsschnitt gemäß der Schnittlinie B-B;

Figur 2    ein erfindungsgemäßes Gelenk nach der zweiten Lösung

a) im Querschnitt
b) im Längsschnitt gemäß der Schnittlinie A-A
c) im Längsschnitt gemäß der Schnittlinie B-B;

Figur 3    ein erfindungsgemäßes Gelenk nach Figur 2 der dritten Lösung

a) im Querschnitt
b) im Längsschnitt gemäß der Schnittlinie A-A;

Figur 4    zeigt geometrische Beziehungen an einem Kugelpaar eines Gelenks nach Figur 3

a) im Querschnitt
b) im Längsschnitt durch eine Bahnebene
c) im Längsschnitt durch ein Kugelpaar;

Figur 5    die Längsachsen und die Bahnmittellinien der zweiten Bahnen eines erfindungsgemäßen Gelenks in einer ersten Ausführung

a) für das Gelenkaußenteil
b) für das Gelenkinnenteil;

Figur 6    die Längsachsen und die Bahnmittellinien der zweiten Bahnen eines erfindungsgemäßen Gelenks in einer zweiten Ausführung

a) für das Gelenkaußenteil
b) für das Gelenkinnenteil.

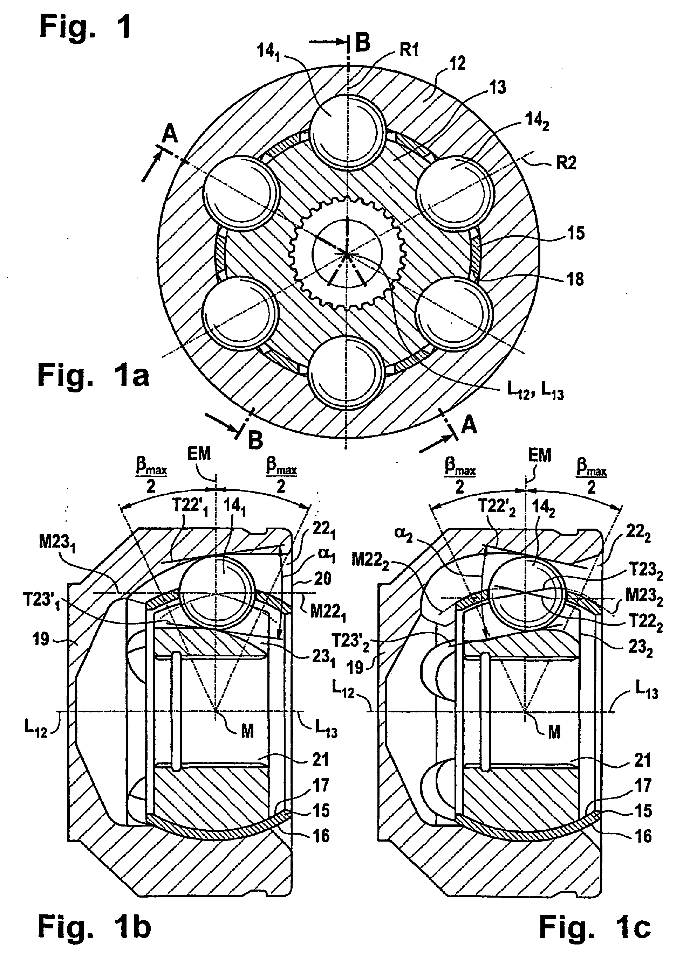

Die Figuren 1a bis 1c werden nachstehend gemeinsam beschrieben. Ein Gelenk 11 umfaßt ein Gelenkaußenteil 12, ein Gelenkinnenteil 13, sechs drehmomentübertragende Kugeln 14, sowie einen Kugelkäfig 15. Der Käfig hat eine sphärische Außenfläche 16, die im Gelenkaußenteil geführt ist und eine sphärische Käfiginnenfläche 17, die auf dem Gelenkinnenteil geführt ist, wobei dieser zweite Kontakt nicht zwingend ist. Die Kugeln 14 sind in umfangsverteilten Käfigfenstern 18 im Kugelkäfig 15 in einer Gelenkmittelebene EM gehalten. Am Gelenkaußenteil 12 ist eine Längsachse L12 bezeichnet, am Gelenkinnenteil eine Längsachse L13. Der Schnittpunkt der Längsachsen L12, L13 mit der Gelenkmittelebene EM bildet den Gelenkmittelpunkt M. Das Gelenkaußenteil 12 weist einen Boden 19 auf, der beispielsweise in einen Anschlußzapfen übergehen kann, sowie eine Öffnung 20, in die ein mit dem Gelenkinnenteil verbindbarer Zapfen einsteckbar ist. Hierfür weist das Gelenkinnenteil 13 eine Einsecköffnung 21 auf. Die Lage des Bodens 19 bezeichnet im weiteren die axiale Richtung "zur Anschlußseite", die Lage der Öffnung 20 bezeichnet im weiteren die axiale Richtung "zur Öffnungsseite". Diese Begriffe werden auch in Bezug auf das Gelenkinnenteil verwendet, wobei der tatsächliche Anschluß einer Welle an das Gelenkinnenteil unberücksichtigt bleibt.

Ausgehend von der Mittelebene EM sind für den maximalen Beugewinkel $\beta_{max}$ des Gelenkinnenteils 13 gegenüber dem Gelenkaußenteil 12 die Kugelkontaktwinkel $\beta_{max}/2$ in beiden Richtungen eingezeichnet. Über dem Umfang sind abwechselnd erste Bahnpaare $22_1$, $23_1$ mit ersten Kugeln $14_1$ und zweiten Bahnpaare $22_2$, $23_2$ mit zweiten Kugeln $14_2$ vorgesehen. Die Form der ersten Bahnpaare $22_1$, $23_1$ ist dem Schnitt A-A zu entnehmen, die Form der zweiten Bahnpaare $22_2$, $22_3$ dem Schnitt B-B. Die ersten Kugeln $14_1$ haben Kontakt mit ersten äußeren Kugelbahnen $22_1$ im Gelenkaußenteil und ersten inneren Kugelbahnen $23_1$ im Gelenkinnenteil. Die Mittellinien $M22_1$, $M23_1$ dieser Bahnen sind nach Art von UF-Bahnen ausgeführt und setzen sich aus einem Kreisbogen und einer tangential anschließenden Geraden zusammen. In der dargestellten gestreckten Position bilden die Tangenten $T22_1'$, $T23_1'$ an die Kugeln $14_1$ in den Kontaktpunkten mit den Bahnen $22_1$, $23_1$ einen Öffnungswinkel $\alpha_1$, der sich zur Öffnungsseite hin öffnet. Die zweiten Kugeln $14_2$ sind in äußeren Kugelbahnen $22_2$ im Gelenkaußenteil und inneren Kugelbahnen $23_2$ im Gelenkinnenteil geführt. Die Kugeln $14_2$ sind mit Kontakt im Bahngrund der Kugelbahnen dargestellt, der nicht notwendig gegeben sein muß. In der dargestellten gestreckten Position bilden die Tangenten $T22_2'$, $T23_2'$ an die Kugeln $14_2$ in den Kontaktpunkten mit den Bahnen $22_2$, $23_2$ einen Öffnungswinkel $\alpha_2$, der sich zur Anschlußseite hin öffnet. Zur Beschreibung der Kugelbahnen 22, 23 wird im weiteren auf die Mittellinien $M22_2$, $M23_2$ der Kugelbahnen Bezug genommen. In der Mittelebene EM sind Tangenten $T22_2$, $T23_2$ an die Mittellinien eingezeichnet, die zu den zuvor genannten Tangenten $T22_2$', $T23_2$' parallel liegen. Der Winkel $\alpha_2$ zwischen den genannten Tangenten $T22_2$, $T23_2$ liegt zwischen 4 und 32°.

Es ist im einzelnen erkennbar, daß jedes Bahnpaar mit seinen Mittellinien M22, M23 in einer Radialebene $R_1$, $R_2$ durch das Gelenk liegt, daß diese Radialebenen R den gleichen Winkelabstand voneinander haben und daß jeweils eine Kugel 14 von einem Käfigfenster 18 im Kugelkäfig 15 aufgenommen wird.

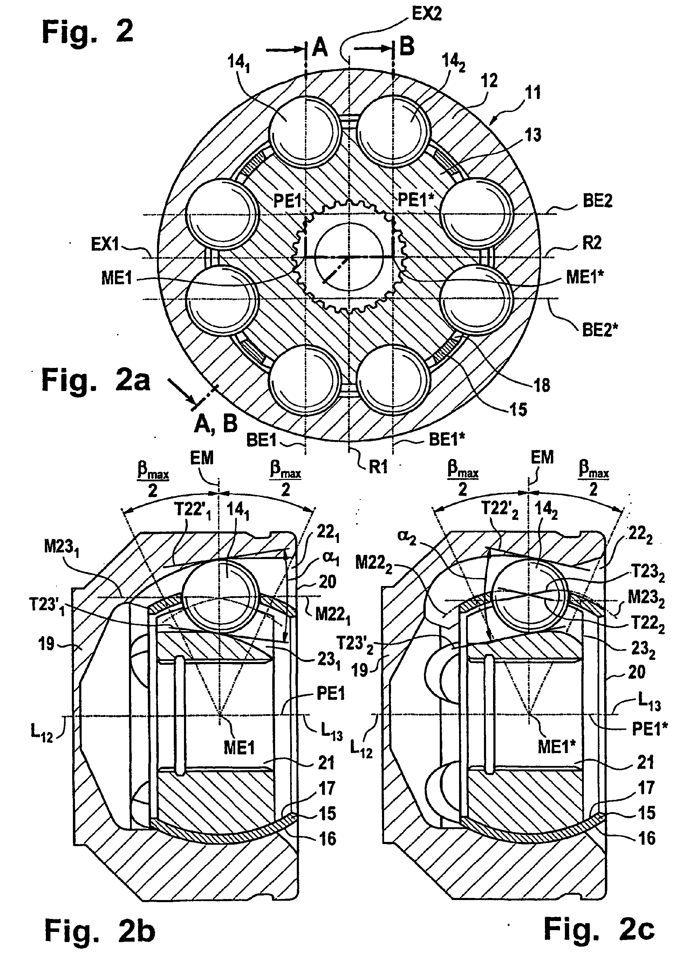

Die Figuren 2a bis 2c werden nachstehend gemeinsam beschrieben. Es ist ein Gelenk 11 in einer gegenüber der Ausführung nach Figur 1 abgewandelten Ausführung gezeigt. Gleiche Einzelheiten sind nichtsdestotrotz mit gleichen Bezugszeichen wie in den Figuren 1a bis 1c bezeichnet. Ein erfindungsgemäßes Gelenk 11 in dieser zweiten Ausführung umfaßt Kugelbahnen 22, 23, die in Bahnebenen BE, BE* liegen, die paarweise symmetrisch zu Radialebenen R durch das Gelenk angeordnet sind. In der Darstellung b ist ein abgewinkelter Schnitt nach der Schnittlinie A-A gezeigt, der zum einen durch die Bahnebene BE und ein erstes Bahnpaar $22_1$, $23_1$ mit einer ersten Kugel $14_1$ und zum anderen durch eine Radialebene zwischen zwei Bahnpaaren verläuft. In der Darstellung c ist ein abgeknickter Schnitt nach der Schnittlinie B-B gezeigt, der zum einen durch eine Bahnebene BE* und ein zweites Bahnpaar mit zweiten Kugelbahnen $22_2$, $23_2$ und zum anderen durch eine radiale Ebene zwischen zwei Bahnpaaren verläuft. Ober dem Umfang sind Paare von Bahnpaaren erkennbar, die jeweils ein erstes Bahnpaar $22_1$, $23_1$ und ein zweites Bahnpaar $22_2$, $23_2$ umfassen und die in einem gemeinsamen Käfigfenster 18 gehalten sind. Der Teilungswinkel dieser Paare von Bahnpaaren ist geringer als zwischen zwei benachbarten Bahnpaaren, die nicht einem Paar von Bahnpaaren angehören. Erste Bahnpaare und zweite Bahnpaare wechseln sich in der hier gezeigten Ausführung über dem Umfang ab.

Wie in der Darstellung b erkennbar, sind die ersten Kugeln $14_1$ in ersten Bahnpaaren aus äußeren Bahnen $22_1$ und inneren Bahnen $23_1$ geführt, die nach Art der Bahnen von UF-Gelenken ausgebildet sind. Das heißt, die Mittellinien M22, M23 dieser Bahnpaare setzen sich aus Radien und daran anschließenden tangentialen Geraden zusammen Tangenten $T22_1$', $T23_1$' an die Kugeln in den Bahnen bilden einen ersten Öffnungswinkel $\alpha_1$, der sich zur Öffnungsseite des Gelenkaußenteils öffnet.

In der Darstellung c ist eine zweite Kugel $14_2$ erkennbar, die in zweiten äußeren Kugelbahnen $22_2$ und zweiten inneren Kugelbahnen $23_2$ gehalten ist. Tangenten $T22_2$', $T23_2$' an die Kugeln $14_2$ bilden einen Öffnungswinkel $\alpha_2$ miteinander, der sich zur Anschlußseite des Gelenkaußenteils öffnet. In Bezug auf den Bahnverlauf wird im weiteren auf die Mittellinien $M22_2$, $M23_2$ Bezug genommen. In der Gelenkmittelebene EM schneiden sich Tangenten $T22_2$, $23_2$ an die Mittellinie $M22_2$, $M23_2$ unter dem bereits genannten Winkel $\alpha_2$.

Die Bahnebenen BE, BE* enthalten Parallelachsen PE, PE* zu den Längsachsen in geringstem Abstand, die damit Schnittlinien zwischen den Bahnebenen und einer senkrecht zur entsprechenden Radialebene R1, R2 liegenden Bezugsebene EX1, EX2 bilden. Auf den Parallelachsen PE, PE* liegen Bahnmittelpunkte ME, ME* in kürzestem Abstand zum Gelenkmittelpunkt M. Werden jeweils vier Bahnpaare symmetrisch zu drei oder vier Radialebenen R mit untereinander gleichem Teilungswinkel angeordnet, ergeben sich Gelenke mit zwölf oder sechzehn Bahnpaaren 22, 23 und entsprechend zwölf oder sechzehn Kugeln 14. Entsprechend der Darstellung a ist der in den Darstellungen b und c gezeigte Mittelpunkt ME1, ME1* nicht der Gelenkmittelpunkt, sondern der Bahnkurvenmittelpunkt in einer der Bahnebenen BE1, BE1*.

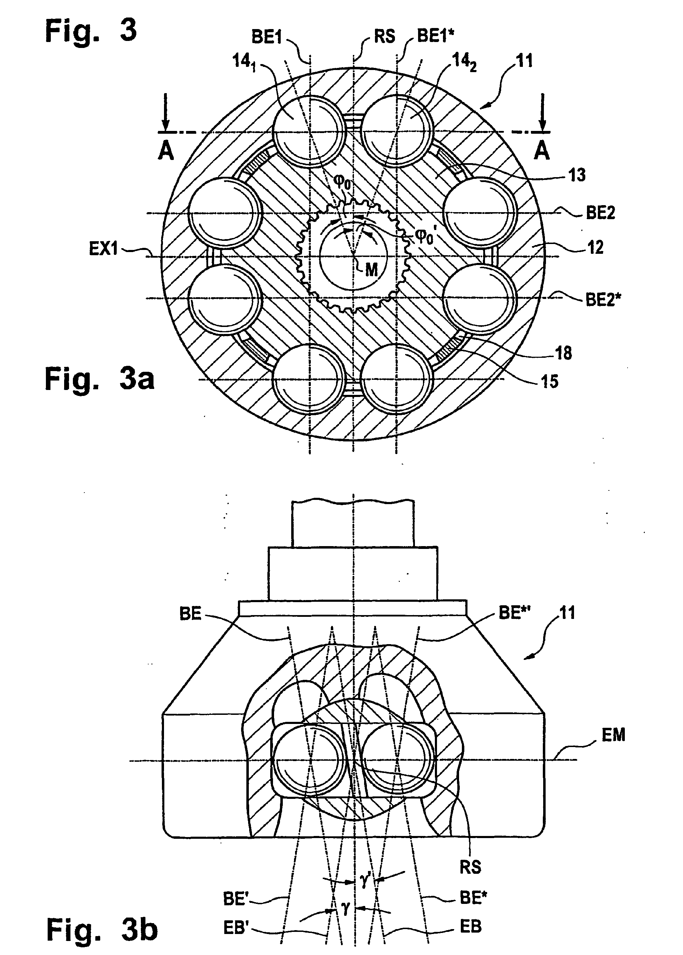

Die Figuren 3a und 3b werden nachstehend gemeinsam beschrieben. Die Darstellung a entspricht im Prinzip der Darstellung a aus Figur 2, wobei jedoch hier eine Schnittlinie A-A parallel zu einer Bezugsebene EX1 durch die Kugeln eines Paares von Bahnpaaren gelegt ist. In Darstellung b ist eine erste Bezugsebene EB für äußere Kugelbahnen gezeigt, die auf der genannten Bezugsebene EX1 senkrecht steht und einen Radialstrahl RS durch den Gelenkmittelpunkt M enthält. Diese Bezugsebene EB bildet mit einer Radialebene R durch die Längsachsen L12, L13 einen Schrägungswinkel γ. Parallel zu der Bezugsebene EB liegen die Bahnebenen BE und BE*, in denen die Mittellinien der äußeren Kugelbahnen eines Bahnpaares verlaufen. In der Darstellung b ist weiterhin eine erste Bezugsebene EB' für innere Kugelbahnen gezeigt, die ebenfalls auf der genannten Bezugsebene EX1 senkrecht steht und den Radialstrahl RS durch den Gelenkmittelpunkt M enthält. Diese Bezugsebene EB' bildet mit der Radialebene R durch die Längsachsen L12, L13 einen Schrägungswinkel γ', der gleich groß und entgegengesetzt angetragen zu γ ist. Parallel zu der Bezugsebene EB' liegen Bahnebenen BE', BE*', in denen die Mittellinien der inneren Kugelbahnen eines Bahnpaares verlaufen. Die Mittellinien jedes Bahnpaares schneiden sich in der Gelenkmittelebene EM.

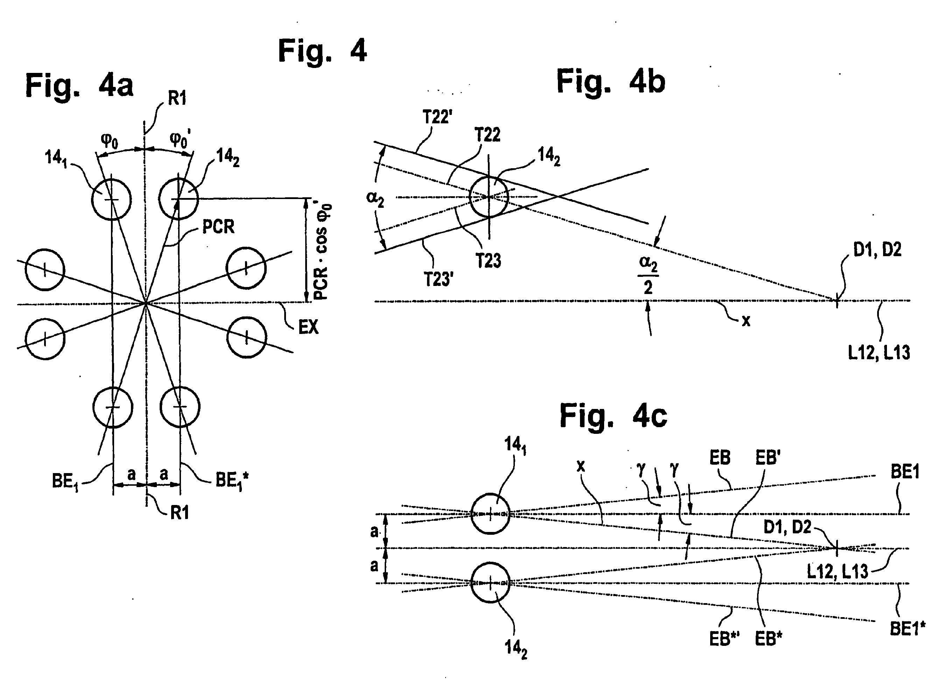

Die Figuren 4a bis 4c werden nachstehend gemeinsam beschrieben. In Darstellung a ist ein Querschnitt durch eine in der Gelenkmittelebene liegende Kugelanordnung aus vier Kugelpaaren $14_1$, $14_2$ ähnlich Figur 3 gezeigt. Der Teilungswinkel zwischen den Kugeln $14_1$, $14_2$ eines Kugelpaares und der dazwischenliegenden Radialebene R1 ist $\varphi_0$ bzw. $\varphi_0$'. Die Kugelbahnen haben von einer Bezugsebene EX1 einen Abstand, der dem Rollkreisradius PCR multipliziert mit dem Cosinus von $\varphi_0$ entspricht. Der senkrechte Abstand der Kugeln eines Kugelpaares von der genannten Radialebene R1 ist jeweils mit a bezeichnet. Die eingezeichneten Bahnebenen $BE_1$, $BE_1$* stehen stellvertretend für den Durchgang der Bahnebenen BE, BE* der äußeren Kugelbahnen und für den Durchgang der Bahnebenen BE', BE*' der inneren Kugelbahnen durch die Gelenkmittelebene.

In der Darstellung b ist im Schnitt durch eine der Bahnebenen $BE_1$, $BE_1$* der Bahnöffnungswinkel zwischen

den Tangenten T22, T23 an die Bahnmittellinien eines zweiten Bahnpaares mit $\alpha2$ bezeichnet, wobei die eingezeichneten Winkelschenkel die Tangenten T22', T23' an die Bahngrundlinien der Bahn darstellen. $\alpha2/2$ entspricht somit dem halben Öffnungswinkel bzw. dem Bahnneigungswinkel.

In der Darstellung c ist ein Kugelpaar $14_1$, $14_2$ mit den äußeren Bahnebenen EB, EB* und den inneren Bahnebenen EB', EB*' gezeigt. Die in Darstellung b gezeigten Durchdringungspunkte D1, D2 der Bahntangenten sind ebenfalls eingezeichnet.

Die nachfolgende Ableitung gilt für den Idealfall, daß die genannten Bahntangenten T22, T23 die Radialebenen R in den Achsen L12, L13 durchdringen, d. h. die Durchdringungspunkte D1 und D2 liegen auf den Längsachsen L12, L13.

Es gelten folgende Beziehungen:

$$(1) \qquad a = PCR \cdot \sin \varphi_0'$$

$$(2) \qquad \frac{PCR \cdot \cos \varphi_0'}{x} = \tan \frac{\alpha2}{2}$$

daraus

$$x = \frac{PCR \cdot \cos \varphi_0'}{\tan \dfrac{\alpha2}{2}}$$

$$(3) \qquad \frac{a}{x} = \sin \gamma$$

d.f.

$$\sin \gamma = \frac{PCR \cdot \sin \varphi_0'}{PCR \cdot \cos \varphi_0'} \cdot \tan \frac{\alpha2}{2}$$

für kleine Winkel $\dfrac{\alpha2}{2}$ und $\gamma$ gilt die Näherung

$\sin \approx arc$, $\tan \approx arc$

$$arc\gamma \approx \tan \varphi_0' \cdot arc \frac{\alpha2}{2} \quad \text{und damit} \quad \gamma \approx \frac{\alpha2}{2} \cdot \tan \varphi_0'$$

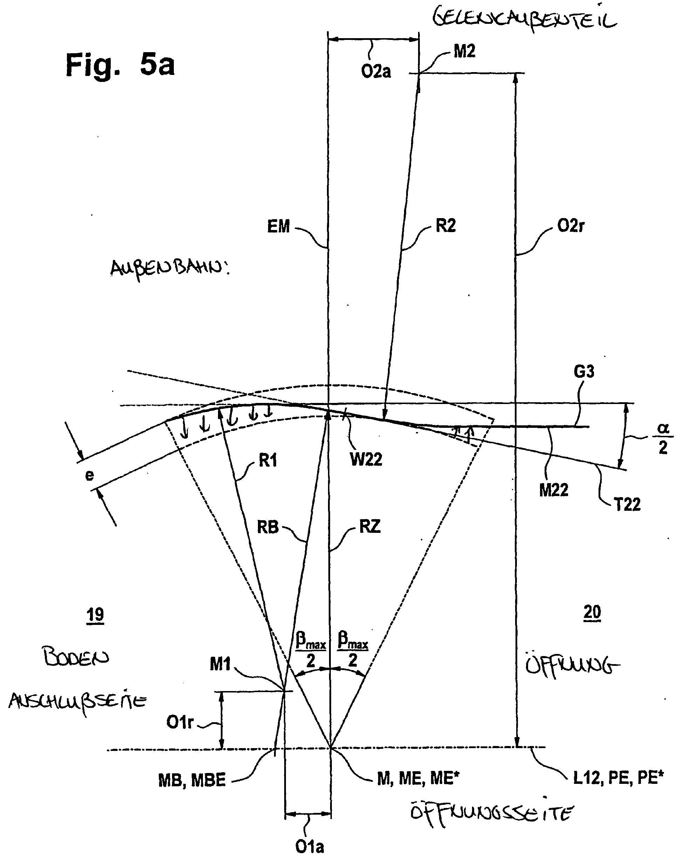

In Figur 5a ist die zu einer Bahngrundlinie parallel verlaufende Bahnmittellinie M22 einer äußeren Kugelbahn 22 nach einer der Figuren 1 bis 3 dargestellt. Die Mittellinie M22 einer Bahn im Außenteil setzt sich aus einem ersten Radius R1 um einen Mittelpunkt M1 mit dem ersten axialen Offset O1a und einem radialen Offset O1r sowie einem zweiten Radius R2 mit einem zweiten axialen Offset O2a und einem zweiten radialen Offset O2r zusammen. Der Übergang ist durch einen Wendepunkt W22 bezeichnet. An den zweiten Radius R2 schließt sich eine zur Achse L12, PE, PE* parallele Gerade G3 tangential an. In der Mittelebene EM ist die Tangente T22 an die Mittellinie M22 eingezeichnet, die eine Längsachse L12, PE, PE* unter dem Winkel $\alpha/2$ schneidet. Eine Senkrechte auf der Tangente T22 schneidet die Längsachse L12, PE; PE" im Bezugsmittelpunkt MB, MBE eines Bezugsradius RB. Ein weiterer Bezugsradius RZ ist um den Bahnmittelpunkt M, ME angetragen. Links von der Mittelebene EM zur Anschlußseite 19 hin verläuft die Mittellinie M22 innerhalb des Radius RB und außerhalb des Radius RZ. Rechts der Mittelebene EM zur Öffnungsseite 20 hin verläuft die Mittellinie M22 im wesentlichen außerhalb des Radius RB. Die radiale Kugelbewegung einer Kugel auf ihrem Weg längs der Kugelbahn in Bezug zum Bahnmittelpunkt M, ME ist mit e bezeichnet. Dies entspricht der Mindestdicke des Kugelkäfigs im Bereich der Käfigfenster, wobei ein Sicherheitszuschlag zur Vermeidung von Kantenträgern erforderlich ist.

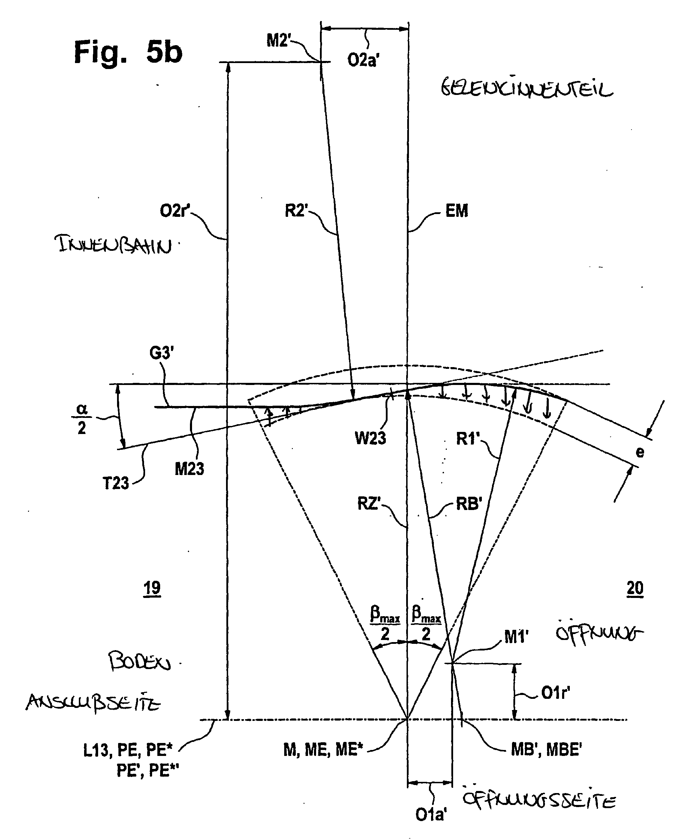

In Figur 5b sind die zu den Bahngrundlinien parallel verlaufenden Bahnmittellinien M23 der zugehörigen inneren Kugelbahnen 23 nach einer der Figuren 1 bis 3 dargestellt. Die Mittellinie M23 einer Bahn 23 im Innentell 13 setzt sich aus einem ersten Radius R1' um einen Mittelpunkt M1' sowie einem zweiten Radius R2' um einen Mittelpunkt M2' zusammen. Der Übergang ist durch einen Wendepunkt W23 bezeichnet. An den zweiten Radius R2' schließt sich eine zur Achse L13, PE, PE*, PE', PE*' parallele Gerade G3' an. Hierbei weist der Mittelpunkt M1' einen axialen Versatz O1a' und einen radialen Versatz O1r' auf und der Mittelpunkt M2' einen axialen Versatz O2a' und einen radialen Versatz O2r'. In der Mittelebene EM ist die Tangente T23 an die Mittellinie M23 eingezeichnet, die eine Längsachse L13, PE, PE*, PE', PE*' unter dem Winkel $\alpha/2$ schneidet. Eine Senkrechte auf der Tangente T23 schneidet die Längsachse L13, PE; PE*, PE', PE*' im Bezugsmittelpunkt MB', MBE' eines Bezugsradius RB'. Ein weiterer Bezugsradius RZ' ist um den Bahnmittelpunkt M, ME angetragen. Rechts von der Mittelebene EM zur Öffnungsseite 20 verläuft die Mittellinie M23 innerhalb des Radius RB' und außerhalb des Radius RZ'. Links von der Mittelebene EM zur Anschlußseite 19 hin verläuft die Mittellinie M23 zumindest überwiegend außerhalb des Radius RB'. Die radiale Kugelbewegung einer Kugel auf ihrem Weg längs der Kugelbahn in Bezug zum Bahnmittelpunkt M, ME ist mit e bezeichnet. Die beiden Mittellinien M22, M23 der Figuren 5a, 5b schneiden sich in der Gelenkmittelebene EM unter dem Winkel $\alpha$ und verlaufen spiegelsymmetrisch zu dieser Mittelebene.

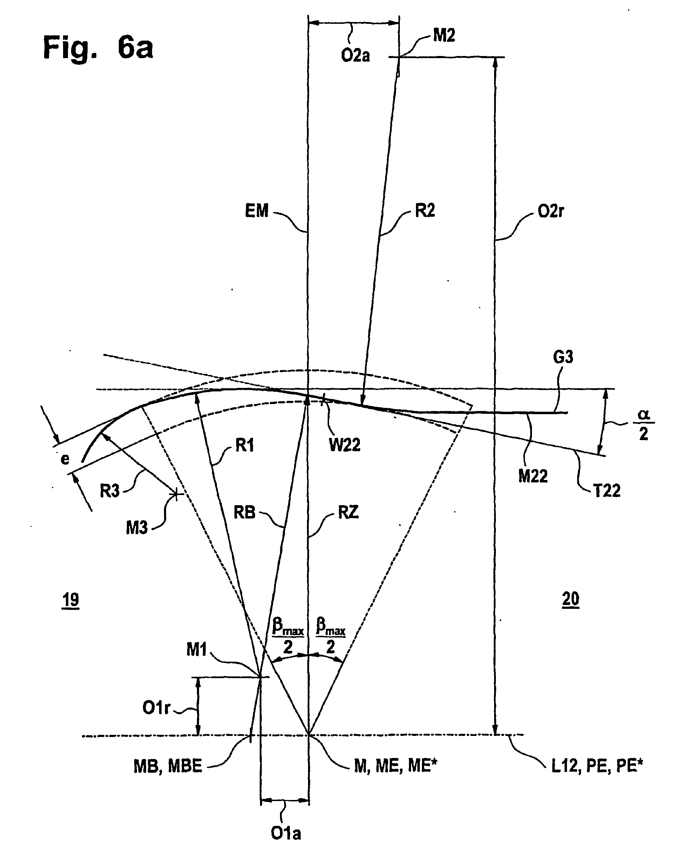

In Figur 6a ist die zu einer Bahngrundlinie parallel verlaufende Bahnmittellinie M22 einer äußeren Kugelbahn 22 in einer abgewandelten Ausführung dargestellt. Die Mittellinie M22 einer Bahn im Außenteil setzt sich aus einem ersten Radius R1 um einen Mittelpunkt M1 mit dem ersten axialen Offset O1a und einem radialen Offset O1r sowie einem zweiten Radius R2 mit einem zweiten axialen Offset 02a und einem zweiten radialen Offset O2r sowie einem dritten Radius R3, der sich entgegengesetzt zum Radius R2 an den Radius R1 anschließt, kleiner als dieser Radius R1 ist und in gleichem Sinn gekrümmt ist, wobei die Lage seines Mittelpunktes M3 nicht näher vermaßt ist, zusammen. Der Übergang zwischen erstem und zweitem Radius ist durch einen Wendepunkt W22 bezeichnet. An den zweiten Radius R2 schließt sich eine zur Achse L12, PE, PE* parallele Gerade G3 tangential an. In der Mittelebene EM ist die Tangente T22 and die Mittellinie M22 eingezeichnet, die eine Längsachse L12, PE, PE* unter dem Winkel $\alpha/2$ schneidet. Eine Senkrechte auf der Tangente T22 schneidet die Längsachse L12, PE; PE* im Bezugsmittelpunkt MB, MBE eines Bezugsradius RB. Ein weiterer Bezugsradius ist um den Bahnmittelpunkt M, ME angetragen. Links von der Mittelebene zur Anschlußseite 19 hin verläuft die Mittellinie M22 innerhalb des Radius RB und außerhalb des Radius RZ. Rechts von der Mittelebene EM zur Öffnungsseite 20 hin verläuft die Mittellinie M22 überwiegend außerhalb des Radius RB. Die radiale Kugelbewegung einer Kugel auf ihrem Weg längs der Kugelbahn in Bezug zum Bahnmittelpunkt M, ME ist mit e bezeichnet. Dies entspricht der Mindestdicke des Kugelkäfigs im Bereich der Käfigfenster, wobei ein Sicherheitszuschlag zur Vermeidung von Kantenträgern erforderlich ist.

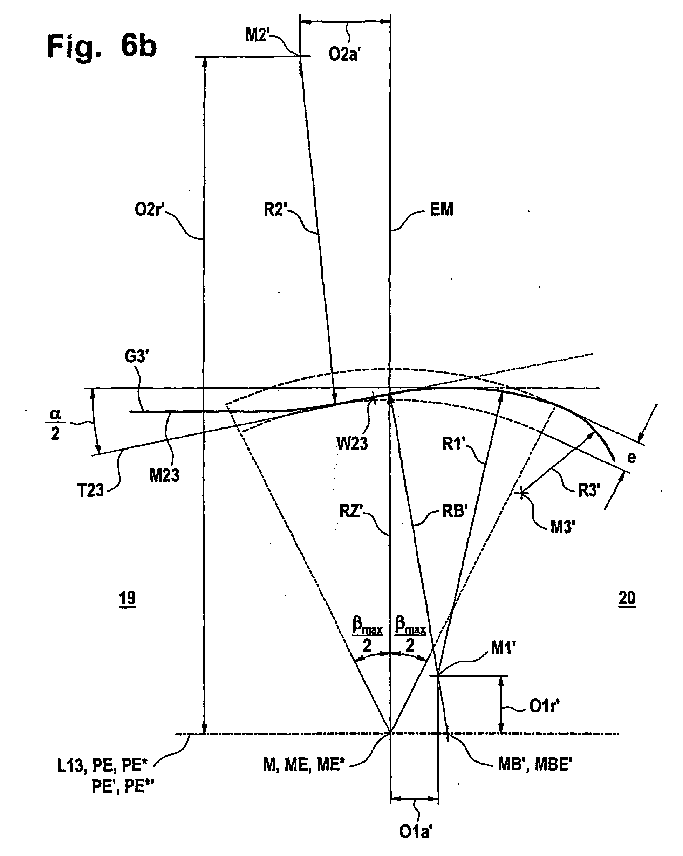

In Figur 6b sind die zu den Bahngrundlinien parallel verlaufenden Bahnmittellinien M23 der zugehörigen inneren Kugelbahnen 23 in einer abgewandelten Ausführung dargestellt. Die Mittellinie M23 einer Bahn 23 im Innenteil 13 setzt sich aus einem ersten Radius R1' um einen Mittelpunkt M1', einem zweiten Radius R2' um einen Mittelpunkt M2' sowie einem dritten Radius R3', der sich entgegengesetzt zum Radius R2' an den Radius R1' anschließt, kleiner als dieser Radius R1 ist und in gleichem Sinn gekrümmt ist, zusammen. An den zweiten Radius R2' schließt sich eine zur Achse L13, PE, PE*, PE', PE*' parallele Gerade G3' an. Hierbei weist der Mittelpunkt M1' einen axialen Versatz O1a' und einen radialen Versatz O1r' auf und der Mittelpunkt M2' einen axialen Versatz O2a' und einen radialen Versatz O2r'. Die Lage des Mittelpunktes M3' ist nicht näher vermaßt. In der Mittelebene EM ist die Tangente T23 an die Mittellinie M23 eingezeichnet, die eine Längsachse L13, PE, PE*, PE', PE*' unter dem Winkel $\alpha/2$ schneidet. Eine Senkrechte auf der Tangente T23 schneidet die Längsachse L12, PE; PE*, PE'; PE*' im Bezugsmittelpunkt MB', MBE' eines Bezugsradius RB'. Ein weiterer Bezugsradius RZ' ist um den Bahnmittelpunkt M, ME angetragen. Rechts von der Mittelebene EM zur Öffnungsseite 20 hin verläuft die Mittellinie M23 innerhalb des Radius RB' und außerhalb des Radius RZ'. Links von der Mittelebene EM zur Anschlußseite 19 hin verläuft die Mittellinie M23 überwiegend außerhalb des Radius RB'. Die radiale Kugelbewegung einer Kugel auf ihrem Weg längs der Kugelbahn in Bezug zum Bahnmittelpunkt M, ME ist mit e bezeichnet. Die beiden Mittellinien M22, M23 der Figuren 6a, 6b schneiden sich in der Gelenkmittelebene EM unter dem Winkel $\alpha$ und verlaufen spiegelsymmetrisch zu dieser Mittelebene.

Bezugszeichenliste

11    Gelenk
12    Gelenkaußenteil
13    Gelenkinnenteil

14    Kugel
15    Käfig
16    Käfigaußenfläche
17    Käfiginnenfläche
18    Käfigfenster
19    Boden
20    Öffnung
21    Einsticköffnung
22    äußere Kugelbahn
23    innere Kugelbahn
24    Bahngrund (äußere Kugelbahn)
25    Bahngrund (innere Kugelbahn)
26    Bahnflanke
27    Bahnflanke

EM    Gelenkmittelebene
L12    Längsachse Außenteil
L13    Längsachse Innenteil
M22    Mittellinie Bahn 22
M23    Mittellinie Bahn 23

## Patentansprüche

1.    Gleichlaufgelenk in Form eines Gegenbahngelenkes mit den Merkmalen:

ein Gelenkaußenteil (12), das eine Längsachse (L12) und axial zueinander entgegengesetzt liegend eine Anschlußseite und eine Öffnungsseite hat und das äußere Kugelbahnen (22) aufweist,

ein Gelenkinnenteil (13), das eine Längsachse (L13) und Anschlußmittel für eine zur Öffnungsseite des Gelenkaußenteils (12) weisende Welle hat und das innere Kugelbahnen (23) aufweist,

die äußeren Kugelbahnen (22) und die inneren Kugelbahnen (23) bilden Bahnpaare (22, 23) miteinander,

die Bahnpaare nehmen jeweils eine drehmomentübertragende Kugel (14) auf, ein ringförmiger Kugelkäfig (15) sitzt zwischen Gelenkaußenteil (12) und Gelenkinnenteil (13) und weist umfangsverteilte Käfigfenster (18) auf, die jeweils zumindest eine der drehmomentübertragenden Kugeln aufnehmen,

die Mittelpunkte der Kugeln (14) werden vom Käfig (15) in einer Gelenkmittelebene (EM) gehalten und bei Gelenkbeugung auf die winkelhalbierende Ebene zwischen den Längsachsen (L12, L13) geführt,

die Mittellinien (M22, M23) der Kugelbahnen (22, 23) von Bahnpaaren liegen in Radialebenen (R) durch das Gelenk,

für einen ersten Teil der Bahnpaare öffnet sich der Öffnungswinkel $\alpha_1$ zwischen Tangenten ($T22_1$', $T23_1$') an Bahngrundlinien, die parallel zu den Tangenten ($T22_1$, $T23_1$) an die Mittellinien ($M22_1$, $M23_1$) der Kugelbahnen ($22_1$, $23_1$) in der Gelenkmittelebene (EM) bei gestrecktem Gelenk mit zusammenfallenden Längsachsen (L12, L13) verlaufen, von der Anschlußseite zur Öffnungsseite,

für einen zweiten Teil der Bahnpaare öffnet sich der Öffnungswinkel $\alpha_2$ zwischen Tangenten ($T22_2$', $T23_2$') an Bahngrundlinien, die parallel zu den Tangenten ($T22_2$, $T23_2$) an die Mittellinien ($M22_2$, $M23_2$) der Kugelbahnen ($22_2$, $23_2$) in der Gelenkmittelebene (EM) bei gestrecktem Gelenk mit zusammenfallenden Längsachsen (L12, L13) verlaufen, von der Öffnungsseite zur Anschlußseite, hierbei gilt für die Mittellinien der zweiten Bahnpaare:

im Gelenkaußenteil (12) verläßt die Mittellinie ($M22_2$) der Kugelbahnen ($22_2$) im Bereich von der Gelenkmittelebene (EM) bis zur Anschlußseite hin jeweils einen Bezugsradius (RB), dessen Radiusmittelpunkt (MB) im Schnittpunkt einer Senkrechten auf der Tangenten ($T22_2$) an die Mittellinie ($M22_2$) der Kugelbahn ($22_2$) in der Gelenkmittelebene (EM) und der Längsachse (L12) liegt, radial nach innen,

im Gelenkinnenteil (13) verläßt die Mittellinie ($M23_2$) der Kugelbahnen ($23_2$) im Bereich von der Gelenkmittelebene (EM) bis zur Öffnungsseite hin jeweils einen Bezugsradius (RB'), dessen Radiusmittelpunkt (MB') im Schnittpunkt einer Senkrechten auf der Tangenten ($T23_2$) an die Mittellinie ($M23_2$) der Kugelbahn ($23_2$) in der Gelenkmittelebne (EM) und der Längsachse (L13) liegt, radial nach innen,

im Gelenkaußenteil (12) wandert die Mittellinie ($M22_2$) der Kugelbahnen ($22_2$) im Bereich von der Gelenkmittelebene (EM) bis zur Öffnungsseite hin über den genannten Bezugsradius (RB) radial nach außen hinaus und

im Gelenkinnenteil (13) wandert die Mittellinie (M23$_2$) der Kugelbahnen (23$_2$) im Bereich von der Gelenkmittelebene (EM) bis zur Anschlußseite hin über den genannten Bezugsradius (RB') radial nach außen hinaus.

**2.** Gleichlaufgelenk nach Anspruch 1 mit den weiteren Merkmalen der zweiten Bahnpaare:

im Gelenkaußenteil (12) ist der örtliche Krümmungsradius (R1) der Mittellinie (M22$_2$) in der Gelenkmittelebene (EM) kleiner als der Bezugsradius (RB),
im Gelenkinnenteil (13) ist der örtliche Krümmungsradius (R1') der Mittellinie (M23$_2$) in der Gelenkmittelebene (EM) kleiner als der Bezugsradius (RB').

**3.** Gleichlaufgelenk nach einem der Ansprüche 1 oder 2 mit den weiteren Merkmalen der zweiten Bahnpaare:

im Gelenkaußenteil (12) verläuft die Mittellinie (M22$_2$) der Kugelbahnen (22$_2$) von der Gelenkmittelebene (EM) zur Anschlußseite hin jeweils radial außerhalb eines Bezugsradius (RZ), dessen Radiusmittelpunkt im Gelenkmittelpunkt (M) liegt, und
im Gelenkinnenteil (13) verläuft die Mittellinie (M23$_2$) der Kugelbahnen (23$_2$) von der Gelenkmittelebene (EM) zur Öffnungsseite hin jeweils radial außerhalb eines Bezugsradius (RZ'), dessen Radiusmittelpunkt im Gelenkmittelpunkt (M) liegt.

**4.** Gelenk nach einem der Ansprüche 1 bis 3 mit den weiteren Merkmalen der zweiten Bahnpaare:

im Gelenkaußenteil (12) verläuft die Mittellinie (M22$_2$) der Kugelbahnen (22$_2$) von der Gelenkmittelebene (EM) zur Öffnungsseite hin jeweils radial außerhalb des Bezugsradius (RB) und
im Gelenkinnenteil (13) verläuft die Mittellinie der Kugelbahnen (23$_2$) von der Gelenkmittelebene (EM) zur Anschlußseite hin jeweils radial außerhalb des Bezugsradius (RB').

**5.** Gleichlaufgelenk nach einem der Ansprüche 1 bis 4 mit den weiteren Merkmalen der zweiten Bahnpaare:

im Gelenkaußenteil (12) verläuft die Mittellinie (M22$_2$) der Kugelbahnen (22$_2$) von der Gelenkmittelebene (EM) zur Öffnungsseite hin jeweils radial innerhalb eines Bezugsradius (RZ) um den Gelenkmittelpunkt (M) und
im Gelenkinnenteil (13) verläuft die Mittellinie (M23$_2$) der Kugelbahnen (23$_2$) von der Gelenkmittelebene (EM) zur Anschlußseite hin jeweils radial innerhalb eines Bezugsradius (RZ') um den Gelenkmittelpunkt (M).

**6.** Gleichlaufgelenk nach einem der Ansprüche 1 bis 5 mit den Merkmalen der zweiten Bahnpaare:

die Mittellinien (M22$_2$, M23$_2$) der äußeren Kugelbahnen und inneren Kugelbahnen umfassen jeweils zumindest zwei entgegengesetzt gekrümmte Bogenabschnitte, die in einem Wendepunkt aneinander anschließen,
die Wendepunkte (W22$_2$) der äußeren Kugelbahnen (22$_2$) liegen mit Abstand von der Mittelebene (EM) zur Öffnungsseite,
die Wendepunkte (W23$_2$) der inneren Kugelbahnen (23$_2$) liegen mit Abstand von der Mittelebene (EM) zur Anschlußseite,
die Wendepunkte (W22$_2$, W23$_2$) liegen jeweils unterhalb eines Maximums des Abstands der Mittellinien (M22$_2$, M23$_2$) von den Längsachsen (L12, L13).

**7.** Gleichlaufgelenk nach einem der Ansprüche 1 bis 6 mit den Merkmalen der zweiten Bahnpaare:

die Bahnmittellinien (M22$_2$) der äußeren Kugelbahnen (22$_2$) haben einen ersten Bogen mit dem Radius (R1), dessen Mittelpunkt (M1) um einen ersten axialen Offset (O1a) von der Mittelebene (EM) des Gelenks zur Anschlußseite hin versetzt liegt und um einen ersten radialen Offset (O1r) von der Längsachse (L12) zur Kugelbahn hin versetzt liegt und anschließend an diesen Bogen zur Anschlußseite hin einen zweiten Bogen mit dem Radius (R2), dessen Mittelpunkt (M2) um einen zweiten axialen Offset (O2a) von der Mittelebene (EM) des Gelenks zur Öffnungsseite hin versetzt liegt und um einen zweiten radialen Offset (O2r), der größer ist als die Summe aus dem ersten Radius (R1) und dem ersten radialen Offset (O1r), von der Längsachse (L12) nach außen versetzt liegt,
die Bahnmittellinien (M23$_2$) der inneren Kugelbahnen (23$_2$) haben einen ersten Bogen mit dem Radius (R1'), dessen Mittelpunkt (M1') um einen ersten axialen Offset (O1a') von der Mittelebene (EM) des Gelenks zur Öffnungsseite hin versetzt liegt und um einen ersten radialen Offset (O1r') von der Längsachse (L13) zur Kugelbahn hin versetzt liegt und anschließend an diesen Bogen zur Öffnungsseite hin einen zweiten Bogen mit dem Radius (R2'), dessen Mittelpunkt (M2') um einen zweiten axialen Offset (O2a') von der Mittelebene (EM) des Gelenks zur Anschlußseite hin versetzt liegt und um einen zweiten radialen Offset (O2r'), der größer ist als die Summe aus dem ersten Radius (R1') und dem ersten radialen Offset (O1r'), von der Längsachse (L13) nach außen versetzt liegt.

8. Gleichlaufgelenk nach einem der Ansprüche 1 bis 7 mit den weiteren Merkmalen der zweiten Bahnpaare:

   der Krümmungsradius der Mittellinien (M22) der äußeren Kugelbahnen (22) nimmt im Verlauf von der Mittelebene (EM) zur Anschlußseite (19) ab und der Krümmungsradius der Mittel-Linien (M23) der inneren Kugelbahnen (23) nimmt im Verlauf von der Mittelebene (EM) zur Öffnungsseite (20) ab.

9. Gleichlaufgelenk nach Anspruch 8, mit den weiteren Merkmalen der zweiten Bahnpaare:

   die Bahnmittellinien (M22$_2$) der äußeren Kugelbahnen (22$_2$) haben einen dritten Bogen mit dem Krümmungsradius (R3), der sich tangential mit gleichem Krümmungssinn an den ersten Bogen mit dem Krümmungsradius (R1) anschließt und dessen Krümmungsradius (R3) kleiner ist, als der Krümmungsradius (R1) und
   die Bahnmittellinien (M23$_2$) der inneren Kugelbahnen (23$_2$) haben einen dritten Bogen mit dem Krümmungsradius (R3'), der sich tangential mit gleichem Krümmungssinn an den ersten Bogen mit dem Krümmungsradius (R1') anschließt und dessen Krümmungsradius (R3') kleiner ist, als der Krümmungsradius (R1').

10. Gelenk nach einem der Ansprüche 1 bis 9,
    **dadurch gekennzeichnet,**
    **daß** sich an den zweiten Bahnpaaren im Verlauf der Mittellinie (M22$_2$) der äußeren Kugelbahnen (22$_2$) zur Öffnungsseite hin an den zweiten Bogen eine achsparallele Gerade (G3) anschließt und sich im Verlauf der Mittellinie (R23) der inneren Kugelbahnen (23) im Anschluß an den zweiten Bogen (R2') zur Anschlußseite hin eine achsparallele Gerade (G3') anschließt.

11. Gelenk nach einem der Ansprüche 1 bis 9,
    **dadurch gekennzeichnet,**
    **daß** sich an den zweiten Bahnpaaren im Verlauf der Mittellinie (M22) der äußeren Kugelbahnen (22) zur Öffnungsseite hin an den zweiten Bogen eine sich der Längsachse (L12) annähernde Gerade anschließt und sich im Verlauf der Mittellinie (R23) der inneren Kugelbahnen (23) im Anschluß an den zweiten Bogen (R2') zur Anschlußseite hin eine sich der Längsachse (L13) annähernde Gerade anschließt.

12. Gelenk nach einem der Ansprüche 1 bis 11,
    **dadurch gekennzeichnet,**
    **daß** sich an den zweiten Bahnpaaren die Mittellinien (M22, M23) der Kugelbahnen (22, 23) in der Gelenkmittelebene (EM) unter einem Winkel von 4 bis 32° schneiden, wobei die Tangenten (T22, T23) an die Mittellinien (M22, M23) der Kugelbahnen (22, 23) aller Bahnpaare bei gestrecktem Gelenk einen gleich großen Öffnungswinkel α bilden.

13. Gelenk nach einem der Ansprüche 1 bis 12,
    **dadurch gekennzeichnet,**
    **daß** erste Bahnpaare (22$_1$, 23$_1$) und zweite Bahnpaare (22$_2$, 23$_2$) über dem Umfang abwechselnd angeordnet sind.

14. Gelenk nach einem der Ansprüche 1 bis 13,
    **dadurch gekennzeichnet,**
    **daß** die Radialebenen R$_1$ der ersten Bahnpaare und die Radialebenen R$_2$ der zweiten Bahnpaare in Umfangsrichtung gleiche Teilungswinkel aufweisen.

15. Gelenk nach einem der Ansprüche 1 bis 14,
    **dadurch gekennzeichnet,**
    **daß** die Verläufe der ersten Bahnpaare (22$_1$, 23$_1$) und der zweiten Bahnpaare (22$_2$, 23$_2$) nicht symmetrisch zueinander in Bezug auf die Gelenkmittelebene (EM) sind.

16. Gelenk nach einem der Ansprüche 1 bis 15,
    **dadurch gekennzeichnet,**
    **daß** der Rollkreisradius (PCR$_1$) der Kugeln (14$_1$) der ersten Bahnpaare und der Rollkreisradius (PCR$_2$) der Kugeln

($14_2$) der zweiten Bahnpaare unterschiedlich groß ist, wobei ihr Größenverhältnis im Bereich von 0,8 bis 1,0 liegt.

**17.** Gleichlaufgelenk in Form eines Gegenbahngelenkes mit den Merkmalen

ein Gelenkaußenteil (12), das eine Längsachse (L12) und axial zueinander entgegengesetzt liegend eine Anschlußseite und eine Öffnungsseite hat und das äußere Kugelbahnen ($22_1$, $22_2$) aufweist,

ein Gelenkinnenteil (13), das eine Längsachse (L13) und Anschlußmittel für eine zur Öffnungsseite des Gelenkaußenteils (12) weisende Welle hat und das innere Kugelbahnen ($23_1$, $23_2$) aufweist,

die äußeren Kugelbahnen ($22_1$, $22_2$) und die inneren Kugelbahnen ($23_1$, $23_2$) bilden Bahnpaare ($22_1$, $23_1$; $22_2$, $23_2$) miteinander,

die Bahnpaare nehmen jeweils eine drehmomentübertragende Kugel (14) auf, ein ringförmiger Kugelkäfig (15) sitzt zwischen Gelenkaußenteil (12) und Gelenkinnenteil (13) und weist umfangsverteilte Käfigfenster (18) auf, die jeweils zumindest eine der drehmomentübertragenden Kugeln aufnehmen,

die Mittelpunkte der Kugeln (14) werden vom Käfig (15) in einer Gelenkmittelebene (EM) gehalten und bei Gelenkbeugung auf die winkelhalbierende Ebene zwischen den Längsachsen (L12, L13) geführt,

die Mittellinien (M22, M23) der Kugelbahnen ($22_1$, $23_1$, $22_2$, $23_2$) von Bahnpaaren liegen in Paaren von Bahnebenen (BE, BE*), die im wesentlichen parallel zueinander und symmetrisch zu Radialebenen (R1, R2) durch die Längsachsen (L12, L13) verlaufen,

für einen ersten Teil der Bahnpaare öffnet sich der Öffnungswinkel $\alpha_1$ zwischen Tangenten ($T22_1$', $T23_1$') an Bahngrundlinien, die parallel zu Tangenten ($T22_1$, $T23_2$) an die Mittellinien ($M22_1$, $M23_1$) der Kugelbahnen ($22_1$, $23_1$) in der Gelenkmittelebene (EM) bei gestrecktem Gelenk mit zusammenfallenden Längsachsen (L12, L13) verlaufen von der Anschlußseite zur Öffnungsseite,

für einen zweiten Teil der Bahnpaare öffnet sich der Öffnungswinkel $\alpha_2$ zwischen Tangenten ($T22_2$', $T23_2$') an Bahngrundlinien, die parallel zu Tangenten ($T22_2$, $T23_2$) an die Mittellinien ($M22_2$, $M23_2$) der Kugelbahnen ($22_2$, $23_2$) in der Gelenkmittelebene (EM) bei gestrecktem Gelenk mit zusammenfallenden Längsachsen (L12, L13) verlaufen, von der Öffnungsseite zur Anschlußseite, hierbei gilt für die Mittellinien der zweiten Bahnpaare ($22_2$, $23_2$)

im Gelenkaußenteil (12) verläßt die Mittellinie ($M22_2$) der Kugelbahnen ($22_2$) im Bereich von der Gelenkmittelebene (EM) bis zur Anschlußseite hin jeweils einen Bezugsradius (RB), dessen Radiusmittelpunkt (MBE) im Schnittpunkt einer Senkrechten auf der Tangenten ($T22_2$) an die Mittellinie ($M22_2$) der Kugelbahn ($22_2$) in der Gelenkmittelebene (EM) und einer Parallelachse (PE, PE*) zur Längsachse (L12) durch eine Bahnebene (BE, BE*) liegt, radial nach innen,

im Gelenkinnenteil (13) verläßt die Mittellinie ($M23_2$) der Kugelbahnen ($23_2$) im Bereich von der Gelenkmittelebene (EM) bis zur Öffnungsseite hin jeweils einen Bezugsradius (RB'), dessen Radiusmittelpunkt (MBE') im Schnittpunkt einer Senkrechten auf der Tangenten ($T23_2$) an die Mittellinie ($M23_2$) der Kugelbahn (23) in der Gelenkmittelebene (EM) und einer Parallelachse (PE, PE*) zur Längsachse (L13) durch eine Bahnebene (BE, BE*) liegt, radial nach innen,

im Gelenkaußenteil (12) wandert die Mittellinie ($M22_2$) der Kugelbahnen ($22_2$) im Bereich von der Gelenkmittelebene (EM) bis zur Öffnungsseite hin über den genannten Bezugsradius (RB) radial nach außen hinaus und

im Gelenkinnenteil (13) wandert die Mittellinie ($M23_2$) der Kugelbahnen ($23_2$) im Bereich von der Gelenkmittelebene (EM) bis zur Anschlußseite hin über den genannten Bezugsradius (RB') radial nach außen hinaus.

**18.** Gleichlaufgelenk nach Anspruch 17 mit den weiteren Merkmalen der zweiten Bahnpaare:

im Gelenkaußenteil (12) ist der örtliche Radius (R1) der Mittellinie ($M22_2$) in der Gelenkmittelebene (EM) kleiner als der Bezugsradius (RB),

im Gelenkinnenteil (13) ist der örtliche Radius (R1') der Mittellinie ($M23_2$) in der Gelenkmittelebene (EM) kleiner als der Bezugsradius (RB').

**19.** Gleichlaufgelenk nach einem der Ansprüche 17 oder 18 mit den weiteren Merkmalen der zweiten Bahnpaare:

im Gelenkaußenteil (12) verläuft die Mittellinie ($M22_2$) der Kugelbahnen ($22_2$) von der Gelenkmittelebene (EM) zur Anschlußseite hin jeweils radial außerhalb eines Bezugsradius' (RZ), dessen Radiusmittelpunkt in der Gelenkmittelebene (EM) auf einer der Parallelachsen (PE, PE*) liegt, und

im Gelenkinnenteil (13) verläuft die Mittellinie ($M23_2$) der Kugelbahnen ($23_2$) von der Gelenkmittelebene (EM) zur Öffnungsseite hin jeweils radial außerhalb eines Bezugsradius' (RZ'), dessen Radiusmittelpunkt in der Gelenkmittelebene (EM) auf einer der Parallelachsen (PE, PE*) liegt.

**20.** Gelenk nach einem der Ansprüche 17 bis 19 mit den weiteren Merkmalen der zweiten Bahnpaare:

im Gelenkaußenteil (12) verläuft die Mittellinie (M22$_2$) der Kugelbahnen (22$_2$) von der Gelenkmittelebene (EM) zur Öffnungsseite hin jeweils radial außerhalb des Bezugsradius (RB) und

im Gelenkinnenteil (13) verläuft die Mittellinie der Kugelbahnen (23$_2$) von der Gelenkmittelebene (EM) zur Anschlußseite hin jeweils radial außerhalb des Bezugsradius (RB').

21. Gleichlaufgelenk nach einem der Ansprüche 17 bis 20 mit den weiteren Merkmalen der zweiten Bahnpaare:

im Gelenkaußenteil (12) verläuft die Mittellinie (M22$_2$) der Kugelbahnen (22$_2$) von der Gelenkmittelebene (EM) zur Öffnungsseite hin jeweils radial innerhalb eines Bezugsradius (RZ), dessen Radiusmittelpunkt (ME) in der Gelenkmittelebene (EM) auf einer der Parallelachsen (PE, PE*) liegt,

im Gelenkinnenteil (13) verläuft die Mittellinie (M23$_2$) der Kugelbahnen (23$_2$) von der Gelenkmittelebene (EM) zur Anschlußseite hin jeweils radial innerhalb eines Bezugsradius (RZ), dessen Radiusmittelpunkt (ME) in der Gelenkmittelebene (EM) auf einer der Parallelachsen (PE, PE*) liegt.

22. Gleichlaufgelenk nach einem der Ansprüche 17 bis 21 mit den Merkmalen der zweiten Bahnpaare:

die Mittellinien (M22$_2$, M23$_2$) der äußeren Kugelbahnen und inneren Kugelbahnen umfassen jeweils zumindest zwei entgegengesetzt gekrümmte Bogenabschnitte, die in einem Wendepunkt aneinander anschließen,

die Wendepunkte (W22$_2$) der äußeren Kugelbahnen (22$_2$) liegen in einer Bahnebene (BE, BE*) mit Abstand von der Mittelebene (EM) zur Öffnungsseite,

die Wendepunkte (W23) der inneren Kugelbahnen (23$_2$) liegen in einer Bahnebene (BE, BE*) mit Abstand von der Mittelebene (EM) zur Anschlußseite,

die Wendepunkte (W22$_2$, W23$_2$) liegen jeweils unterhalb eines Maximums des Abstands der Mittellinien (M22$_2$, M23$_2$) von den Parallelachsen (PE, PE*).

23. Gleichlaufgelenk nach einem der Ansprüche 17 bis 22 mit den Merkmalen der zweiten Bahnpaare:

die Bahnmittellinien (M22$_2$) der äußeren Kugelbahnen (22$_2$) haben einen ersten Bogen mit dem Radius (R1), dessen Mittelpunkt (M1) in einer Bahnebene (BE, BE*) um einen ersten axialen Offset (O1a) von der Mittelebene (EM) des Gelenks zur Anschlußseite hin versetzt liegt und um einen ersten radialen Offset (O1r) von einer Parallelachse (PE, PE*) zur Kugelbahn hin versetzt liegt und

anschließend an diesen Bogen zur Anschlußseite hin einen zweiten Bogen mit dem Radius (R2), dessen Mittelpunkt (M2) in der Bahnebene (BE, BE*) um einen zweiten axialen Offset (O2a) von der Mittelebene (EM) des Gelenks zur Öffnungsseite hin versetzt liegt, und um einen zweiten radialen Offset (O2r), der größer ist als die Summe aus dem ersten Radius (R1) und dem ersten radialen Offset (O1r), von der Parallelachse (PE, PE*) nach außen hin versetzt liegt,

die Bahnmittellinien (M23$_2$) der inneren Kugelbahnen (23$_2$) haben einen ersten Bogen mit dem Radius (R1'), dessen Mittelpunkt (M1') in einer Bahnebene (BE, BE*) um einen ersten axialen Offset (O1a') von der Mittelebene (EM) des Gelenks zur Öffnungsseite hin versetzt liegt und um einen ersten radialen Offset (O1r') von einer Parallelachse (PE, PE*) zur Kugelbahn hin versetzt liegt und anschließend an diesen Bogen zur Öffnungsseite hin einen zweiten Bogen mit dem Radius (R2'), dessen Mittelpunkt (M2') in der Bahnebene (BE, BE*) um einen zweiten axialen Offset (02a') von der Mittelebene (EM) des Gelenks zur Anschlußseite hin versetzt liegt und um einen zweiten radialen Offset (O2r'), der größer ist als die Summe aus dem ersten Radius (R1') und dem ersten radialen Offset (O1r'), von der Parallelachse (PE, PE') nach außen hin versetzt liegt.

24. Gleichlaufgelenk nach einem der Ansprüche 17 bis 23 mit den weiteren Merkmalen der zweiten Bahnpaare:

der Krümmungsradius der Mittellinien (M22) der äußeren Kugelbahnen (22) nimmt im Verlauf von der Mittelebene (EM) zur Anschlußseite (19) ab und der Krümmungsradius der Mittellinien (M23) der inneren Kugelbahnen (23) nimmt im Verlauf von der Mittelebene (EM) zur Öffnungsseite (20) ab.

25. Gleichlaufgelenk nach Anspruch 24, mit den weiteren Merkmalen der zweiten Bahnpaare:

die Bahnmittellinien (M22$_2$) der äußeren Kugelbahnen (22$_2$) haben einen dritten Bogen mit dem Radius (R3), der sich tangential mit gleichem Krümmungssinn an den ersten Bogen mit dem Radius (R1) anschließt und dessen Radius (R3) kleiner ist, als der Radius (R1) und

die Bahnmittellinien (M23$_2$) der inneren Kugelbahnen (23$_2$) haben einen dritten Bogen mit dem Radius (R3'), der sich tangential mit gleichem Krümmungssinn an den ersten Bogen mit dem Radius (R1') anschließt und dessen Radius (R3') kleiner ist, als der Radius (R1').

26. Gelenk nach einem der Ansprüche 17 bis 25,
**dadurch gekennzeichnet,**
**daß** sich an den zweiten Bahnpaaren im Verlauf der Mittellinie (M22$_2$) der äußeren Kugelbahnen (22$_2$) zur Öffnungsseite hin an den zweiten Bogen eine achsparallele Gerade (G3) anschließt und daß sich im Verlauf der Mittellinie (R23$_2$) der inneren Kugelbahnen (23$_2$) im Anschluß an den zweiten Bogen (R2') zur Anschlußseite hin eine achsparallele Gerade (G3') anschließt.

27. Gelenk nach einem der Ansprüche 17 bis 25,
**dadurch gekennzeichnet,**
**daß** sich an den zweiten Bahnpaaren im Verlauf der Mittellinie (M22) der äußeren Kugelbahnen (22) zur Öffnungsseite hin an den zweiten Bogen eine sich der Parallelachse (PE, PE*) annähernde Gerade anschließt und daß sich im Verlauf der Mittellinie (R23) der inneren Kugelbahnen (23) im Anschluß an den zweiten Bogen (R2') zur Anschlußseite hin eine sich der Parallelachse (PE, PE*) annähernde Gerade anschließt.

28. Gelenk nach einem der Ansprüche 17 bis 26,
**dadurch gekennzeichnet,**
**daß** sich an den zweiten Bahnpaaren die Mittellinien (M22, M23) der Kugelbahnen (22, 23) in der Gelenkmittelebene (EM) unter einem Winkel von 4 bis 32° schneiden, wobei die Tangenten (T22, T23) an die Mittellinien (M22, M23) der Kugelbahnen (22, 23) aller Bahnpaare bei gestrecktem Gelenk einen gleich großen Öffnungswinkel $\alpha$ bilden.

29. Gleichlaufgelenk in Form eines Gegenbahngelenkes mit den Merkmalen:

ein Gelenkaußenteil (12), das eine Längsachse (L12) und axial zueinander entgegengesetzt liegend eine Anschlußseite und eine Öffnungsseite hat und das äußere Kugelbahnen (22$_1$, 22$_2$) aufweist,
ein Gelenkinnenteil (13), das eine Längsachse (L13) und Anschlußmittel für eine zur Öffnungsseite des Gelenkaußenteils (12) weisende Welle hat und das innere Kugelbahnen (23$_1$, 23$_2$) aufweist,
die äußeren Kugelbahnen (22$_1$, 22$_2$) und die inneren Kugelbahnen (23$_1$, 23$_2$) bilden Bahnpaare (22$_1$, 23$_1$; 22$_2$, 23$_2$) miteinander,
die Bahnpaare nehmen jeweils eine drehmomentübertragende Kugel (14) auf, ein ringförmiger Kugelkäfig (15) sitzt zwischen Gelenkaußenteil (12) und Gelenkinnenteil (13) und weist umfangsverteilte Käfigfenster (18) auf, die jeweils zumindest eine der drehmomentübertragenden Kugeln aufnehmen,
die Mittelpunkte der Kugeln (14) werden vom Käfig (15) in einer Gelenkmittelebene (EM) gehalten und bei Gelenkbeugung auf die winkelhalbierende Ebene zwischen den Längsachsen (L12, L13) geführt,
die Mittellinien (M22$_1$, M22$_2$) benachbarter Kugelbahnen (22$_1$, 22$_2$) im Gelenkaußenteil (12) liegen in Paaren von ersten Bahnebenen (BE, BE*), die parallel zueinander und symmetrisch zu Radialstrahlen (RS1, RS2) durch den Gelenkmittelpunkt (M) verlaufen,
die Mittellinien (M23$_1$, M23$_2$) benachbarter Kugelbahnen (23$_1$, 23$_2$) im Gelenkinnenteil (13) liegen in Paaren von zweiten Bahnebenen (BE', BE*'), die parallel zueinander und symmetrisch zu Radialstrahlen (RS1, RS2) durch den Gelenkmittelpunkt (M) verlaufen,
die ersten Bahnebenen (BE, BE*) und die zweiten Bahnebenen (BE', BE*') bilden mit Radialebenen (R1, R2) durch die Längsachsen (L12, L13) gleich große, entgegengesetzt angetragene Winkel ($\gamma$, $\gamma$'),
für einen ersten Teil der Bahnpaare öffnet sich der Öffnungswinkel $\alpha_1$ zwischen Tangenten (T22$_1$', T23$_1$') an Bahngrundlinien, die parallel zu Tangenten (T22$_1$, T23$_1$) an die Mittellinien (M22$_1$, M23$_1$) der Kugelbahnen (22$_1$, 23$_1$) in der Gelenkmittelebene (EM) bei gestrecktem Gelenk mit zusammenfallenden Längsachsen (L12, L13) verlaufen von der Anschlußseite zur Öffnungsseite,
für einen zweiten Teil der Bahnpaare öffnet sich der Öffnungswinkel $\alpha_2$ zwischen Tangenten (T22$_2$', T23$_2$') an Bahngrundlinien, die parallel zu Tangenten (T22$_2$, T23$_2$) an die Mittellinien (M22$_2$, M23$_2$) der Kugelbahnen (22$_2$, 23$_2$) in der Gelenkmittelebene (EM) bei gestrecktem Gelenk mit zusammenfallenden Längsachsen (L12, L13) verlaufen, von der Öffnungsseite zur Anschlußseite, hierbei gilt für die Mittellinien der zweiten Bahnpaare
im Gelenkaußenteil (12) verläßt die Mittellinie (M22$_2$) der Kugelbahnen (22$_2$) im Bereich von der Gelenkmittelebene (EM) bis zur Anschlußseite hin jeweils einen Bezugsradius (RB), dessen Radiusmittelpunkt (MBE) Im Schnittpunkt einer Senkrechten auf der Tangenten (T22$_2$) an die Mittellinie (M22$_2$) der Kugelbahn (22$_2$) in der Gelenkmittelebene (EM) und einer Bezugsachse (PE, PE*) durch eine Bahnebene (BE, BE*) liegt, radial nach innen,
im Gelenkinnenteil (13) verläßt die Mittellinie (M23$_2$) der Kugelbahnen (23$_2$) im Bereich von der Gelenkmittelebene (EM) bis zur Öffnungsseite hin jeweils einen Bezugsradius (RB'), dessen Radiusmittelpunkt (MBE') im Schnittpunkt einer Senkrechten auf der Tangenten ($T23_2$) an die Mittellinie ($M23_2$) der Kugelbahn ($23_2$) in der Gelenkmittelebene (EM) und einer Bezugsachse (PE', PE*') durch eine Bahnebene (BE', BE*') liegt, radial nach innen,

im Gelenkaußenteil (12) wandert die Mittellinie ($M22_2$) der Kugelbahnen ($22_2$) im Bereich von der Gelenkmittelebene (EM) bis zur Öffnungsseite hin über den genannten Bezugsradius (RB) radial nach außen hinaus und im Gelenkinnenteil (13) wandert die Mittellinie ($M23_2$) der Kugelbahnen ($23_2$) im Bereich von der Gelenkmittelebene (EM) bis zur Anschlußseite hin über den genannten Bezugsradius (RB') radial nach außen hinaus.

**30.** Gleichlaufgelenk nach Anspruch 29 mit den weiteren Merkmalen der zweiten Bahnpaare:

im Gelankaußenteil (12) ist der örtliche Radius (R1) der Mittellinie ($M22_2$) in der Gelenkmittelebene (EM) kleiner als der Bezugsradius (RB),

Im Gelenkinnenteil (13) Ist der örtliche Radius (R1') der Mittellinie ($M23_2$) in der Gelenkmittelebene (EM) kleiner als der Bezugsradius (RB').

**31.** Gleichlaufgelenk nach einem der Ansprüche 29 oder 30 mit den weiteren Merkmalen der zweiten Bahnpaare:

im Gelenkaußenteil (12) verläuft die Mittellinie ($M22_2$) der Kugelbahnen ($22_2$) von der Gelenkmittelebene (EM) zur Anschlußseite hin jeweils radial außerhalb eines Bezugsradius' (RZ), dessen Radiusmittelpunkt in der Gelenkmittelebene (EM) auf einer der Bezugsachsen (PE, PE*) liegt, und

im Gelenkinnenteil (13) verläuft die Mittellinie ($M23_2$) der Kugelbahnen ($23_2$) von der Gelenkmittelebene (EM) zur Öffnungsseite hin jeweils radial außerhalb eines Bezugsradius' (RZ), dessen Radiusmittelpunkt in der Gelenkmittelebene (EM) auf einer der Bezugsachsen (PE', PE*') liegt.

**32.** Gelenk nach einem der Ansprüche 29 bis 31 mit den weiteren Merkmalen der zweiten Bahnpaare:

im Gelenkaußenteil (12) verläuft die Mittellinie ($M22_2$) der Kugelbahnen ($22_2$) von der Gelenkmittelebene (EM) zur Öffnungsseite hin jeweils radial außerhalb des Bezugsradius (RB) und

im Gelenkinnenteil (13) verläuft die Mittellinie der Kugelbahnen ($23_2$) von der Gelenkmittelebene (EM) zur Anschlußseite hin jeweils radial außerhalb des Bezugsradius (RB').

**33.** Gleichlaufgelenk nach einem der Ansprüche 29 bis 32 mit den weiteren Merkmalen der zweiten Bahnpaare:

im Gelenkaußenteil (12) verläuft die Mittellinie ($M22_2$) der Kugelbahnen ($22_2$) von der Gelenkmittelebene (EM) zur Öffnungsseite hin jeweils radial innerhalb eines Bezugsradius (RZ), dessen Radiusmittelpunkt (ME, ME*) in der Gelenkmittelebene (EM) auf einer der Bezugsachsen (PE; PE*) liegt,

im Gelenkinnentell (13) verläuft die Mittellinie ($M23_2$) der Kugelbahnen ($23_2$) von der Gelenkmittelebene (EM) zur Anschlußseite hin jeweils radial innerhalb eines Bezugsradius (RZ), dessen Radiusmittelpunkt (ME, ME*) in der Gelenkmittelebene (EM) auf einer der Bezugsachsen (PE', PE*') liegt.

**34.** Gleichlaufgelenk nach einem der Ansprüche 29 bis 33 mit den Merkmalen der zweiten Bahnpaare:

die Mittellinien ($M22_2$, $M23_2$) der äußeren Kugelbahnen und inneren Kugelbahnen umfassen jeweils zumindest zwei entgegengesetzt gekrümmte Bogenabschnitte, die in einem Wendepunkt aneinander anschließen,

die Wendepunkte ($W22_2$) der äußeren Kugelbahnen ($22_2$) liegen in einer Bahnebene (BE, BE*) mit Abstand von der Mittelebene (EM) zur Öffnungsseite,

die Wendepunkte (W23) der inneren Kugelbahnen ($23_2$) liegen in einer Bahnebene (BE', BE*') mit Abstand von der Mittelebene (EM) zur Anschlußseite,

die Wendepunkte ($W22_2$, $W23_2$) liegen jeweils unterhalb eines Maximums des Abstands der Mittellinien ($M22_2$, $M23_2$) von den Bezugsachsen (PE, PE*, PE', PE*').

**35.** Gleichlaufgelenk nach einem der Ansprüche 29 bis 34 mit den Merkmalen der zweiten Bahnpaare:

die Bahnmittellinien ($M22_2$) der äußeren Kugelbahnen ($22_2$) haben einen ersten Bogen mit dem Radius (R1), dessen Mittelpunkt (M1) in einer Bahnebene (BE') um einen ersten axialen Offset (O1a) von der Mittelebene (EM) des Gelenks zur Anschlußseite hin versetzt liegt und um einen ersten radialen Offset (O1r) von einer Bezugsachse (PE, PE*) zur Kugelbahn hin versetzt liegt und anschließend an diesen Bogen zur Anschlußseite hin einen zweiten Bogen mit dem Radius (R2), dessen Mittelpunkt (M2) in der Bahnebene (BE, BE*) um einen zweiten axialen Offset (O2a) von der Mittelebene (EM) des Gelenks zur Öffnungsseite hin versetzt liegt und um einen zweiten radialen Offset (O2r), der größer ist als die Summe aus dem ersten Radius (R1) und dem ersten radialen Offset (O1r), von der Bezugsachse (PE, PE*) nach außen hin versetzt liegt, die Bahnmittellinien (M23$_2$) der inneren Kugelbahnen (23$_2$) haben einen ersten Bogen mit dem Radius (R1'), dessen Mittelpunkt (M1') in einer Bahnebene (BE') um einen ersten axialen Offset (O1a') von der Mittelebene (EM) des Gelenks zur Öffnungsseite hin versetzt liegt und um einen ersten Offset (O1r') von einer Bezugsachse (PE', PE*') zur Kugelbahn hin versetzt liegt und anschließend an diesen Bogen zur Öffnungsseite hin einen zweiten Bogen mit dem Radius (R2'), dessen Mittelpunkt (M2') in der Bahnebene (BE', BE*') um einen zweiten axialen Offset (O2a') von der Mittelebene (EM) des Gelenks zur Anschlußseite hin versetzt liegt und um einen zweiten Offset (O2r'), der größer ist als die Summe aus dem ersten Radius (R1') und dem ersten radialen Offset (O1r'), von der Bezugsachse (PE', PE*') nach außen hin versetzt liegt.

**36.** Gleichlaufgelenk nach einem der Ansprüche 29 bis 35 mit den weiteren Merkmalen der zweiten Bahnpaare:

der Krümmungsradius der Mittellinien (M22) der äußeren Kugelbahnen (22) nimmt im Verlauf von der Mittelebene (EM) zur Anschlußseite (19) ab und der Krümmungsradius der Mittellinien (M23) der inneren Kugelbahnen (23) nimmt im Verlauf von der Mittelebene (EM) zur Öffnungsseite (20) ab.

**37.** Gleichlaufgelenk nach Anspruch 36, mit den weiteren Merkmalen der zweiten Bahnpaare:

die Bahnmittellinien (M22$_2$) der äußeren Kugelbahnen (22$_2$) haben einen dritten Bogen mit dem Radius (R3), der sich tangential mit gleichem Krümmungssinn an den ersten Bogen mit dem Radius (R1) anschließt und dessen Radius (R3) kleiner ist, als der Radius (R1) und die Bahnmittellinien (M23$_2$) der inneren Kugelbahnen (23$_2$) haben einen dritten Bogen mit dem Radius (R3'), der sich tangential mit gleichem Krümmungssinn an den ersten Bogen mit dem Radius (R1') anschließt und dessen Radius (R3') kleiner ist, als der Radius (R1').

**38.** Gelenk nach einem der Ansprüche 29 bis 37,
**dadurch gekennzeichnet,**
**daß** sich an den zweiten Bahnpaaren im Verlauf der Mittellinie (M22$_2$) der äußeren Kugelbahnen (22$_2$) zur Öffnungsseite hin an den zweiten Bogen eine parallel zur Bezugsachse (PE, PE*) verlaufende Gerade (G3) anschließt und daß sich im Verlauf der Mittellinie (R23$_2$) der inneren Kugelbahnen (23$_2$) im Anschluß an den zweiten Bogen (R2') zur Anschlußseite hin eine parallel zur Bezugsachse (PE', PE*') verlaufende Gerade (G3') anschließt.

**39.** Gelenk nach einem der Ansprüche 29 bis 37,
**dadurch gekennzeichnet,**
**daß** sich an den zweiten Bahnpaaren im Verlauf der Mittellinie (M22) der äußeren Kugelbahnen (22) zur Öffnungsseite hin an den zweiten Bogen eine sich der Bezugsachse (PE, PE*) annähernde Gerade anschließt und daß sich im Verlauf der Mittellinie (R23) der inneren Kugelbahnen (23) im Anschluß an den zweiten Bogen (R2') zur Anschlußseite hin eine sich der Bezugsachse (PE', PE*') annähernde Gerade anschließt.

**40.** Gelenk nach einem der Ansprüche 29 bis 39,
**dadurch gekennzeichnet,**
**daß** sich an den zweiten Bahnpaaren die Mittellinien (M22, M23) der Kugelbahnen (22, 23) in der Gelenkmittelebene (EM) unter einem Winkel von 4 bis 32° schneiden, wobei die Tangenten (T22, T23) an die Mittellinien (M22, M23) der Kugelbahnen (22, 23) aller Bahnpaare bei gestrecktem Gelenk einen gleich großen Öffnungswinkel $\alpha$ bilden.

**41.** Gleichlaufgelenk nach einem der Ansprüche 29 bis 40 mit den weiteren Merkmalen:

der radiale Abstand von Durchdringungspunkten (D$_1$, D$_2$) der Tangenten (T22$_1$, T23$_1$; T22$_2$, T23$_2$) an die Bahnmittellinien (M22$_1$, M23$_1$; M22$_2$, M23$_2$) durch die durch die Längsachsen (L12, L13) gelegten Radialebenen (R1, R2) von den Längsachsen (L12, L13) ist kleiner als der Rollkreisradius (PCR) der Kugeln im Gelenk.

**42.** Gleichlaufgelenk nach Anspruch 41 mit den weiteren Merkmalen:

der radiale Abstand von Durchdringungspunkten (D$_1$, D$_2$) der Tangenten (T22$_1$, T23$_1$; T22$_2$, T23$_2$) an die Bahnmittellinien (M22$_1$, M23$_1$; M22$_2$, M23$_2$) durch die durch die Längsachsen (L12, L13) gelegten Radialebenen (R1, R2) von den Längsachsen (L12, L13) ist null.

**43.** Gelenk nach einem der Ansprüche 17 bis 42,
**dadurch gekennzeichnet,**
**daß** die Anzahl der Bahnpaare (22, 23) durch vier teilbar ist.

**44.** Gelenk nach einem der Ansprüche 17 bis 43,
**dadurch gekennzeichnet,**
**daß** jeweils die Kugeln (14) zweier benachbarter in parallelen Bahnebenen (BE, BE*, BE', BE*') liegender Bahnpaare (22, 23) von einem einzigen Käfigfenster (18) des Kugelkäfigs (15) aufgenommen werden.

**45.** Gelenk nach einem der Ansprüche 17 bis 44,
**dadurch gekennzeichnet,**
**daß** der Teilungswinkel ($2\varphi$) zwischen den Bahnpaaren, deren Kugeln (14) in einem gemeinsamen Fenster (15) aufgenommen sind, geringer ist, als der Teilungswinkel zwischen benachbarten Bahnpaaren, der Kugeln (14) in verschiedenen Fenstern aufgenommen sind.

**46.** Gleichlaufgelenk nach einem der Ansprüche 17 bis 45,
**dadurch gekennzeichnet,**
**daß** von zwei unmittelbar benachbart liegenden Bahnpaaren eines als erstes Bahnpaar ($22_1$, $23_1$) und eines als zweites Bahnpaar ($22_2$, $23_2$) ausgebildet ist.

**47.** Gleichlaufgelenk nach einem der Ansprüche 17 bis 46,
**dadurch gekennzeichnet,**
**daß** von zwei in einer Bahnebene (BE, BE*, BE', BE*') liegenden Bahnpaaren eines als erstes Bahnpaar und eines als zweites Bahnpaar ausgebildet ist.

**Claims**

**1.** A constant velocity joint in the form of a counter track joint with the following characteristics:

an outer joint part (12) which comprises a longitudinal axis (L12) as well as an attaching end and an aperture end which are arranged axially opposite one another, and which is provided with outer ball tracks (22);
an inner joint part (13) which comprises a longitudinal axis (L13)) and attaching means for a shaft pointing to the aperture end of the outer joint part (12), and which is provided with inner ball tracks (23);
the outer ball tracks (22) and the inner ball tracks (23) form pairs of tracks (22, 23) relative to one another;
the pairs of tracks each accommodate a torque transmitting ball (14), an annular ball cage (15) is positioned between the outer joint part (12) and the inner joint part (13) and comprises circumferentially distributed cage windows (18) which each accommodate at least one of the torque transmitting balls;
the centres of the balls (14) are held by the cage (15) in a central joint plane (EM) and, when the joint is articulated, they are guided on to the angle-bisecting plane between the longitudinal axes (L12, L13);
the centre lines (M22, M23) of the ball tacks (22, 23) of pairs of tracks are positioned in radial planes (R) extending through the joint;
for a first part of the pairs of tracks, the opening angle $\alpha_1$ between the tangents ($T22_1'$, $T23_1'$) at the track base lines which extend parallel to the tangents ($T22_1$, $T23_1$) at the centre lines ($M22_1$, $M23_1$)
of the ball tracks ($22_1$, $23_1$) in the central joint plane (EM) of an aligned joint with coinciding longitudinal axes (L12, L13), opens from the attaching end to the aperture end;
for the second part of the pairs of tracks, the opening angle $\alpha_2$ between the tangents ($T22_2'$, $T23_2'$) at the track base lines which extend parallel to the tangents ($T22_2$, $T23_2$) at the centre lines ($M22_2$, $M23_2$) of the ball tracks ($22_2$, $23_2$) in the central joint plane (EM) in an aligned joint with coinciding longitudinal axes (L12, L13) opens from the aperture end to the attaching end, wherein the following applies to the centre lines of the second pairs of tracks:

in the outer joint part (12), in the region extending from the central joint plane (EM) to the attaching end, the centre line ($M22_2$) of the ball tracks ($22_2$) radially inwardly leaves a reference radius (RB) whose radius centre (MB) is positioned at the point of intersection of a perpendicular line on the tangent ($T22_2$) at the centre line ($M22_2$) of the ball track ($22_2$) in the central joint plane (EM), with the longitudinal axis (L12);
in the inner joint part, in the region extending from the central joint plane (EM) to the aperture end, the centre line ($M23_2$) of the ball tracks ($23_2$) radially inwardly leaves a reference radius (RB') whose radius centre (MB') is positioned at the point of intersection of a perpendicular line on the tangent (T23$_2$) at the centre line (M23$_2$) of the ball track (23$_2$) in the central joint plane (EM), with the longitudinal axis (L13); in the outer joint part (12), in the region extending from the central joint plane (EM) to the aperture end, the centre line (M22$_2$) of the ball tracks (22$_2$) moves over said reference radius (RB) radially outwardly, and in the inner joint part, in the region extending from the central joint plane (EM) to the attaching end, the centre line (M23$_2$) of the ball tracks (23$_2$) moves over said reference radius (RB') radially outwardly.

2. A constant velocity joint according to claim 1 with the following further characteristics of the second pairs of tracks:

in the outer joint part (12), the local radius of curvature (R1) of the centre line (M22$_2$) in the central joint plane (EM) is smaller than the reference radius (RB); in the inner joint part (13), the local radius of curvature (R1') of the centre line (M23$_2$) in the central joint plane (EM) is smaller than the reference radius (RB').

3. A constant velocity joint according to any one of claims 1 or 2, with the following further characteristics of the second pairs of tracks; in the outer joint part (12), the centre line (M22$_2$) of the ball tracks (22$_2$) extends from the central joint plane (EM) to the attaching end radially outside a reference radius (RZ) whose radius centre is positioned in the joint centre (M); and in the inner joint part (13), the centre line (M23$_2$) of the ball tracks (23$_2$) extends from the central joint plane (EM) to the aperture end radially outside a reference radius (RZ') whose radius centre is positioned in the joint centre (M).

4. A joint according to any one of claims 1 to 3 with the following further characteristics of the second pairs of tracks; in the outer joint part (12), the centre line (M22$_2$) of the ball tracks (22$_2$) extends from the central joint plane (EM) to the aperture end radially outside the reference radius (RB); and in the inner joint part (13), the centre line of the ball tracks (23$_2$) extends from the central joint plane (EM) to the attaching end radially outside the reference radius (RB').

5. A constant velocity joint according to any one of claims 1 to 4, with the following further characteristics of the second pairs of tracks:

in the outer joint part (12), the centre line (M22$_2$) of the ball tracks (22$_2$) extends from the central joint plane (EM) to the aperture end radially inside a reference radius (RZ) around the joint centre (M); and in the inner joint part (13), the centre line (M23$_2$) of the ball tracks (23$_2$) extends from the central joint plane (EM) to the attaching end radially inside a reference radius (RZ') around the joint centre (M).

6. A constant velocity joint according to any one of claims 1 to 5 with the following characteristics of the second pairs of tracks:

the centre lines (M22$_2$, M23$_2$) of the outer ball tracks and inner ball tracks each comprise at least two arch portions which are curved in opposite directions and which adjoin one another in a turning point; the turning points (W22$_2$) of the outer ball tacks (22$_2$) are positioned at a distance from the central plane (EM) relative to the aperture end; the turning points (W23$_2$) of the inner ball tracks (23$_2$) are positioned at a distance from the central plane (EM) relative to the attaching end; the turning points (W22$_2$, W23$_2$) are each positioned below a maximum of the distance between the centre lines (M22$_2$, M23$_2$) and the longitudinal axes (L12, L13).

7. A constant velocity joint according to any one of claims 1 to 6, with the following characteristics of the second pairs of tracks; the track centre lines (M22$_2$) of the outer ball tracks (22$_2$) comprise a first arch with the radius (R1) whose centre (M1) is offset by a first axial offset (O1a) from the central plane (EM) of the joint towards the attaching end and by a first radial offset (O1r) from the longitudinal axis (L12) to the ball tracks, with said arch, towards the attaching end, being followed by a second arch with the radius (R2) whose centre (M2) is offset by a second axial offset (O2a) from the central plane (EM) of the joint towards the aperture end and by a second radial offset (O2r) from the longitudinal axis (L12) outwardly, which second radial offset (Or2) is greater than the sum of the first radius (R1) and the first radial offset (O1r); the track centre lines (M23$_2$) of the inner ball tacks (23$_2$) comprise a first arch with the radius (R1') whose centre (M1') is offset by a first axial offset (O1a) from the central plane (EM) of the joint towards the aperture end and by a first radial offset (O1r') from the longitudinal axis (L13) to the ball tracks, with said arch, towards the aperture end, being followed by a second arch with the radius (R2') whose centre (M2') is offset by a second axial offset (O2a') from the central plane (EM) of the joint towards the attaching end and by a second radial offset (O2r') from the longitudinal axis (L13) outwardly, said second radial offset (O2r') being greater than the sum of the first radius (R1') and the first radial offset (O1r').

8. A constant velocity joint according to any one of claims 1 to 7, with the following further characteristics of the second pairs of tracks:

the radius of curvature of the centre lines (M22) of the outer ball tracks (22) decreases along the extension from the central plane (EM) towards the attaching end (19), and the radius of curvature of the centre lines (M23) of the inner ball tracks (23) decreases along the extension from the central plane (EM) towards the aperture end (20).

9. A constant velocity joint according to claim 8, with the following further characteristics of the second pairs of tracks:

the track centre lines (M22$_2$) of the outer ball tracks (22$_2$) comprise a third arch with the radius of curvature (R3) which, in the same direction of curvature, tangentially adjoins the first arch with the radius of curvature (R1) and whose radius of curvature (R3) is smaller than the radius of curvature (R1); and

the track centre lines (M23$_2$) of the inner ball tracks (23$_2$) comprise a third arch with the radius of curvature (R3') which, in the same direction of curvature, adjoins the first arch with the radius of curvature (R1') and whose radius of curvature (R3') is smaller than the radius of curvature (R1').

10. A joint according to any one of claims 1 to 9,
**characterised in**
**that** at the second pairs of tracks, along the extension of the centre line (M22$_2$) of the outer ball tracks (22$_2$), towards the aperture end, the second arch is followed by an axis-parallel straight line (G3) and that along the extension of the centre line (M23) of the inner ball tracks (23), the second arch (R2'), towards the attaching end, is followed by an axis-parallel straight line (G3').

11. A joint according to any one of claims 1 to 9,
**characterised in**
**that** at the second pairs of tracks, along the extension of the centre line (M22) of the outer ball tracks (22), towards the aperture end, the second arch is followed by a straight line which approaches the longitudinal axis (12) and that, along the extension of the centre line (R23) of the inner ball tracks (23), the second arch (R2'), towards the attaching end, is followed by a straight line which approaches the longitudinal axis (L13).

12. A joint according to any one of claims 1 to 11,
**characterised in**
**that** at the second pairs of tracks, the centre lines (M22, M23) of the ball tracks (22, 23) intersect one another in the central joint plane (EM) at an angle of 4 to 32°, wherein, when the joint is in the aligned condition, the tangents (T22, T23) at the centre lines (M22, M23) of the ball tracks (22, 23) of all pairs of tracks form identically sized opening angles $\alpha$.

13. A joint according to any one of claims 1 to 12,
**characterised in**
**that** first pairs of tracks (22$_1$, 23$_1$) and second pairs of tracks (22$_2$, 23$_2$) are arranged alternately around the circumference.

14. A joint according to any one of claims 1 to 13,
**characterised in**
**that** the radial planes $R_1$ of the first pairs of tracks and the radial planes $R_2$ of the second pairs of tracks comprise identical pitch angles.

15. A joint according to any one of claims 1 to 14,
**characterised in**
**that** the first pairs of tracks (22$_1$, 23$_1$) and the second pairs of tracks (22$_2$, 23$_2$) do not extend symmetrically relative to one another with reference to the central joint plane (EM).

**16.** A joint according to any one of claims 1 to 15,
**characterised in**
**that** the pitch circle radius (PCR$_1$) of the balls (14$_1$) of the first pairs of tracks and the pitch circle radius (PCR$_2$) of the balls (14$_2$) of the second pairs of tracks differ in size, wherein the size ratio ranges between 0.8 and 1.0.

**17.** A constant velocity joint in the form of a counter track joint, with the following characteristics:

an outer joint part (12) which comprises a longitudinal axis (L12) as well as an attaching end and an aperture end which are arranged axially opposite one another, and which is provided with outer ball tracks (22$_1$, 22$_2$);
an inner joint part (13) which comprises a longitudinal axis (L13)) and attaching means for a shaft pointing to the aperture end of the outer joint part (12), and which is provided with inner ball tracks (23$_1$, 23$_2$) ;
the outer ball tracks (22$_1$, 22$_2$) and the inner ball tracks (23$_1$, 23$_2$) form pairs of tracks (22$_1$, 23$_1$; 22$_2$, 23$_2$) relative to one another;
the pairs of tracks each accommodate a torque transmitting ball (14), an annular ball cage (15) is positioned between the outer joint part (12) and the inner joint part (13) and comprises circumferentially distributed cage windows (18) which each accommodate at least one of the torque transmitting balls;
the centres of the balls (14) are held by the cage (15) in a central joint plane (EM) and, when the joint is articulated, they are guided on to the angle-bisecting plane between the longitudinal axes (L12, L13);
the centre lines (M22, M23) of the ball tracks (22$_1$, 23$_1$; 22$_2$, 23$_2$) of pairs of tracks are positioned in pairs of track planes (BE, BE*) which substantially extend parallel relative to one another and symmetrically relative to radial planes (R1, R2) through the longitudinal axes (L12, L13);
for a first part of the pairs of tracks, the opening angle $\alpha_1$ between the tangents (T22$_1$', T23$_1$') at the track base lines which extend parallel to the tangents (T22$_1$, T23$_1$) at the centre lines (M22$_1$, M23$_1$) of the ball tracks (22$_1$, 23$_1$) in the central joint plane (EM) of an aligned joint with coinciding longitudinal axes (L12, L13), opens from the attaching end to the aperture end;
for a second part of the pairs of tracks, the opening angle $\alpha_2$ between the tangents (T22$_2$', T23$_2$') at the track base lines which extend parallel to the tangents (T22$_2$, T23$_2$) at the centre lines (M22$_2$, M23$_2$) of the ball tracks (22$_2$, 23$_2$) in the central joint plane (EM) in an aligned joint with coinciding longitudinal axes (L12, L13) opens from the aperture end to the attaching end, wherein the following applies to the centre lines of the second pairs of tracks (22$_2$, 23$_2$) :

in the outer joint part (12), in the region extending from the central joint plane (EM) to the attaching end, the centre line (M22$_2$) of the ball tracks (22$_2$) radially inwardly leaves a reference radius (RB) whose radius centre (MBE) is positioned at the point of intersection of a perpendicular line on the tangent (T22$_2$) at the centre line (M22$_2$) of the ball track (22$_2$) in the central joint plane (EM), with a parallel axis (PE, PE*) relative to the longitudinal axis (L12) through a track plane (BE, BE*);
in the inner joint part, in the region extending from the central joint plane (EM) to the aperture end, the centre line (M23$_2$) of the ball tracks (23$_2$) radially inwardly leaves a reference radius (RB') whose radius centre (MBE') is positioned at the point of intersection of a perpendicular line on the tangent (T23$_2$) at the centre line (M23$_2$) of the ball track (23$_2$) in the central joint plane (EM), with a parallel axis (PE, PE*) relative to the longitudinal axis (L13) through a track plane (BE, BE*);
in the outer joint part (12), in the region extending from the central joint plane (EM) to the aperture end, the centre line (M22$_2$) of the ball tracks (22$_2$) moves over said reference radius (RB) radially outwardly, and
in the inner joint part, in the region extending from the central joint plane (EM) to the attaching end, the centre line (M23$_2$) of the ball tracks (23$_2$) moves over said reference radius (RB') radially outwardly.

**18.** A constant velocity joint according to claim 17 with the following further characteristics of the second pairs of tracks:

in the outer joint part (12), the local radius of curvature (R1) of the centre line (M22$_2$) in the central joint plane (EM) is smaller than the reference radius (RB);
in the inner joint part (13), the local radius of curvature (R1') of the centre line (M23$_2$) in the central joint plane (EM) is smaller than the reference radius (RB').

**19.** A constant velocity joint according to any one of claims 17 or 18, with the following further characteristics of the second pairs of tracks;
in the outer joint part (12), the centre line (M22$_2$) of the ball tracks (22$_2$) extends from the central joint plane (EM) to the attaching end radially outside a reference radius (RZ) whose radius centre is positioned in the central joint plane (EM) on one of the parallel axes (PE, PE*); and

in the inner joint part (13), the centre line (M23$_2$) of the ball tracks (23$_2$) extends from the central joint plane (EM) to the aperture end radially outside a reference radius (RZ') whose radius centre is positioned in the central joint plane (EM) on one of the parallel axes (PE, PE*).

20. A joint according to any one of claims 17 to 19 with the following further characteristics of the second pairs of tracks:

in the outer joint part (12), the centre line (M22$_2$) of the ball tracks (22$_2$) extends from the central joint plane (EM) to the aperture end radially outside the reference radius (RB); and
in the inner joint part (13), the centre line of the ball tracks (23$_2$) extends from the central joint plane (EM) to the attaching end radially outside the reference radius (RB').

21. A constant velocity joint according to any one of claims 17 to 20 with the following further characteristics of the second pairs of tracks:

in the outer joint part (12), the centre line (M22$_2$) of the ball tracks (22$_2$) extends from the central joint plane (EM) to the aperture end radially inside a reference radius (RZ) whose radius centre (ME) in the central joint plane (EM) is positioned on one of the parallel axes (PE, PE*);
in the inner joint part (13), the centre line (M23$_2$) of the ball tracks (23$_2$) extends from the central joint plane (EM) to the attaching end radially inside a reference radius (RZ) whose radius centre (ME) is positioned in the central joint plane (EM) on one of the parallel axes (PE, PE*).

22. A constant velocity joint according to any one of claims 17 to 21, with the following characteristics of the second pairs of tracks:

the centre lines (M22$_2$, M23$_2$) of the outer ball tracks and inner ball tracks each comprise at least two arch portions which are curved in opposite directions and which adjoin one another in a turning point;
the turning points (W22$_2$) of the outer ball tacks (22$_2$) are positioned in a track plane (BE, BE*) at a distance from the central plane (EM) relative to the aperture end;
the turning points (W23$_2$) of the inner ball tracks (23$_2$) are positioned in a track plane (BE, BE*) at a distance from the central plane (EM) relative to the attaching end;
the turning points (W22$_2$, W23$_2$) are each positioned below a maximum of the distance between the centre lines (M22$_2$, M23$_2$) and the parallel axes (PE, PE*).

23. A constant velocity joint according to any one of claims 17 to 22, with the following characteristics of the second pairs of tracks:

the track centre lines (M22$_2$) of the outer ball tracks (22$_2$) comprise a first arch with the radius (R1) whose centre (M1) in a track plane (BE, BE*) is offset by a first axial offset (O1a) from the central plane (EM) of the joint towards the attaching end and by a first radial offset (O1r) from a parallel axis (PE, PE*) to the ball track, with said arch, towards the attaching end, being followed by a second arch with the radius (R2) whose centre (M2) in the track plane (BE, BE*) is offset by a second axial offset (O2a) from the central plane (EM) of the joint towards the aperture end and by a second radial offset (O2r) from the parallel axis (PE, PE*) outwardly, which second radial offset (Or2) is greater than the sum of the first radius (R1) and the first radial offset (O1r);
the track centre lines (M23$_2$) of the inner ball tacks (23$_2$) comprise a first arch with the radius (R1') whose centre (M1') in a track plane (BE, BE*) is offset by a first axial offset (O1a') from the central plane (EM) of the joint towards the aperture end and by a first radial offset (O1r') from a parallel axis (PE, PE*) towards the ball tracks, with said arch, towards the aperture end, being followed by a second arch with the radius (R2') whose centre (M2') in the track plane (BE, BE') is offset by a second axial offset (O2a') from the central plane (EM) of the joint towards the attaching end and by a second radial offset (O2r') from the parallel axis (PE, PE') outwardly, said second radial offset (O2r') being greater than the sum of the first radius (R1') and the first radial offset (O1r').

24. A constant velocity joint according to any one of claims 17 to 23, with the following further characteristics of the second pairs of tracks:

the radius of curvature of the centre lines (M22) of the outer ball tracks (22) decreases along the extension of the central plane (EM) towards the attaching end (19), and the radius of curvature of the centre lines (M23) of the inner ball tracks (23) decreases along the extension from the central plane (EM) towards the aperture end (20).

**25.** A constant velocity joint according to claim 24, with the following further characteristics of the second pairs of tracks:

the track centre lines ($M22_2$) of the outer ball tracks ($22_2$) comprise a third arch with the radius of curvature (R3) which, in the same direction of curvature, tangentially adjoins the first arch with the radius of curvature (R1) and whose radius (R3) is smaller than the radius of curvature (R1); and
the track centre lines ($M23_2$) of the inner ball tracks ($23_2$) comprise a third arch with the radius of curvature (R3') which, in the same direction of curvature), adjoins the first arch with the radius of curvature (R1') and whose radius (R3') is smaller than the radius of curvature (R1').

**26.** A joint according to any one of claims 17 to 25,
**characterised in**
**that** at the second pairs of tracks, along the extension of the centre line ($M22_2$) of the outer ball tracks ($22_2$), towards the aperture end, the second arch is followed by an axis-parallel straight line (G3) and that along the extension of the centre line ($R23_2$) of the inner ball tracks ($23_2$), the second arch (R2') is, towards the attaching end, is followed by an axis-parallel straight line (G3')

**27.** A joint according to any one of claims 17 to 25,
**characterised in**
**that** at the second pairs of tracks, along the extension of the centre line (M22) of the outer ball tracks (22), towards the aperture end, the second arch is followed by a straight line which approaches the parallel axis (PE, PE*) and, along the extension of the centre line (R23) of the inner ball tracks (23), the second arch (R2'), towards the attaching end, is followed by a straight line which approaches the parallel axis (PE, PE*).

**28.** A joint according to any one of claims 17 to 26,
**characterised in**
**that** at the second pairs of tracks, the centre lines (M22, M23) of the ball tracks (22, 23) in the central joint plane (EM) intersect one another at an angle of 4 to 32°, wherein, when the joint is in the aligned condition, the tangents (T22, T23) at the centre lines (M22, M23) of the ball tracks (22, 23) of all pairs of tracks form an identically sized opening angle $\alpha$.

**29.** A constant velocity joint in the form of a counter track joint with the following characteristics:

an outer joint part (12) which comprises a longitudinal axis (L12) as well as an attaching end and an aperture end which are arranged axially opposite one another, and which is provided with outer ball tracks ($22_1$, $22_2$);
an inner joint part (13) which comprises a longitudinal axis (L13) and attaching means for a shaft pointing to the aperture end of the outer joint part (12), and which is provided with inner ball tracks ($23_1$, $23_2$);
the outer ball tracks ($22_1$, $22_2$) and the inner ball tracks ($23_1$, $23_2$) form pairs of tracks ($22_1$, $23_1$; $22_2$, $23_2$) relative to one another;
the pairs of tracks each accommodate a torque transmitting ball (14), an annular ball cage (15) is positioned between the outer joint part (12) and the inner joint part (13) and comprises circumferentially distributed cage windows (18) which each accommodate at least one of the torque transmitting balls;
the centres of the balls (14) are held by the cage (15) in a central joint plane (EM) and, when the joint is articulated, they are guided on to the angle-bisecting plane between the longitudinal axes (L12, L13);
the centre lines ($M22_1$, $M22_2$) of adjoining ball tracks ($22_1$ $22_2$,) in the outer joint part (12) are positioned in pairs of first track planes (BE, BE*) which extend parallel relative to one another and symmetrically relative to radial rays (RS1, RS2) through the joint centre (M);
the centre lines ($M23_1$, $M23_2$) of adjoining ball tracks ($23_1$, $23_2$) in the inner joint part (13) are positioned in pairs of second track planes (BE', BE*') which extend parallel relative to one another and symmetrically relative to radial rays (RS1, RS2) through the joint centre (M);
the first track planes (BE, BE*) and the second track planes (BE', BE*'), together with radial planes (R1, R2) through the longitudinal axes (L12, L13), form identically sized angles ($\gamma$, $\gamma'$) extending in opposite directions;
for a first part of the pairs of tracks, the opening angle $\alpha_1$ between the tangents ($T22_1$', $T23_1$') at the track base lines which extend parallel to the tangents ($T22_1$, $T23_1$) at the centre lines ($M22_1$, $M23_1$) of the ball tracks ($22_1$, $23_1$) in the central joint plane (EM) of an aligned joint with coinciding longitudinal axes (L12, L13), opens from the attaching end of the aperture end;
for a second part of the pairs of tracks, the opening angle $\alpha_2$ between the tangents ($T22_2$', $T23_2$') at the track base lines which extend parallel to the tangents ($T22_2$, $T23_2$) at the centre lines ($M22_2$, $M23_2$) of the ball tracks ($22_2$, $23_2$) in the central joint plane (EM) in an aligned joint with coinciding longitudinal axes (L12, L13) opens from the aperture end to the attaching end, wherein the following applies to the centre lines of the second pairs of tracks:

in the outer joint part (12), in the region extending from the central joint plane (EM) to the attaching end, the centre line (M22$_2$) of the ball tracks (22$_2$) radially inwardly leaves a reference radius (RB) whose radius centre (MBE) is positioned at the point of intersection of a perpendicular line on the tangent (T22$_2$) at the centre line (M22$_2$) of the ball track (22$_2$) in the central joint plane (EM), with a reference axis (PE, PE*) through a track plane (BE, BE*);

in the inner joint part, in the region extending from the central joint plane (EM) to the aperture end, the centre line (M23$_2$) of the ball tracks (23$_2$) radially inwardly leaves a reference radius (RB') whose radius centre (MBE') is positioned at the point of intersection of a perpendicular line on the tangent (T23$_2$) at the centre line (M23$_2$) of the ball track (23$_2$) in the central joint plane (EM), with a reference axis (PE', PE*') through a track plane (BE', BE*') ;

in the outer joint part (12), in the region extending from the central joint plane (EM) to the aperture end, the centre line (M22$_2$) of the ball tracks (22$_2$) moves over said reference radius (RB) radially outwardly, and in the inner joint part, in the region extending from the central joint plane (EM) to the attaching end, the centre line (M23$_2$) of the ball tracks (23$_2$) moves over said reference radius (RB') radially outwardly.

30. A constant velocity joint according to claim 29 with the following further characteristics of the second pairs of tracks:

in the outer joint part (12), the local radius of curvature (R1) of the centre line (M22$_2$) in the central joint plane (EM) is smaller than the reference radius (RB);

in the inner joint part (13), the local radius (R1') of the centre line (M23$_2$) in the central joint plane (EM) is smaller than the reference radius (RB').

31. A constant velocity joint according to any one of claims 29 or 30, with the following further characteristics of the second pairs of tracks:

in the outer joint part (12), the centre line (M22$_2$) of the ball tracks (22$_2$) extends from the central joint plane (EM) to the attaching end radially outside a reference radius (RZ) whose radius centre is positioned in the central joint plane (EM) on one of the reference axes (PE, PE*); and

in the inner joint part (13), the centre line (M23$_2$) of the ball tracks (23$_2$) extends from the central joint plane (EM) to the aperture end radially outside a reference radius (RZ) whose radius centre is positioned in the central joint plane (EM) on one of the reference axes (PE', PE*').

32. A joint according to any one of claims 29 to 31 with the following further characteristics of the second pairs of tracks:

in the outer joint part (12), the centre line (M22$_2$) of the ball tracks (22$_2$) extends from the central joint plane (EM) to the aperture end radially outside the reference radius (RB); and

in the inner joint part (13), the centre line (M23$_2$) of the ball tracks (23$_2$) extends from the central joint plane (EM) to the attaching end radially outside the reference radius (RB').

33. A constant velocity joint according to any one of claims 29 to 32 with the following further characteristics of the second pairs of tracks;
in the outer joint part (12), the centre line (M22$_2$) of the ball tracks (22$_2$) extends from the central joint plane (EM) to the aperture end radially inside a reference radius (RZ) whose radius centre (ME, ME*) is positioned in the central joint plane (EM) on one of the reference axes (PE, PE*);
in the inner joint part (13), the centre line (M23$_2$) of the ball tracks (23$_2$) extends from the central joint plane (EM) to the attaching end radially inside a reference radius (RZ) whose radius centre (ME, ME*) is positioned in the central joint plane (EM) on one of the parallel axes (PE', PE*').

34. A constant velocity joint according to any one of claims 29 to 33 with the following further characteristics of the second pairs of tracks:

the centre lines (M22$_2$, M23$_2$) of the outer ball tracks and inner ball tracks each comprise at least two arch portions which are curved in opposite directions and which adjoin one another in a turning point;
the turning points (W22$_2$) of the outer ball tacks (22$_2$) are positioned in a track plane (BE, BE*) at a distance from the central plane (EM) relative to the aperture end;

the turning points (W23$_2$) of the inner ball tracks (23$_2$) are positioned in a track plane (BE', BE*') at a distance from the central plane (EM) relative to the attaching end;

the turning points (W22$_2$, W23$_2$) are each positioned below a maximum of the distance between the centre lines (M22$_2$, M23$_2$) and the reference axes (PE, PE*; PE', PE*').

**35.** A constant velocity joint according to any one of claims 29 to 34 with the following characteristics of the second pairs of tracks:

the track centre lines (M22$_2$) of the outer ball tracks (22$_2$) comprise a first arch with the radius (R1) whose centre (M1) in a track plane (BE') is offset by a first axial offset (O1a) from the central plane (EM) of the joint towards the attaching end and by a first radial offset (O1r) from a reference axis (PE, PE*) towards the ball track, with said arch, towards the attaching end, being followed by a second arch with the radius (R2) whose centre (M2) in the track plane (BE, BE*) is offset by a second axial offset (O2a) from the central plane (EM) of the joint towards the aperture end and by a second radial offset (O2r) from the reference axis (PE, PE*) outwardly, which second radial offset (Or2) is greater than the sum of the first radius (R1) and the first radial offset (O1r);

the track centre lines (M23$_2$) of the inner ball tacks (23$_2$) comprise a first arch with the radius (R1') whose centre (M1') in a track plane (BE') is offset by a first offset (O1a') from the central plane (EM) of the joint towards the aperture end and by a first offset (O1r') from a reference axis (PE', PE*') to the ball track, with said arch, towards the aperture end, being followed by a second arch with the radius (R2') whose centre (M2') in the track plane (BE', BE*') is offset by a second axial offset (O2a') from the central plane (EM) of the joint towards the attaching end and by a second offset (O2r') from the reference axis (PE', PE*') outwardly, said second radial offset (O2r') being greater than the sum of the first radius (R1') and the first radial offset (O1r').

**36.** A constant velocity joint according to any one of claims 29 to 35 with the following further characteristics of the second pairs of tracks:

the radius of curvature of the centre lines (M22) of the outer ball tracks (22) decreases along the extension from the central plane (EM) towards the attaching end (19), and the radius of curvature of the centre lines (M23) of the inner ball tracks (23) decreases along the extension from the central plane (EM) towards the aperture end (20).

**37.** A constant velocity joint according to claim 36 with the following further characteristics of the second pairs of tracks:

the track centre lines (M22$_2$) of the outer ball tracks (22$_2$) comprise a third arch with the radius of curvature (R3) which, in the same direction of curvature, tangentially adjoins the first arch with the radius of curvature (R1) and whose radius (R3) is smaller than the radius of curvature (R1); and

the track centre lines (M23$_2$) of the inner ball tracks (23$_2$) comprise a third arch with the radius of curvature (R3') which, in the same direction of curvature), tangentially adjoins the first arch with the radius of curvature (R1') and whose radius (R3') is smaller than the radius of curvature (R1').

**38.** A joint according to any one of claims 29 to 37,
**characterised in**
**that** at the second pairs of tracks, along the extension of the centre line (M22$_2$) of the outer ball tracks (22$_2$), towards the aperture end, the second arch is followed by a straight line (G3) extending parallel to the reference axis (PE, PE*) and that along the extension of the centre line (R23$_2$) of the inner ball tracks (23$_2$), the second arch (R2') is, towards the attaching end, is followed by a straight line (G3') which extends parallel to the reference axis (PE', PE*').

**39.** A joint according to any one of claims 29 to 37,
**characterised in**
**that** at the second pairs of tracks, along the extension of the centre line (M22) of the outer ball tracks (22), towards the aperture end, the second arch is followed by a straight line which approaches the reference axis (PE, PE*) and, along the extension of the centre line (R23) of the inner ball tracks (23), the second arch (R2'), towards the attaching end, is followed by a straight line which approaches the reference axis (PE', PE*').

**40.** A joint according to any one of claims 29 to 39,
**characterised in**
**that** at the second pairs of tracks, the centre lines (M22, M23) of the ball tracks (22, 23) in the central joint plane (EM) intersect one another at an angle of 4 to 32°, wherein, when the joint is in the aligned condition, the tangents (T22, T23) at the centre lines (M22, M23) of the ball tracks (22, 23) of all pairs of tracks form identically sized opening

angles $\alpha$.

41. A constant velocity joint according to any one of claims 29 to 40 with the following further characteristics;
the radial distance of penetration points ($D_1$, $D_2$) at the tangents ($T22_1$, $T23_1$; $T22_2$, $T23_2$) at the track base lines ($M22_1$, $M23_1$; $M22_2$, $M23_2$) through the radial planes (R1, R2) positioned through the longitudinal axes (L12, L13) from the longitudinal axes (L12, L13) is smaller than the pitch circle radius (PCR) of the balls in the joint.

42. A constant velocity joint according to claim 41 with the following further characteristics:

 the radial distance of penetration points ($D_1$, $D_2$) at the tangents ($T22_1$, $T23_1$; $T22_2$, $T23_2$) at the track base lines ($M22_1$, $M23_1$; $M22_2$, $M23_2$) through the radial planes (R1, R2) positioned through the longitudinal axes (L12, L13) from the longitudinal axes (L12, L13) equals zero.

43. A joint according to any one of claims 17 to 42,
**characterised in**
**that** the number of pairs of tracks (22, 23) can be divided by four.

44. A joint according to any one of claims 17 to 43,
**characterised in**
**that** the balls (14) of two adjoining pairs of tracks (22, 23) positioned in parallel track planes (BE, BE*, BE', BE*') are accommodated by one single cage window (18) of the ball cage (15).

45. A joint according to any one of claims 17 to 44,
**characterised in**
**that** the pitch angle ($2\varphi$) between the pairs of tracks whose balls (14) are accommodated in a common window (15) is smaller than the pitch angle between adjoining pairs of tracks whose balls (14) are accommodated in different widows.

46. A constant velocity joint according to any one of claims 17 to 45,
**characterised in**
**that** of two directly adjoining pairs of tracks, one is provided in the form of a first pair of tracks ($22_1$, $23_1$) and one in the form of a second pair of tracks ($22_2$, $23_2$).

47. A constant velocity joint according to any one of claims 17 to 46,
**characterised in**
**that** of two pairs of tracks positioned in one track plane (BE, BE*, BE', BE*'), one is provided in the form of a first pair of tracks and one in the form of a second pair of tracks.

**Revendications**

1. Joint homocinétique sous la forme d'un joint à chemins de roulement opposes, avec les attributs : un élément extérieur de joint (12), disposant d'un axe longitudinal (L12) et mutuellement situés à l'opposée, en direction axiale, d'un côté raccordement et d'un côté ouverture et qui comporte des chemins de roulement extérieures à billes (22), un élément intérieur de joint (13), disposant d'un axe longitudinal (L13) et de moyens de raccordement pour un arbre dirigé vers le côté ouverture de l'élément extérieur de joint (12) et qui comporte des chemins de roulement intérieures à billes (23),
les chemins de roulement extérieures à billes (22) et les chemins de roulement intérieures à billes (23) forment ensemble des paires de chemins de roulement (22, 23),
les paires de chemins de roulement réceptionnent chacune une bille transmettant le couple (14), une cage à billes annulaire (15) est placée entre l'élément extérieur de joint (12) et l'élément intérieur de joint (13) et comporte des fenêtres de cage (18), réparties sur la circonférence réceptionnant chacune au moins l'une des billes transmettant le couple,
les points médians des billes (14) sont maintenus par la cage (15) dans un plan médian du joint (EM) et lors d'une flexion du joint, ils sont guidés sur le plan de la bissectrice entre les axes longitudinaux (L12, L13),
les lignes médianes (M22, M23) des chemins de roulement à billes (22, 23) de paires de chemins de roulement se situent dans des plans radiaux (R) à travers le joint,
pour une première partie des paires de chemins de roulement, l'angle d'ouverture $\alpha_1$ s'ouvre entre des tangentes

($T22_1'$, $T23_1'$) sur des bases des chemins de roulement, qui s'étendent à la parallèle des tangentes ($T22_1$, $T23_1$) sur les lignes médianes ($M22_1$, $M23_1$) des chemins de roulement à billes ($22_1$, $23_1$) dans le plan médian du joint (EM), du côté raccordement vers le côté ouverture, lorsque le joint est étiré, avec les axes longitudinaux (L12, L13) coïncidents,

pour une deuxième partie des paires de chemins de roulement, l'angle d'ouverture $\alpha_2$ s'ouvre entre des tangentes ($T22_2'$, $T23_2'$) sur des bases des chemins de roulement, qui s'étendent à la parallèle des tangentes ($T22_2$, $T23_2$) sur les lignes médianes ($M22_2$, $M23_2$) des chemins de roulement à billes ($22_2$, $23_2$) dans le plan médian du joint (EM), du côté ouverture vers le côté raccordement, lorsque le joint est étiré, avec les axes longitudinaux (L12, L13) coïncidents, on applique à cet effet pour les lignes médianes des deuxièmes paires de chemins de roulement:

dans l'élément extérieur de joint (12), la ligne médiane ($M22_2$) des chemins de roulement à billes ($22_2$) respectivement quitte dans la région du plan médian du joint (EM) vers le côté raccordement un rayon de référence (RB), dont le point central de rayon (MB) se situe au point d'intersection d'une verticale sur la tangente ($T22_2$) sur la ligne médiane ($M22_2$) du chemin de roulement à bille ($22_2$) dans le plan médian du joint (EM) et de l'axe longitudinal (L12), en direction radiale vers l'intérieur,

dans l'élément intérieur de joint (13), la ligne médiane ($M23_2$) des chemins de roulement à billes ($23_2$) respectivement quitte dans la région du plan médian du joint (EM) vers le côté ouverture un rayon de référence (RB'), dont le point central de rayon (MB') se situe au point d'intersection d'une verticale sur la tangente ($T23_2$) sur la ligne médiane ($M23_2$) du chemin de roulement à bille ($23_2$) dans le plan médian du joint (EM) et de l'axe longitudinal (L13), en direction radiale vers l'intérieur,

dans l'élément extérieur de joint (12), la ligne médiane ($M22_2$) des chemins de roulement à billes ($22_2$) migre dans la région du plan médian du joint (EM) vers le côté ouverture, par-dessus le rayon de référence (RB) cité, en direction radiale vers l'extérieur, et

dans l'élément intérieur de joint (13), la ligne médiane ($M23_2$) des chemins de roulement à billes ($23_2$) migre dans la région du plan médian du joint (EM) vers le côté raccordement, par-dessus le rayon de référence (RB') cité, en direction radiale vers l'extérieur.

2. Joint homocinétique selon la revendication 1, avec les attributs supplémentaires des deuxièmes paires de chemins de roulement:

dans l'élément extérieur de joint (12), le rayon de courbure local (R1) de la ligne médiane ($M22_2$) est inférieur au rayon de référence (RB), dans le plan médian du joint (EM),

dans l'élément extérieur de joint (13), le rayon de courbure local (R1') de la ligne médiane ($M23_2$) est inférieur au rayon de référence (RB'), dans le plan médian du joint (EM),

3. Joint homocinétique selon l'une quelconque des revendications 1 ou 2, avec les attributs supplémentaires des deuxièmes paires de chemins de roulement:

dans l'élément extérieur de joint (12), la ligne médiane ($M22_2$) des chemins de roulement à billes ($22_2$) respectivement s'étend du plan médian du joint (EM) vers le côté raccordement, en direction radiale, à l'extérieur d'un rayon de référence (RZ), dont le point central du rayon se situe dans le point central du joint (M), et

dans l'élément intérieur de joint (13), la ligne médiane ($M23_2$) des chemins de roulement à billes ($23_2$) respectivement s'étend du plan médian du joint (EM) vers le côté ouverture, en direction radiale, à l'extérieur d'un rayon de référence (RZ'), dont le point central du rayon se situe dans le point central du joint (M).

4. Joint homocinétique selon l'une quelconque des revendications 1 à 3, avec les attributs supplémentaires des deuxièmes paires de chemins de roulement:

dans l'élément extérieur de joint (12), la ligne médiane ($M22_2$) des chemins de roulement à billes ($22_2$) respectivement s'étend du plan médian du joint (EM) vers le côté ouverture, en direction radiale, à l'extérieur du rayon de référence (RB), et

dans l'élément intérieur de joint (13), la ligne médiane des chemins de roulement à billes ($23_2$) respectivement s'étend du plan médian du joint (EM) vers le côté raccordement, en direction radiale, à l'extérieur du rayon de référence (RB').

5. Joint homocinétique selon l'une quelconque des revendications 1 à 4, avec les attributs supplémentaires des deuxièmes paires de chemins de roulement:

dans l'élément extérieur de joint (12), la ligne médiane ($M22_2$) des chemins de roulement à billes ($22_2$) respectivement s'étend du plan médian du joint (EM) vers le côté ouverture, en direction radiale, à l'intérieur d'un rayon de référence (RZ), autour du point central du joint (M) et

dans l'élément intérieur de joint (13), la ligne médiane ($M23_2$) des chemins de roulement à billes ($23_2$) respectivement s'étend du plan médian du joint (EM) vers le côté raccordement, en direction radiale, à l'intérieur d'un rayon de référence (RZ'), autour du point central du joint (M).

6. Joint homocinétique selon l'une quelconque des revendications 1 à 5, avec les attributs des deuxièmes paires de chemins de roulement:

les lignes médianes ($M22_2$, $M23_2$) des chemins de roulement extérieures et intérieures à billes englobent chacune au moins deux sections d'arc recourbées à l'opposée, qui se raccordent l'une sur l'autre, sur un point d'inflexion,
les points d'inflexion ($W22_2$) des chemins de roulement extérieures à billes ($22_2$) se situent à une distance du plan médian (EM), vers le côté ouverture,
les points d'inflexion ($W23_2$) des chemins de roulement intérieures à billes ($23_2$) se situent à une distance du plan médian (EM), vers le côté raccordement,
les points d'inflexion ($W22_2$, $W23_2$) se situent chacun sous un maximum de la distance des lignes médianes ($M22_2$, $M23_2$) à partir des axes longitudinaux (L12, L13).

7. Joint homocinétique selon l'une quelconque des revendications 1 à 6, avec les attributs des deuxièmes paires de chemins de roulement:

les lignes médianes ($M22_2$) des chemins de roulement extérieures à billes ($22_2$) ont un premier arc avec le rayon (R1), dont le point central (M1) est déporté de la valeur d'un premier offset axial (O1a) du plan médian (EM) du joint, vers le côté raccordement et est déporté de la valeur d'un premier offset radial (O1r) de l'axe longitudinal (L12) vers les chemins de roulement à billes et se raccordant sur cet arc, en direction du côté raccordement, un deuxième arc avec le rayon (R2), dont le point central (M2) est déporté de la valeur d'un deuxième offset axial (O2a) du plan médian (EM) du joint, vers le côté ouverture et est déporté vers l'extérieur, à partir de l'axe longitudinal (L12) de la valeur d'un deuxième offset radial (O2r), qui est supérieur à la somme du premier rayon (R1) et du premier offset radial (O1r), les lignes médianes ($M23_2$) des chemins de roulement intérieures à billes ($23_2$) ont un premier arc avec le rayon (R1'), dont le point central (M1') est déporté de la valeur d'un premier offset axial (O1a') du plan médian (EM) du joint vers le côté ouverture et est déporté de la valeur d'un premier offset radial (O1r'), de l'axe longitudinal (L13) vers les chemins de roulement à billes et se raccordant sur cet arc, vers le côté ouverture, un deuxième arc avec le rayon (R2'), dont le point central (M2') est déporté de la valeur d'un deuxième offset axial (O2a') du plan médian (EM) vers le côté raccordement et est déporté de l'axe longitudinal (L13), vers l'extérieur de la valeur d'un deuxième offset radial (O2r'), qui est supérieur à la somme du premier rayon (R1') et du premier offset radial (O1r').

8. Joint homocinétique selon l'une quelconque des revendications 1 à 7, avec les attributs supplémentaires des deuxièmes paires de chemins de roulement:

le rayon de courbure des lignes médianes (M22) des chemins de roulement extérieures à billes (22) diminue sur le tracé du plan médian (EM) vers le côté raccordement (19) et le rayon de courbure du plan médian (M23) des chemins de roulement intérieures à billes (23) diminue sur le tracé du plan médian (EM) vers le côté ouverture (20).

9. Joint homocinétique selon la revendication 8, avec les attributs supplémentaires des deuxièmes paires de chemins de roulement:

les lignes médianes ($M22_2$) des chemins de roulement extérieures à billes ($22_2$) ont un troisième arc, avec le rayon de courbure (R3), qui se raccorde tangentiellement, dans le même sens de courbure sur le premier arc avec le rayon de courbure (R1) et dont le rayon de courbure (R3) est inférieur au rayon de courbure (R1) et les lignes médianes ($M23_2$) des chemins de roulement intérieures à billes ($23_2$) ont un troisième arc, avec le rayon de courbure (R3'), qui se raccorde tangentiellement, dans le même sens de courbure sur le premier arc avec le rayon de courbure (R1') et dont le rayon de courbure (R3') est inférieur au rayon de courbure (R1').

10. Joint selon l'une quelconque des revendications 1 à 9,

**caractérisé en ce que**
sur la deuxième paire de chemins de roulement, sur le trajet de la ligne médiane ($M22_2$) des chemins de roulement extérieures à billes ($22_2$), vers le côté ouverture, une droite (G3) parallèle à l'axe se raccorde sur le deuxième arc et sur le trajet de la ligne médiane (R23) des chemins de roulement intérieures à billes (23), à la suite du deuxième arc (R2') une droite parallèle à l'axe (G3') se raccorde en direction du côté raccordement.

11. Joint selon l'une quelconque des revendications 1 à 9,
**caractérisé en ce que**
sur la deuxième paire de chemins de roulement, sur le trajet de la ligne médiane (M22) des chemins de roulement extérieures à billes (22), vers le côté ouverture, une droite se rapprochant de l'axe longitudinal (L12) se raccorde sur le deuxième arc, et sur le trajet de la ligne médiane (R23) des chemins de roulement intérieures à billes (23), à la suite du deuxième arc (R2'), une droite se rapprochant de l'axe longitudinal (L13) se raccorde en direction du côté raccordement.

12. Joint selon l'une quelconque des revendications 1 à 11,
**caractérisé en ce que**
sur les deuxièmes paires de chemins de roulement, les lignes médianes (M22, M23) des chemins de roulement à billes (22, 23) se recoupent dans le plan médian du joint (EM), sous un angle de 4 à 32°, les tangentes (T22, T23) formant sur les lignes médianes (M22, M23) des chemins de roulement à billes (22, 23) de toutes les paires de chemins de roulement, un angle d'ouverture $\alpha$ de même dimension, lorsque le joint est étiré.

13. Joint selon l'une quelconque des revendications 1 à 12,
**caractérisé en ce que**
des premières paires de chemins de roulement ($22_1$, $23_1$) et des deuxièmes paires de chemins de roulement ($22_2$, $23_2$) sont disposées alternativement sur la circonférence.

14. Joint selon l'une quelconque des revendications 1 à 13,
**caractérisé en ce que**
les plans radiaux R1 des premières paires de chemins de roulement et les plans radiaux R2 des deuxièmes paires de chemins de roulement ont les mêmes pas angulaires.

15. Joint selon l'une quelconque des revendications 1 à 14,
**caractérisé en ce que**
les tracés des premières paires de chemins de roulement ($22_1$, $23_1$) et des deuxièmes paires de chemins de roulement ($22_2$, $23_2$) ne sont pas symétriques l'un à l'autre, par rapport au plan médian du joint (EM).

16. Joint selon l'une quelconque des revendications 1 à 15,
**caractérisé en ce que**
le rayon du cercle primitif ($PCR_1$) des billes ($14_1$) des premières paires de chemins de roulement et le rayon du cercle primitif ($PCR_2$) des billes ($14_2$) des deuxièmes paires de chemins de roulement ont différentes dimensions, leur rapport dimensionnel étant de l'ordre de 0,8 à 1,0.

17. Joint homocinétique sous la forme d'un contre-joint à gorges, avec les attributs :

un élément extérieur de joint (12), disposant d'un axe longitudinal (L12) et mutuellement situés à l'opposée, en direction axiale d'un côté raccordement et d'un côté ouverture et qui comporte des chemins de roulement extérieures à billes ($22_1$, $22_2$),
un élément intérieur de joint (13), disposant d'un axe longitudinal (L13) et de moyens de raccordement pour un arbre dirigé vers le côté ouverture de l'élément extérieur de joint (12) et qui comporte des chemins de roulement intérieures à billes ($23_1$, $23_2$),
les chemins de roulement extérieures à billes ($22_1$, $22_2$) et les chemins de roulement intérieures à billes ($23_1$, $23_2$) forment ensemble des paires de chemins de roulement ($22_1$, $23_1$; $22_2$, $23_2$),
les paires de chemins de roulement réceptionnent chacune une bille transmettant le couple (14), une cage à billes annulaire (15) est placée entre l'élément extérieur de joint (12) et l'élément intérieur de joint (13) et comporte des fenêtres de cage (18), réparties sur la circonférence, réceptionnant chacune au moins l'une des billes transmettant le couple,
les points médians des billes (14) sont maintenus par la cage (15) dans un plan médian du joint (EM) et lors d'une flexion du joint, ils sont guidés sur le plan de la bissectrice entre les axes longitudinaux (L12, L13),

les lignes médianes (M22, M23) des paires de chemins de roulement à billes ($22_1$, $23_1$ ; $22_2$, $23_2$) se situent dans des paires de plans de chemins de roulement (BE, BE*), qui s'étendent sensiblement à la parallèle l'un de l'autre et symétriquement à des plans radiaux (R1, R2), à travers les axes longitudinaux (L12, L13),

pour une première partie des paires de chemins de roulement, l'angle d'ouverture $\alpha_1$ s'ouvre entre des tangentes ($T22_1$', $T23_1$') sur des bases de chemins, qui sont parallèles à des tangentes ($T22_1$, $T23_1$) sur les lignes médianes ($M22_1$, $M23_1$) des chemins de roulement à billes ($22_1$, $23_1$), dans le plan médian du joint (EM), du côté raccordement, vers le côté ouverture, lorsque le joint est étiré, avec les axes longitudinaux (L12, L13) coïncidents,

pour une deuxième partie des paires de chemins de roulement, l'angle d'ouverture $\alpha_2$ s'ouvre entre des tangentes ($T22_2$', $T23_2$') sur des bases de chemins, qui s'étendent à la parallèle de tangentes ($T22_2$, $T23_2$) sur les lignes médianes ($M22_2$, $M23_2$) des chemins de roulement à billes ($22_2$, $23_2$), dans le plan médian du joint (EM), du côté ouverture vers le côté raccordement, lorsque le joint est étiré, avec les axes longitudinaux (L12, L13) coïncidents, à cet effet, on applique pour les lignes médianes des deuxièmes paires de chemins de roulement ($22_2$, $23_2$) :

dans l'élément extérieur de joint (12), la ligne médiane ($M22_2$) des chemins de roulement à billes ($22_2$) respectivement quitte dans la région du plan médian du joint (EM) vers le côté raccordement un rayon de référence (RB), dont le point central de rayon (MBE) se situe au point d'intersection d'une verticale sur la tangente ($T22_2$) sur la ligne médiane ($M22_2$) du chemin de roulement à bille ($22_2$) dans le plan médian du joint (EM) et d'un axe parallèle (PE, PE*) à l'axe longitudinal (L12), à travers un plan de couronne (BE, BE*), en direction radiale vers l'intérieur,

dans l'élément intérieur de joint (13), la ligne médiane ($M23_2$) des chemins de roulement à billes ($23_2$) respectivement quitte dans la région du plan médian du joint (EM) vers le côté ouverture un rayon de référence (RB'), dont le point central de rayon (MBE') se situe au point d'intersection d'une verticale sur la tangente ($T23_2$) sur la ligne médiane ($M23_2$) du chemin de roulement à bille (23) dans le plan médian du joint (EM) et d'un axe parallèle (PE, PE*) à l'axe longitudinal (L13), à travers un plan de chemin de roulement (BE, BE*), en direction radiale vers l'intérieur,

dans l'élément extérieur de joint (12), la ligne médiane ($M22_2$) des chemins de roulement à billes ($22_2$) migre dans la région du plan médian du joint (EM) vers le côté ouverture, par-dessus le rayon de référence (RB) cité, en direction radiale vers l'extérieur, et

dans l'élément intérieur de joint (13), la ligne médiane ($M23_2$) des chemins de roulement à billes ($23_2$) migre dans la région du plan médian du joint (EM) vers le côté raccordement, par-dessus le rayon de référence (RB') cité, en direction radiale vers l'extérieur.

**18.** Joint homocinétique selon la revendication 17, avec les attributs supplémentaires des deuxièmes paires de chemins de roulement:

dans l'élément extérieur de joint (12), le rayon local (R1) de la ligne médiane ($M22_2$) est inférieur au rayon de référence (RB), dans le plan médian du joint (EM),

dans l'élément intérieur de joint (13), le rayon local (R1') de la ligne médiane ($M23_2$) est inférieur au rayon de référence (RB'), dans le plan médian du joint (EM).

**19.** Joint homocinétique selon l'une quelconque des revendications 17 ou 18, avec les attributs supplémentaires des deuxièmes paires de chemins de roulement:

dans l'élément extérieur de joint (12), la ligne médiane ($M22_2$) des chemins de roulement à billes ($22_2$) respectivement s'étend du plan médian du joint (EM) vers le côté raccordement, en direction radiale, à l'extérieur d'un rayon de référence (RZ), dont le point central du rayon se situe dans le plan médian du joint (EM), sur l'un des axes parallèles (PE, PE*), et

dans l'élément intérieur de joint (13), la ligne médiane ($M23_2$) des chemins de roulement à billes ($23_2$) respectivement s'étend du plan médian du joint (EM) vers le côté ouverture, en direction radiale, à l'extérieur d'un rayon de référence (RZ'), dont le point central du rayon se situe dans le plan médian du joint (EM), sur l'un des axes parallèles (PE, PE*).

**20.** Joint homocinétique selon l'une quelconque des revendications 17 à 19, avec les attributs supplémentaires des deuxièmes paires de chemins de roulement:

dans l'élément extérieur de joint (12), la ligne médiane ($M22_2$) des chemins de roulement à billes ($22_2$) respectivement s'étend du plan médian du joint (EM) vers le côté ouverture, en direction radiale, à l'extérieur du rayon de référence (RB), et

dans l'élément intérieur de joint (13), la ligne médiane des chemins de roulement à billes (23$_2$) respectivement s'étend du plan médian du joint (EM) vers le côté raccordement, en direction radiale, à l'extérieur du rayon de référence (RB').

**21.** Joint homocinétique selon l'une quelconque des revendications 17 à 20, avec les attributs supplémentaires des deuxièmes paires de chemins de roulement:

dans l'élément extérieur de joint (12), la ligne médiane (M22$_2$) des chemins de roulement à billes (22$_2$) respectivement s'étend du plan médian du joint (EM) vers le côté ouverture, en direction radiale, à l'intérieur d'un rayon de référence (RZ), dont le point central du rayon (ME) se situe dans le plan médian du joint (EM), sur l'un des axes parallèles (PE, PE*),

dans l'élément intérieur de joint (13), la ligne médiane (M23$_2$) des chemins de roulement à billes (23$_2$) respectivement s'étend du plan médian du joint (EM) vers le côté raccordement, en direction radiale, à l'intérieur d'un rayon de référence (RZ), dont le point central du rayon (ME) se situe dans le plan médian du joint (EM), sur l'un des axes parallèles (PE, PE*).

**22.** Joint homocinétique selon l'une quelconque des revendications 17 à 21, avec les attributs des deuxièmes paires de chemins de roulement:

les lignes médianes (M22$_2$, M23$_2$) des chemins de roulement extérieures et intérieures à billes englobent chacune au moins deux sections d'arc recourbées à l'opposée, qui se raccordent l'une sur l'autre, sur un point d'inflexion,

les points d'inflexion (W22$_2$) des chemins de roulement extérieures à billes (22$_2$) se situent dans un plan de chemin de roulement (BE, BE*), à une distance par rapport au plan médian (EM) vers le côté ouverture, les points d'inflexion (W23) des chemins de roulement intérieures à billes (23$_2$) se situent dans un plan de chemin de roulement (BE, BE*), à une distance du plan médian (EM) vers le côté raccordement, les points d'inflexion (W22$_2$, W23$_2$) se situent chacun sous un maximum de la distance des lignes médianes (M22$_2$, M23$_2$), par rapport aux axes parallèles (PE, PE*).

**23.** Joint homocinétique selon l'une quelconque des revendications 17 à 22, avec les attributs des deuxièmes paires de chemins de roulement:

les lignes médianes des chemins de roulement (M22$_2$) des chemins de roulement extérieures à billes (22$_2$) ont un premier arc avec le rayon (R1), dont le point central (M1) est déporté dans un plan de chemin (BE, BE*) de la valeur d'un premier offset axial (O1a) par rapport au plan médian (EM) du joint, vers le côté raccordement et est déporté de la valeur d'un premier offset radial (O1r) par rapport à un axe parallèle (PE, PE*) vers le chemin de roulement à bille et en raccordement à cet arc, vers le côté raccordement, un deuxième arc avec le rayon (R2), dont le point central (M2) est déporté dans le plan de chemin (BE, BE*) de la valeur d'un deuxième offset axial (O2a) par rapport au plan médian (EM) du joint, vers le côté ouverture, et est déporté vers l'extérieur, par rapport à l'axe parallèle (PE, PE*) de la valeur d'un deuxième offset radial (O2r), qui est supérieur à la somme du premier rayon (R1) et du premier offset radial (O1r),

les lignes médianes des chemins de roulement (M23$_2$) des chemins de roulement intérieures à billes (23$_2$) ont un premier arc avec le rayon (R1'), dont le point central (M1') est déporté dans un plan de chemin (BE, BE*) de la valeur d'un premier offset axial (O1a') par rapport au plan médian (EM) du joint, vers le côté ouverture et est déporté de la valeur d'un premier offset radial (O1r') par rapport à un axe parallèle (PE, PE*) vers le chemin de roulement à billes et en raccordement à cet arc, vers le côté ouverture, un deuxième arc avec le rayon (R2'), dont le point central (M2') est déporté dans le plan de chemin (BE, BE*) de la valeur d'un deuxième offset axial (O2a') par rapport au plan médian (EM) du joint, vers le côté raccordement, et est déporté vers l'extérieur, par rapport à l'axe parallèle (PE, PE') de la valeur d'un deuxième offset radial (O2r'), qui est supérieur à la somme du premier rayon (R1') et du premier offset radial (O1r').

**24.** Joint homocinétique selon l'une quelconque des revendications 17 à 23, avec les attributs supplémentaires des deuxièmes paires de chemins de roulement:

le rayon de courbure des lignes médianes (M22) des chemins de roulement extérieures à billes (22) diminue sur le tracé du plan médian (EM) vers le côté raccordement (19) et le rayon de courbure des lignes médianes (M23) des chemins de roulement intérieures à billes (23) diminue sur le tracé du plan médian (EM) vers le côté ouverture (20).

**25.** Joint homocinétique selon la revendication 24, avec les attributs supplémentaires des deuxièmes paires de chemins de roulement:

les lignes médianes des chemins de roulement ($M22_2$) des chemins de roulement extérieures à billes ($22_2$) ont un troisième arc, avec le rayon (R3), qui se raccorde tangentiellement, dans le même sens de courbure sur le premier arc avec le rayon (R1) et dont le rayon (R3) est inférieur au rayon (R1) et
les lignes médianes des chemins de roulement ($M23_2$) des chemins de roulement intérieures à billes ($23_2$) ont un troisième arc, avec le rayon (R3'), qui se raccorde tangentiellement, dans le même sens de courbure sur le premier arc avec le rayon (R1') et dont le rayon (R3') est inférieur au rayon (R1').

**26.** Joint selon l'une quelconque des revendications 17 à 25,
**caractérisé en ce que**
sur les deuxièmes paires de chemins de roulement, sur le trajet de la ligne médiane ($M22_2$) des chemins de roulement extérieures à billes ($22_2$), vers le côté ouverture, une droite (G3) parallèle à l'axe se raccorde sur le deuxième arc et sur le trajet de la ligne médiane ($R23_2$) des chemins de roulement intérieures à billes ($23_2$) à la suite du deuxième arc (R2'), une droite parallèle à l'axe (G3') se raccorde en direction du côté raccordement.

**27.** Joint selon l'une quelconque des revendications 17 à 26,
**caractérisé en ce que**
sur les deuxièmes paires de chemins de roulement, sur le trajet de la ligne médiane (M22) des chemins de roulement extérieures à billes (22), vers le côté ouverture, une droite se rapprochant de l'axe parallèle (PE, PE*) se raccorde sur le deuxième arc, et sur le trajet de la ligne médiane (R23) des chemins de roulement intérieures à billes (23) à la suite du deuxième arc (R2'), une droite se rapprochant de l'axe parallèle (PE, PE*) se raccorde en direction du côté raccordement.

**28.** Joint selon l'une quelconque des revendications 17 à 26,
**caractérisé en ce que**
sur les deuxièmes paires de chemins de roulement, les lignes médianes (M22, M23) des chemins de roulement à billes (22, 23) se recoupent dans le plan médian du joint (EM), sous un angle de 4 à 32°, les tangentes (T22, T23) formant sur les lignes médianes (M22, M23) des chemins de roulement à billes (22, 23) de toutes les paires de chemins, un angle d'ouverture $\alpha$ de même dimension, lorsque le joint est étiré.

**29.** Joint homocinétique sous la forme d'un contre-joint à gorges, avec les attributs :

un élément extérieur de joint (12), disposant d'un axe longitudinal (L12) et mutuellement situés à l'opposée, en direction axiale, d'un côté raccordement et d'un côté ouverture et qui comporte des chemins de roulement extérieures à billes ($22_1$, $22_2$),
un élément intérieur de joint (13), disposant d'un axe longitudinal (L13) et de moyens de raccordement pour un arbre dirigé vers le côté ouverture de l'élément extérieur de joint (12) et qui comporte des chemins de roulement intérieures à billes ($23_1$, $23_2$),
les chemins de roulement extérieures à billes ($22_1$, $22_2$) et les chemins de roulement intérieures à billes ($23_1$, $23_2$) forment ensemble des paires de chemins de roulement ($22_1$, $23_1$; $22_2$, $23_2$),
les paires de chemins de roulement réceptionnent chacune une bille transmettant le couple (14), une cage à billes annulaire (15) est placée entre l'élément extérieur de joint (12) et l'élément intérieur de joint (13) et comporte des fenêtres de cage (18), réceptionnant au moins l'une des billes transmettant le couple,
les points médians des billes (14) sont maintenus par la cage (15) dans un plan médian du joint (EM) et lors d'une flexion du joint, ils sont guidés sur le plan de la bissectrice entre les axes longitudinaux (L12, L13),
les lignes médianes ($M22_1$, $M22_2$) des chemins de roulement à billes voisines ($22_1$, $22_2$), dans l'élément extérieur de joint (12) se situent dans des paires de premiers plans de chemins de roulement (BE, BE*), qui s'étendent à la parallèle l'une de l'autre et symétriquement à des rayons radiaux (RS1, RS2), à travers le point central du joint (M).
les lignes médianes ($M23_1$, $M23_2$) de chemins de roulement à billes voisines ($23_1$, $23_2$), dans l'élément intérieur de joint (13) se situent dans des paires de deuxièmes plans de chemins de roulement (BE', BE*'), qui s'étendent à la parallèle l'une de l'autre et symétriquement à des rayons radiaux (RS1, RS2), à travers le point central du joint (M),
les premiers plans de chemins de roulement (BE, BE*) et les deuxièmes plans de chemins de roulement (BE', BE*') forment avec des plans radiaux (R1, R2) à travers les axes longitudinaux (L12, L13) des angles de même dimension, placés à l'opposée (y, y'),

pour une première partie des paires de chemins de roulement, l'angle d'ouverture $\alpha1$ s'ouvre entre des tangentes ($T22_1'$, $T23_1'$) sur des bases des chemins de roulement, qui s'étendent à la parallèle des tangentes ($T22_1$, $T23_1$) sur les lignes médianes ($M22_1$, $M23_1$) des chemins de roulement à billes ($22_1$, $23_1$) dans le plan médian du joint (EM), du côté raccordement vers le côté ouverture, lorsque le joint est étiré, avec les axes longitudinaux (L12, L13) coïncidents,

pour une deuxième partie des paires de chemins de roulement, l'angle d'ouverture $\alpha2$ s'ouvre entre des tangentes ($T22_2'$, $T23_2'$) sur des bases des chemins de roulement, qui s'étendent à la parallèle des tangentes ($T22_2$, $T23_2$) sur les lignes médianes ($M22_2$, $M23_2$) des chemins de roulement à billes ($22_2$, $23_2$) dans le plan médian du joint (EM), du côté ouverture vers le côté raccordement, lorsque le joint est étiré, avec les axes longitudinaux (L12, L13) coïncidents, on applique à cet effet pour les lignes médianes des deuxièmes paires de chemins de roulement:

dans l'élément extérieur de joint (12), la ligne médiane ($M22_2$) des chemins de roulement à billes ($22_2$) respectivement quitte dans la région du plan médian du joint (EM) vers le côté raccordement un rayon de référence (RB), dont le point central de rayon (MBE) se situe au point d'intersection d'une verticale sur la tangente ($T22_2$) sur la ligne médiane ($M22_2$) du chemin de roulement à bille ($22_2$) dans le plan médian du joint (EM) et d'un axe de référence (PE, PE*), à travers un plan de chemin de roulement (BE, BE*), en direction radiale vers l'intérieur,

dans l'élément intérieur de joint (13), la ligne médiane ($M23_2$) des chemins de roulement à billes ($23_2$) respectivement quitte dans la région du plan médian du joint (EM) vers le côté ouverture un rayon de référence (RB'), dont le point central de rayon (MBE') se situe au point d'intersection d'une verticale sur la tangente ($T23_2$), sur la ligne médiane ($M23_2$) du chemin de roulement à billes ($23_2$) dans le plan médian du joint (EM) et d'un axe de référence (PE', PE*'), à travers un plan de chemin de roulement (BE', BE*'), en direction radiale vers l'intérieur,

dans l'élément extérieur de joint (12), la ligne médiane ($M22_2$) des chemins de roulement à billes ($22_2$) migre dans la région du plan médian du joint (EM) vers le côté ouverture, par-dessus le rayon de référence (RB) cité, en direction radiale vers l'extérieur, et

dans l'élément intérieur de joint (13), la ligne médiane ($M23_2$) des chemins de roulement à billes ($23_2$) migre dans la région du plan médian du joint (EM) vers le côté raccordement, par-dessus le rayon de référence (RB') cité, en direction radiale vers l'extérieur.

30. Joint homocinétique selon la revendication 29, avec les attributs supplémentaires des deuxièmes paires de chemins de roulement:

dans l'élément extérieur de joint (12), le rayon local (R1) de la ligne médiane ($M22_2$) est inférieur au rayon de référence (RB), dans le plan médian du joint (EM),

dans l'élément intérieur de joint (13), le rayon local (R1') de la ligne médiane ($M23_2$) est inférieur au rayon de référence (RB'), dans le plan médian du joint (EM).

31. Joint homocinétique selon l'une quelconque des revendications 29 ou 30, avec les attributs supplémentaires des deuxièmes paires de chemins de roulement:

dans l'élément extérieur de joint (12), la ligne médiane ($M22_2$) des chemins de roulement à billes ($22_2$) respectivement s'étend du plan médian du joint (EM) vers le côté raccordement, en direction radiale, à l'extérieur d'un rayon de référence (RZ), dont le point central du rayon se situe dans le plan médian du joint (EM), sur l'un des axes de référence (PE, PE*), et

dans l'élément intérieur de joint (13), la ligne médiane ($M23_2$) des chemins de roulement à billes ($23_2$) respectivement s'étend du plan médian du joint (EM) vers le côté ouverture, en direction radiale, à l'extérieur d'un rayon de référence (RZ'), dont le point central du rayon se situe dans le plan médian du joint (EM), sur l'un des axes de référence (PE', PE*').

32. Joint homocinétique selon l'une quelconque des revendications 29 à 31, avec les attributs supplémentaires des deuxièmes paires de chemins de roulement:

dans l'élément extérieur de joint (12), la ligne médiane ($M22_2$) des chemins de roulement à billes ($22_2$) respectivement s'étend du plan médian du joint (EM) vers le côté ouverture, en direction radiale, à l'extérieur du rayon de référence (RB) et
dans l'élément intérieur de joint (13), la ligne médiane des chemins de roulement à billes ($23_2$) respectivement s'étend du plan médian du joint (EM) vers le côté raccordement, en direction radiale, à l'extérieur du rayon de référence (RB').

33. Joint homocinétique selon l'une quelconque des revendications 29 à 32, avec les attributs supplémentaires des deuxièmes paires de chemins de roulement:

dans l'élément extérieur de joint (12), la ligne médiane ($M22_2$) des chemins de roulement à billes ($22_2$) respectivement s'étend du plan médian du joint (EM) vers le côté ouverture, en direction radiale, à l'intérieur d'un rayon de référence (RZ), dont le point central du rayon (ME, ME*) se situe dans le plan médian du joint (EM), sur l'un des axes de référence (PE, PE*),
dans l'élément intérieur de joint (13), la ligne médiane ($M23_2$) des chemins de roulement à billes ($23_2$) respectivement s'étend du plan médian du joint (EM) vers le côté raccordement, en direction radiale, à l'intérieur d'un rayon de référence (RZ), dont le point central du rayon (ME, ME*) se situe dans le plan médian du joint (EM), sur l'un des axes de référence (PE', PE*').

34. Joint homocinétique selon l'une quelconque des revendications 29 à 33, avec les attributs des deuxièmes paires de chemins de roulement:

les lignes médianes ($M22_2$, $M23_2$) des chemins de roulement extérieures et intérieures à billes englobent chacune au moins deux sections d'arc recourbées à l'opposée, qui se raccordent l'une sur l'autre, sur un point d'inflexion,
les points d'inflexion ($W22_2$) des chemins de roulement extérieures à billes ($22_2$) se situent dans un plan de chemin (BE, BE*) à une distance par rapport au plan médian (EM) vers le côté ouverture, les points d'inflexion (W23) des chemins de roulement intérieures à billes ($23_2$) se situent dans un plan de chemin (BE', BE*') à une distance du plan médian (EM) vers le côté raccordement, les points d'inflexion ($W22_2$, $W23_2$) se situent chacun sous un maximum de la distance des lignes médianes ($M22_2$, $M23_2$), par rapport aux axes de référence (PE, PE*, PE', PE*').

35. Joint homocinétique selon l'une quelconque des revendications 29 à 34, avec les attributs des deuxièmes paires de chemins de roulement:

les lignes médianes des chemins de roulement ($M22_2$) des chemins de roulement extérieures à billes ($22_2$) ont un premier arc avec le rayon (R1), dont le point central (M1) est déporté dans un plan de chemin (BE') de la valeur d'un premier offset axial (O1a) par rapport au plan médian (EM) du joint, vers le côté raccordement et est déporté de la valeur d'un premier offset radial (O1r) par rapport à un axe de référence (PE, PE*) vers le chemin de roulement à bille et en raccordement à cet arc, vers le côté raccordement, un deuxième arc avec le rayon (R2), dont le point central (M2) est déporté dans le plan de chemin (BE, BE*) de la valeur d'un deuxième offset axial (O2a) par rapport au plan médian (EM) du joint, vers le côté ouverture, et est déporté vers l'extérieur, par rapport à l'axe de référence (PE, PE*) de la valeur d'un deuxième offset radial (O2r), qui est supérieur à la somme du premier rayon (R1) et du premier offset radial (O1r),
les lignes médianes des chemins de roulement ($M23_2$) des chemins de roulement intérieures à billes ($23_2$) ont un premier arc avec le rayon (R1'), dont le point central (M1') est déporté dans un plan de chemin (BE') de la valeur d'un premier offset axial (O1a') par rapport au plan médian (EM) du joint, vers le côté ouverture et est déporté de la valeur d'un premier offset radial (O1r'), par rapport à un axe de référence (PE', PE*') vers le chemin de roulement à bille et en raccordement à cet arc, vers le côté ouverture, un deuxième arc avec le rayon (R2'), dont le point central (M2') est déporté dans le plan de chemin (BE', BE*') de la valeur d'un deuxième offset axial (O2a') par rapport au plan médian (EM) du joint, vers le côté raccordement, et est déporté vers l'extérieur, par rapport à l'axe de référence (PE', PE*') de la valeur d'un deuxième offset radial (O2r'), qui est supérieur à la somme du premier rayon (R1') et du premier offset radial (O1r').

36. Joint homocinétique selon l'une quelconque des revendications 29 à 35, avec les attributs supplémentaires des deuxièmes paires de chemins de roulement:

le rayon de courbure des lignes médianes (M22) des chemins de roulement extérieures à billes (22) diminue sur le tracé du plan médian (EM) vers le côté raccordement (19) et le rayon de courbure du plan médian (M23) des chemins de roulement intérieures à billes (23) diminue sur le tracé du plan médian (EM) vers le côté ouverture (20).

**37.** Joint homocinétique selon la revendication 36, avec les attributs supplémentaires des deuxièmes paires de chemins de roulement:

les lignes médianes des chemins de roulement (M22$_2$) des chemins de roulement extérieures à billes (22$_2$) ont un troisième arc, avec le rayon (R3), qui se raccorde tangentiellement, dans le même sens de courbure sur le premier arc avec le rayon (R1) et dont le rayon (R3) est inférieur au rayon (R1) et
les lignes médianes des chemins de roulement (M23$_2$) des chemins de roulement intérieures à billes (23$_2$) ont un troisième arc, avec le rayon (R3'), qui se raccorde tangentiellement, dans le même sens de courbure sur le premier arc avec le rayon (R1') et dont le rayon (R3') est inférieur au rayon (R1').

**38.** Joint selon l'une quelconque des revendications 29 à 37,
**caractérisé en ce que**
sur les deuxièmes paires de chemins de roulement, sur le trajet de la ligne médiane (M22$_2$) des chemins de roulement extérieures à billes (22$_2$), vers le côté ouverture, une droite (G3) parallèle à l'axe se raccorde sur le deuxième arc et sur le trajet de la ligne médiane (R23$_2$) des chemins de roulement intérieures à billes (23$_2$) à la suite du deuxième arc (R2') une droite (G3) s'étendant à la parallèle de l'axe de référence (PE', PE*') se raccorde en direction du côté raccordement.

**39.** Joint selon l'une quelconque des revendications 29 à 37,
**caractérisé en ce que**
sur les deuxièmes paires de chemins de roulement, sur le trajet de la ligne médiane (M22) des chemins de roulement extérieures à billes (22), vers le côté ouverture, une droite se rapprochant de l'axe de référence (PE, PE*) se raccorde sur le deuxième arc, et sur le trajet de la ligne médiane (R23) des chemins de roulement intérieures à billes (23) à la suite du deuxième arc (R2'), une droite se rapprochant de l'axe de référence (PE', PE*') se raccorde en direction du côté raccordement.

**40.** Joint selon l'une quelconque des revendications 29 à 39,
**caractérisé en ce que**
sur les deuxièmes paires de chemins de roulement, les lignes médianes (M22, M23) des chemins de roulement à billes (22, 23) se recoupent dans le plan médian du joint (EM), sous un angle de 4 à 32°, les tangentes (T22, T23) formant sur les lignes médianes (M22, M23) des chemins de roulement à billes (22, 23) de toutes les paires de chemins de roulement, un angle d'ouverture $\alpha$ de même dimension, lorsque le joint est étiré.

**41.** Joint homocinétique selon l'une quelconque des revendications 29 à 40, avec les attributs supplémentaires :

la distance radiale de points de pénétration (D1, D2) des tangentes (T22$_1$, T23$_1$ ; T22$_2$, T23$_2$) sur les lignes médianes des chemins de roulement (M22$_1$, M23$_1$ ; M22$_2$, M23$_2$) à travers les plans radiaux (R1, R2) placés à travers les axes longitudinaux (L12, L13) et les axes longitudinaux (L12, L13) est inférieure au rayon du cercle primitif (PCR) des billes dans le joint.

**42.** Joint homocinétique selon la revendication 41, avec les attributs supplémentaires :

la distance radiale de points de pénétration (D1, D2) des tangentes (T22$_1$, T23$_1$ ; T22$_2$, T23$_2$) sur les lignes médianes des chemins (M22$_1$, M23$_1$ ; M22$_2$, M23$_2$) à travers les plans radiaux (R1, R2) placés à travers les axes longitudinaux (L12, L13) et les axes longitudinaux (L12, L13) est inférieure à zéro.

**43.** Joint selon l'une quelconque des revendications 17 à 42,
**caractérisé en ce que**
le nombre des paires de chemins (22, 23) est divisible par quatre.

**44.** Joint selon l'une quelconque des revendications 17 à 43,
**caractérisé en ce que**
chaque fois les billes (14) de deux paires de chemins de roulement (22, 23) voisines, situées dans des plans de chemins de roulement parallèles (BE, BE*, BE', BE*') sont réceptionnées par une seule fenêtre de cage (18) de la cage à billes (15).

**45.** Joint selon l'une quelconque des revendications 17 à 44, **caractérisé en ce que** le pas angulaire ($2\varphi$) entre les paires de chemins de roulement, dont les billes (14) sont réceptionnées dans une fenêtre (15) commune est inférieur au pas angulaire entre des paires de chemins de roulement voisines, dont les billes (14) sont réceptionnées dans différentes fenêtres.

**46.** Joint selon l'une quelconque des revendications 17 à 45, **caractérisé en ce que** parmi deux paires de chemins de roulement directement voisines, l'une est conçue sous la forme d'une première paire de chemins de roulement ($22_1$, $23_1$) et l'une est conçue en tant que deuxième paire de chemins de roulement ($22_2$, $23_2$).

**47.** Joint selon l'une quelconque des revendications 17 à 46, **caractérisé en ce que** parmi deux paires de chemins situées dans un plan de chemins de roulement (BE, BE*, BE', BE*'), l'une est conçue sous la forme d'une première paire de chemins de roulement et l'une est conçue en tant que deuxième paire de chemins de roulement.

# Fig. 1

Fig. 1a

Fig. 1b

Fig. 1c

**Fig. 2**

**Fig. 2a**

**Fig. 2b**

**Fig. 2c**

## Fig. 3

BE1  RS  BE1*

$14_1$  $14_2$  11

A ← → A

13

$\varphi_0$

EX1

BE2

12

$\varphi_0'$

M

BE2*

18

## Fig. 3a

15

BE  BE*'  11

EM

RS

BE'  BE*

$\gamma'$

$\gamma$

## Fig. 3b

EB'  EB

# Fig. 4

## Fig. 4a

## Fig. 4b

## Fig. 4c

EP 1 656 509 B1

# Fig. 5a

GELENKAUßENTEIL

M2

O2a

EM

R2

O2r

AUßENBAHN:

G3

$\frac{\alpha}{2}$

e

R1

W22

M22

T22

RB

RZ

**19**

BODEN

**20**

$\frac{\beta_{max}}{2}$ $\frac{\beta_{max}}{2}$

ÖFFNUNG

M1

ANSCHLUßSEITE

O1r

MB, MBE

M, ME, ME*

L12, PE, PE*

ÖFFNUNGSSEITE

O1a

**Fig. 5b**

# Fig. 6a

# Fig. 6b

**IN DER BESCHREIBUNG AUFGEFÜHRTE DOKUMENTE**

**In der Beschreibung aufgeführte Patentdokumente**

- DE 10060220 A1
- US 5122096 A
- WO 0161203 A2